# EUROPEAN PATENT APPLICATION

(11) **EP 4 797 844 A1**
(43) Date of publication of application: **26.08.2026**
(21) Application number: 24890214.0
(22) Date of filing: 09.08.2024
(51) Int. Cl.: H04W 72/23

(54) **COMMUNICATION METHOD AND COMMUNICATION APPARATUS**

(30) Priority: 17.11.2023 CN 202311551834
(71) Applicant: HUAWEI TECHNOLOGIES CO., LTD., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN); ZHANG, Bijun, Shenzhen, Guangdong 518129 (CN)
(74) Representative: Pfenning, Meinig & Partner mbB
(86) International application number: PCT/CN2024/111023
(87) International publication number: WO 2025/102850

(57) **Abstract**

This application relates to a communication method and a communication apparatus. The method includes: A terminal device receives first information, where the first information indicates a first CSI reporting setting and a second CSI reporting setting; receives second information, and receives a first signal based on a CSI-RS resource indicated by the second information; and sends third information based on the first CSI reporting setting, and sends fourth information based on the second CSI reporting setting, where the third information includes CSI in an SBFD time unit, and the fourth information includes CSI in a non-SBFD time unit.

## Description

This application claims priority to Chinese Patent Application No. 202311551834.7, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With rapid development of 5th generation mobile communication technology new radio (new radio, NR), various communication requirements have emerged. To meet requirements of emerging services, a subband full duplex (subband full duplex, SBFD) solution is proposed to improve uplink coverage of a time division duplex (time division duplex, TDD) system. Subband full duplex means that in a TDD system, a network device can both receive and send in a slot or an orthogonal frequency division multiplexing (orthogonal frequency division multiplexing, OFDM) symbol in different subbands.

Research shows that because a quantity of antenna ports may differ between an SBFD time unit and a non-SBFD time unit, conventional solutions cannot sufficiently support CSI measurement and reporting in both time units.

### SUMMARY

To resolve the foregoing technical problem, this application provides a communication method and a communication apparatus, to flexibly implement CSI measurement and reporting in an SBFD time unit and a non-SBFD time unit.

According to a first aspect, a communication method is provided. The method may be performed by a sending device, or may be performed by a chip or a circuit used in the sending device. This is not limited in this application. For ease of description, the following uses an example in which the method is performed by the sending device for description. The sending device may be a terminal device, a chip or a circuit in the terminal device, a functional module that can invoke and execute a program in the terminal device, or the like.

The method includes: receiving first information, where the first information indicates a first channel state information (channel state information, CSI) reporting setting and a second CSI reporting setting, where the first CSI reporting setting is for reporting third information, the second CSI reporting setting is for reporting fourth information, the third information includes CSI in an SBFD time unit, and the fourth information includes CSI in a non-SBFD time unit; receiving second information, where the second information indicates a channel state information reference signal (CSI-reference signal, CSI-RS) resource, the CSI-RS resource is for receiving a first signal, the CSI-RS resource includes a first CSI-RS sub-resource and a second CSI-RS sub-resource, the first signal and the first CSI-RS sub-resource are for determining the third information, and the first signal and the second CSI-RS sub-resource are for determining the fourth information; receiving the first signal based on the CSI-RS resource; sending the third information based on the first CSI reporting setting, where the third information is carried on a first physical uplink control channel (physical uplink control channel, PUCCH) or a first physical uplink shared channel (physical uplink shared channel, PUSCH); and sending the fourth information based on the second CSI reporting setting, where the fourth information is carried on a second PUCCH or a second PUSCH.

According to the solution provided in this application, the first CSI-RS sub-resource and the second CSI-RS sub-resource (for example, NZP-CSI-RS-SubResource) are introduced. The first CSI-RS sub-resource and the second CSI-RS sub-resource are respectively associated with the first CSI reporting setting and the second CSI reporting setting. To be specific, the first CSI-RS sub-resource is for receiving and measuring the first signal (a first part) in the SBFD time unit to obtain the third information, and the second CSI-RS sub-resource is for receiving and measuring the first signal (a second part) in the non-SBFD time unit to obtain the fourth information. The third information and the fourth information are respectively sent by using reporting resources indicated by the first CSI reporting setting and the second CSI reporting setting. In this way, CSI-RSs can be received and sent and CSI measurement can be performed in an SBFD time unit and a non-SBFD time unit, without increasing a quantity of CSI-RS resources (for example, NZP-CSI-RS-Resource), thereby improving flexibility of CSI measurement and reporting in the SBFD time unit and the non-SBFD time unit.

With reference to the first aspect, in some implementations of the first aspect, the CSI-RS resource further includes a first periodicity and an offset parameter, where the first periodicity and the offset parameter indicate a first time domain resource; and the method further includes: determining the third information in an SBFD time unit of the first time domain resource based on the first signal and the first CSI-RS sub-resource; and determining the fourth information in a non-SBFD time unit of the first time domain resource based on the first signal and the second CSI-RS sub-resource.

Based on the foregoing solution, the first periodicity and the offset parameter are carried in the CSI-RS resource, to determine to receive the first signal (the first part) in the SBFD time unit of the first time domain resource indicated by the first periodicity and the offset parameter, and receive the first signal (the second part) in the non-SBFD time unit of the first time domain resource. In this implementation, one CSI-RS resource has only one periodicity and one offset parameter. Therefore, the first signal can be allocated in both the SBFD time unit and the non-SBFD time unit by configuring an appropriate periodicity and offset parameter.

With reference to the first aspect, in some implementations of the first aspect, the first CSI-RS sub-resource includes at least one of the following: an identifier of the first CSI-RS subresource, a first power control offset (powerControlOffset), a second power control offset (powerControlOffsetSS), a first resource mapping pattern, or first quasi co-location (quasi co-location, QCL) information, where the first power control offset is for determining power of the first CSI-RS sub-resource, and the second power control offset is for determining the power of the second CSI-RS sub-resource. The second CSI-RS sub-resource includes at least one of the following: an identifier of the second CSI-RS sub-resource, a third power control offset, a fourth power control offset, a second resource mapping pattern, or second QCL information, where the third power control offset is for determining power of the first CSI-RS sub-resource, and the fourth power control offset is for determining the power of the second CSI-RS sub-resource.

With reference to the first aspect, in some implementations of the first aspect, the method further includes: receiving the first signal in the SBFD time unit of the first time domain resource based on the first CSI-RS sub-resource; and receiving the first signal in the non-SBFD time unit of the first time domain resource based on the second CSI-RS sub-resource.

Based on the foregoing solution, the terminal device receives and measures the first signal in the SBFD time unit based on the first CSI-RS sub-resource, and receives and measures the first signal in the non-SBFD time unit based on the second CSI-RS sub-resource, in other words, associates the first CSI-RS sub-resource with the SBFD time unit, and associates the second CSI-RS sub-resource with the non-SBFD time unit. In this way, CSI-RSs are received and sent and CSI measurement is performed in an SBFD time unit and a non-SBFD time unit, thereby improving flexibility of CSI measurement and reporting in the SBFD time unit and the non-SBFD time unit.

With reference to the first aspect, in some implementations of the first aspect, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource; and the method further includes: determining the third information in an SBFD time unit of the second time domain resource based on the first CSI-RS sub-resource and the first signal; and determining the fourth information in a non-SBFD time unit of the third time domain resource based on the second CSI-RS sub-resource and the first signal.

Based on the foregoing solution, a periodicity and an offset parameter are carried in each CSI-RS sub-resource, to determine to receive the first signal (the first part) in an SBFD time unit of a time domain resource indicated by the periodicity and the offset parameter, or receive the first signal (the second part) in a non-SBFD time unit. In this implementation, one CSI-RS resource includes two periodicities and two offset parameters, which are respectively included in the first CSI-RS sub-resource and the second CSI-RS sub-resource. Therefore, because an appropriate periodicity and offset parameter are configured, the second periodicity and the offset parameter, and the third periodicity and the offset parameter respectively indicate the SBFD time unit and the non-SBFD time unit. Therefore, the terminal device can respectively receive the first part and the second part of the first signal in the SBFD time unit and the non-SBFD time unit.

With reference to the first aspect, in some implementations of the first aspect, the first CSI-RS sub-resource further includes one or more of the following: an identifier of the first CSI-RS sub-resource, a first power control offset, a second power control offset, a first resource mapping pattern, or first QCL information. The second CSI-RS sub-resource further includes one or more of the following: an identifier of the second CSI-RS sub-resource, a third power control offset, a fourth power control offset, a second resource mapping pattern, or second QCL information.

With reference to the first aspect, in some implementations of the first aspect, the first signal is received in the SBFD time unit of the second time domain resource based on the first CSI-RS sub-resource; and the first signal is received in the SBFD time unit of the third time domain resource based on the second CSI-RS sub-resource.

With reference to the first aspect, in some implementations of the first aspect, the second time domain resource includes only the SBFD time unit, and the third time domain resource includes only the non-SBFD time unit.

Based on the foregoing solution, the terminal device receives and measures the first signal in the SBFD time unit based on the first CSI-RS sub-resource, and receives and measures the first signal in the non-SBFD time unit based on the second CSI-RS sub-resource, in other words, associates the first CSI-RS sub-resource with the SBFD time unit, and associates the second CSI-RS sub-resource with the non-SBFD time unit. In this way, CSI-RSs are received and sent and CSI measurement is performed in an SBFD time unit and a non-SBFD time unit, thereby improving flexibility of CSI measurement and reporting in the SBFD time unit and the non-SBFD time unit.

With reference to the first aspect, in some implementations of the first aspect, the first CSI-RS sub-resource is an SBFD-specific CSI-RS sub-resource, and the second CSI-RS subresource is a non-SBFD-specific CSI-RS sub-resource.

Based on the foregoing solution, the SBFD-specific CSI-RS sub-resource (for example, NZP-CSI-RS-SubResource-SBFD) and the non-SBFD-specific CSI-RS sub-resource are introduced, so that CSI-RSs are received and CSI measurement is performed in an SBFD time unit and a non-SBFD time unit, without increasing a quantity of CSI-RS resources (for example, NZP-CSI-RS-Resource), thereby improving flexibility of CSI measurement in an SBFD scenario.

With reference to the first aspect, in some implementations of the first aspect, before receiving the first information and before receiving the second information, the method further includes: sending first capability information, where the first capability information indicates that an SBFD-specific CSI-RS sub-resource configured by a network is supported.

Based on the foregoing solution, the terminal device may report, to a network device, a capability of supporting the SBFD-specific CSI-RS sub-resource. In other words, the terminal device supports CSI-RS receiving and CSI measurement in an SBFD time unit, so that the network device can send the first information to the terminal device based on the reported capability, thereby improving communication reliability.

With reference to the first aspect, in some implementations of the first aspect, the first CSI reporting setting includes first indication information, the first indication information indicates that a first measurement result is to be reported via a resource indicated by the first CSI reporting setting, and the first measurement result includes a result obtained by measurement on the first CSI-RS sub-resource; and the second CSI reporting setting includes second indication information, the second indication information indicates that a second measurement result is reported by using a resource indicated by the second CSI reporting setting, and the second measurement result includes a result obtained by measurement on the second CSI-RS sub-resource.

Based on the foregoing solution, the first CSI reporting setting is associated with the first CSI-RS sub-resource by using the first indication information, and the second CSI reporting setting is associated with the second CSI-RS sub-resource by using the second indication information, so that the terminal device can receive and send CSI-RSs and perform CSI measurement in the SBFD time unit and the non-SBFD time unit respectively based on the first indication information and the second indication information, thereby improving flexibility of CSI measurement and reporting in the SBFD time unit and the non-SBFD time unit.

With reference to the first aspect, in some implementations of the first aspect, the first indication information includes the identifier of the first CSI-RS sub-resource, and the second indication information includes the identifier of the second CSI-RS sub-resource.

Based on the foregoing solution, the terminal device may determine, based on the identifier of the first CSI-RS sub-resource, that the first CSI reporting setting corresponds to the first CSI-RS sub-resource, and may determine, based on the identifier of the second CSI-RS subresource, that the second CSI reporting setting corresponds to the second CSI-RS sub-resource. In this way, CSI-RSs are separately received and sent and CSI measurement is performed in the SBFD time unit and the non-SBFD time unit, thereby improving flexibility of CSI measurement and reporting in the SBFD time unit and the non-SBFD time unit.

With reference to the first aspect, in some implementations of the first aspect, the first CSI reporting setting includes an identifier of the first CSI reporting setting, the second CSI reporting setting includes an identifier of the second CSI reporting setting, the first CSI-RS subresource includes the identifier of the first CSI-RS sub-resource, and the second CSI-RS subresource includes the identifier of the second CSI-RS sub-resource. The method further includes: if the identifier of the first CSI reporting setting is less than the identifier of the second CSI reporting setting, and the identifier of the first CSI-RS sub-resource is less than the identifier of the second CSI-RS sub-resource, determining the third information based on the first signal and the first CSI-RS sub-resource, and determining the fourth information based on the first signal and the second CSI-RS sub-resource; or if the identifier of the first CSI reporting setting is greater than the identifier of the second CSI reporting setting, and the identifier of the first CSI-RS sub-resource is greater than the identifier of the second CSI-RS sub-resource, determining the third information based on the first signal and the first CSI-RS sub-resource, and determining the fourth information based on the first signal and the second CSI-RS sub-resource.

That is, a CSI reporting setting with a small identifier is associated with a CSI-RS subresource with a small identifier, and a CSI reporting setting with a large identifier is associated with a CSI-RS sub-resource with a large identifier. Optionally, alternatively, a CSI reporting setting with a small identifier may be associated with a CSI-RS sub-resource with a large identifier, and a CSI reporting setting with a large identifier may be associated with a CSI-RS sub-resource with a small identifier, provided that the first CSI reporting setting and the first CSI-RS sub-resource are associated with the SBFD time unit and the second CSI reporting setting and the second CSI-RS sub-resource are associated with the non-SBFD time unit.

Based on the foregoing solution, an identifier size of a CSI reporting setting corresponds to an identifier size of a CSI-RS sub-resource, so that the terminal device can determine that the first CSI reporting setting corresponds to the first CSI-RS sub-resource and the second CSI reporting setting corresponds to the second CSI-RS sub-resource. In this way, CSI-RSs are separately received and sent and CSI measurement is performed in an SBFD time unit and a non-SBFD time unit, thereby improving flexibility of CSI measurement and reporting in the SBFD time unit and the non-SBFD time unit.

With reference to the first aspect, in some implementations of the first aspect, the first CSI reporting setting includes an identifier of the first CSI reporting setting, and the second CSI reporting setting includes an identifier of the second CSI reporting setting. The method further includes: if the identifier of the first CSI reporting setting is less than the identifier of the second CSI reporting setting; determining the third information based on the first signal and the first CSI-RS sub-resource, and determining the fourth information based on the first signal and the second CSI-RS sub-resource.

That is, a CSI reporting setting with a small identifier is associated with a CSI-RS subresource allocated in an SBFD time unit, and a CSI reporting setting with a large identifier is associated with a CSI-RS sub-resource allocated in a non-SBFD time unit. Optionally, alternatively, a CSI reporting setting with a large identifier may be associated with a CSI-RS sub-resource allocated in an SBFD time unit, and a CSI reporting setting with a small identifier may be associated with a CSI-RS sub-resource allocated in a non-SBFD time unit, provided that the first CSI reporting setting and the first CSI-RS sub-resource are associated with the SBFD time unit, and the second CSI reporting setting and the second CSI-RS sub-resource are associated with the non-SBFD time unit.

Based on the foregoing solution, CSI reporting settings with different identifier sizes are separately associated with the first CSI-RS sub-resource and the second CSI-RS sub-resource, so that the terminal device can receive a CSI-RS and perform CSI measurement in the SBFD time unit based on the first CSI-RS sub-resource, and receive a CSI-RS and perform CSI measurement in the non-SBFD time unit based on the second CSI-RS sub-resource, thereby improving flexibility of CSI measurement and reporting in the SBFD time unit and the non-SBFD time unit.

With reference to the first aspect, in some implementations of the first aspect, the second information further indicates N1 CSI reporting settings. Before receiving the first information and receiving the second information, the method further includes: sending second capability information, where the second capability information indicates that a maximum value N of CSI reporting settings configured by a network is supported, where N1 is a positive integer less than or equal to N.

Optionally, N is greater than 4.

Optionally, N is equal to any one of 6, 8, 10, 12, 16, or 32.

Based on the foregoing solution, the terminal device may report, to the network device, the supported maximum quantity N of CSI reporting settings. By increasing a quantity of CSI reporting settings, it is possible to improve communication reliability, while improving flexibility of CSI measurement and reporting in the SBFD time unit and the non-SBFD time unit.

With reference to the first aspect, in some implementations of the first aspect, the first CSI reporting setting is an SBFD-specific CSI reporting setting, and the second CSI reporting setting is a non-SBFD-specific CSI reporting setting.

In other words, the SBFD-specific CSI reporting setting is for reporting CSI obtained through measurement in the SBFD time unit.

Based on the foregoing solution, the SBFD-specific CSI reporting setting (for example, CSI-ReportConfig-SBFD) and the non-SBFD-specific CSI reporting setting are introduced, so that CSI-RSs are received and CSI measurement is performed in an SBFD time unit and a non-SBFD time unit, without increasing a quantity of CSI reporting settings, thereby improving flexibility of CSI measurement in an SBFD scenario.

With reference to the first aspect, in some implementations of the first aspect, before receiving the first information and before receiving the second information, the method further includes: sending third capability information, where the third capability information indicates that an SBFD-specific CSI reporting setting configured by a network is supported.

Optionally, the second information further indicates N2 SBFD-specific CSI reporting settings and N3 non-SBFD-specific CSI reporting settings, where N2 ≤ 4, N3 ≤ 4, N2 + N3 ≤ 8, and N2 and N3 are positive integers.

Based on the foregoing solution, the terminal device may report, to a network device, a capability of supporting the SBFD-specific CSI reporting setting. In other words, the terminal device supports CSI-RS receiving and CSI measurement in an SBFD time unit through CSI reporting setting, so that the network device can send the first information to the terminal device based on the reported capability, thereby improving communication reliability.

With reference to the first aspect, in some implementations of the first aspect, before receiving the first information and before receiving the second information, the method further includes: sending fourth capability information, where the fourth capability information indicates that the terminal device supports an SBFD-specific CSI-RS sub-resource and an SBFD-specific CSI reporting setting that are configured by the network device.

Based on the foregoing solution, the terminal device sends the fourth capability information to indicate that both the SBFD-specific CSI-RS sub-resource and the SBFD-specific CSI reporting setting are supported, so that the network device can send the first information and the second information based on the fourth capability information, thereby reducing signaling overheads and improving communication reliability.

Optionally, one or more of the first capability information, the second capability information, the third capability information, and the fourth capability information are carried in first signaling, where the first signaling is RRC signaling, and the first signaling is carried on a third PUSCH.

According to a second aspect, a communication method is provided. The method may be performed by a sending device, or may be performed by a chip or a circuit used in the sending device. This is not limited in this application. For ease of description, the following uses an example in which the method is performed by the sending device for description. The sending device may be a terminal device, a chip or a circuit in the terminal device, a functional module that can invoke and execute a program in the terminal device, or the like.

The method includes: receiving first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information includes CSI in a non-SBFD time unit; receiving second information, where the second information indicates a first CSI-RS resource and a second CSI-RS resource, the first CSI-RS resource is for receiving a first signal, the second CSI-RS resource is for receiving a second signal, the first signal is for determining the third information, and the second signal is for determining the fourth information; receiving the first signal based on the first CSI-RS resource; receiving the second signal based on the second CSI-RS resource; and sending the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced. The first CSI reporting sub-setting and the second CSI reporting sub-setting are respectively associated with the first CSI-RS resource and the second CSI-RS resource. To be specific, the first CSI-RS resource is for receiving and measuring the first signal in the SBFD time unit to obtain the third information, and the second CSI-RS resource is for receiving and measuring the second signal in the non-SBFD time unit to obtain the fourth information. The third information and the fourth information are separately sent at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig), thereby improving flexibility of CSI measurement and reporting in the SBFD time unit and the non-SBFD time unit.

With reference to the second aspect, in some implementations of the second aspect, the first CSI-RS resource indicates a first time domain resource, the second CSI-RS resource indicates a second time domain resource, the first time domain resource includes an SBFD time unit, and the second time domain resource includes a non-SBFD time unit.

With reference to the second aspect, in some implementations of the second aspect, the first CSI-RS resource is an SBFD-specific CSI-RS resource, and the second CSI-RS resource is a non-SBFD-specific CSI-RS resource.

With reference to the second aspect, in some implementations of the second aspect, before receiving the second information, the method further includes: sending first capability information, where the first capability information indicates that the terminal device supports an SBFD-specific CSI-RS resource configured by a network device.

With reference to the second aspect, in some implementations of the second aspect, a port quantity of the first CSI-RS resource is the same as a port quantity of the second CSI-RS resource, and a code division multiplexing (Code division multiplexing, CDM) type of the first CSI-RS resource is the same as a CDM type of the second CSI-RS resource.

With reference to the second aspect, in some implementations of the second aspect, the first CSI reporting sub-setting includes fifth information, where the fifth information indicates a first port or a first CDM group; and receiving the first signal based on the first CSI-RS resource includes: receiving the first signal based on the first port and the first CSI-RS resource, or receiving the first signal based on the first CDM group and the first CSI-RS resource.

With reference to the second aspect, in some implementations of the second aspect, the second CSI reporting sub-setting includes sixth information, where the sixth information indicates a second port or a second CDM group; and receiving the second signal based on the second CSI-RS resource includes: receiving the second signal based on the second port and the second CSI-RS resource, or receiving the second signal based on the second CDM group and the second CSI-RS resource.

With reference to the second aspect, in some implementations of the second aspect, a port quantity of the first CSI-RS resource is different from a port quantity of the second CSI-RS resource, and a CDM type of the first CSI-RS resource is different from a CDM type of the second CSI-RS resource.

With reference to the second aspect, in some implementations of the second aspect, the first CSI reporting sub-setting includes an identifier of the first CSI-RS resource, the second CSI reporting sub-setting includes an identifier of the second CSI-RS resource, the identifier of the first CSI-RS resource indicates the first CSI-RS resource, and the identifier of the second CSI-RS resource indicates the second CSI-RS resource.

With reference to the second aspect, in some implementations of the second aspect, the first CSI reporting sub-setting includes one or more of the following: an identifier of the first CSI reporting sub-setting, a first CSI-RS port subset indicator parameter, a fifth power offset (powerOffset), or a first codebook configuration parameter, where the fifth power offset is for determining power of the first CSI-RS resource, and the first codebook configuration is for determining the third information (for example, CSI); and the second CSI reporting sub-setting includes one or more of the following: an identifier of the second CSI reporting sub-setting, a second CSI-RS port subset indicator parameter, a sixth power offset (powerOffset), or a second codebook configuration parameter, where the sixth power offset is for determining power of the second CSI-RS resource, and the second codebook configuration is for determining the fourth information (for example, CSI).

With reference to the second aspect, in some implementations of the second aspect, the first CSI reporting sub-setting is an SBFD-specific CSI reporting sub-setting, and the second CSI reporting sub-setting is a non-SBFD-specific CSI reporting sub-setting.

With reference to the second aspect, in some implementations of the second aspect, the first CSI reporting sub-setting includes first indication information, and the second CSI reporting sub-setting includes second indication information, where the first indication information indicates that a first measurement result is to be reported via a resource indicated by the first CSI reporting sub-setting, the first measurement result includes a result obtained by measurement on the first CSI-RS resource, the second indication information indicates that a second measurement result is to be reported via a resource indicated by the second CSI reporting sub-setting, and the second measurement result includes a result obtained by measurement on the second CSI-RS resource.

With reference to the second aspect, in some implementations of the second aspect, before receiving the first information and before receiving the second information, the method further includes: sending third capability information, where the third capability information indicates that the terminal device supports an SBFD-specific CSI-RS resource and an SBFD-specific CSI reporting sub-setting that are configured by the network device.

With reference to the second aspect, in some implementations of the second aspect, one or more of the first capability information, the second capability information, and the fourth capability information are carried in first signaling, the first signaling is RRC signaling, and the first signaling is carried on a third PUSCH.

For beneficial effects of the second aspect and some implementations of the second aspect, correspondingly refer to descriptions of the first aspect and related implementations of the first aspect. Details are not described herein again.

According to a third aspect, a communication method is provided. The method may be performed by a sending device, or may be performed by a chip or a circuit used in the sending device. This is not limited in this application. For ease of description, the following uses an example in which the method is performed by the sending device for description. The sending device may be a terminal device, a chip or a circuit in the terminal device, a functional module that can invoke and execute a program in the terminal device, or the like.

The method includes: receiving first information, where the first information indicates a first CSI reporting setting and a second CSI reporting setting, where the first CSI reporting setting is for reporting third information, the second CSI reporting setting is for reporting fourth information, the third information is CSI in an SBFD time unit, and the fourth information is CSI in a non-SBFD time unit; receiving second information, where the second information indicates a first CSI-RS resource and a second CSI-RS resource, the first CSI-RS resource is for receiving a first signal, the second CSI-RS resource is for receiving a second signal, the first signal is for determining the third information, and the second signal is for determining the fourth information; receiving the first signal based on the first CSI-RS resource; receiving the second signal based on the second CSI-RS resource; sending the third information based on the first CSI reporting setting; and sending the fourth information based on the second CSI reporting setting, where the third information is carried on a first PUCCH or a first PUSCH, and the fourth information is carried on a second PUCCH or a second PUSCH.

With reference to the third aspect, in some implementations of the third aspect, the second information further indicates N1 CSI reporting settings, where N1 ≤ N, N indicates a maximum value of CSI reporting settings configured by a network device and supported by the terminal device, and N and N1 are positive integers.

Optionally, N is greater than 4.

Optionally, N is equal to any one of 6, 8, 10, 12, 16, or 32.

With reference to the third aspect, in some implementations of the third aspect, the first CSI reporting setting is an SBFD-specific CSI reporting setting, and the second CSI reporting setting is a non-SBFD-specific CSI reporting setting.

With reference to the third aspect, in some implementations of the third aspect, the first CSI-RS resource is an SBFD-specific CSI-RS resource, and the second CSI-RS resource is a non-SBFD-specific CSI-RS resource, where the SBFD-specific CSI reporting setting is associated with the SBFD-specific CSI-RS resource, and the non-SBFD-specific CSI reporting setting is associated with the non-SBFD-specific CSI-RS resource. That is, the SBFD-specific CSI-RS resource is for receiving a CSI-RS in the SBFD time unit and measure the CSI to obtain the third information, and the non-SBFD-specific CSI-RS resource is for receiving a CSI-RS in the non-SBFD time unit and measure the CSI to obtain the fourth information. In addition, the third information is sent by using a reporting resource indicated by the SBFD-specific CSI reporting setting, and the fourth information is sent by using a reporting resource indicated by the non-SBFD-specific CSI reporting setting.

With reference to the third aspect, in some implementations of the third aspect, before receiving the first information, the method further includes: sending first capability information, where the first capability information indicates N.

According to the solution provided in this application, a quantity of CSI reporting settings (for example, CSI-ReportConfig) is increased, or an SBFD-specific CSI reporting setting (for example, CSI-ReportConfig-SBFD) is introduced, to improve flexibility of CSI measurement and reporting in the SBFD time unit and the non-SBFD time unit.

According to a fourth aspect, a communication method is provided. The method may be performed by a sending device, or may be performed by a chip or a circuit used in the sending device. This is not limited in this application. For ease of description, the following uses an example in which the method is performed by the sending device for description. The sending device may be a terminal device, a chip or a circuit in the terminal device, a functional module that can invoke and execute a program in the terminal device, or the like.

The method includes: receiving first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information is CSI in an SBFD time unit, and the fourth information is CSI in a non-SBFD time unit; receiving second information, where the second information indicates a CSI-RS resource, the CSI-RS resource is for receiving a first signal, the CSI-RS resource includes a first CSI-RS subresource and a second CSI-RS sub-resource, the first signal and the first CSI-RS sub-resource are for determining the third information, and the first signal and the second CSI-RS sub-resource are for determining the fourth information; receiving the first signal based on the CSI-RS resource; and sending the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced, and the first CSI-RS sub-resource and the second CSI-RS sub-resource (for example, NZP-CSI-RS-SubResource) are introduced. The first CSI reporting sub-setting and the second CSI reporting sub-setting are respectively associated with the first CSI-RS sub-resource and the second CSI-RS sub-resource. To be specific, the first CSI-RS sub-resource is for receiving and measuring the first signal (a first part) in the SBFD time unit to obtain the third information, and the second CSI-RS sub-resource is for receiving and measuring the first signal (a second part) in the non-SBFD time unit to obtain the fourth information. The third information and the fourth information are separately sent at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig) and a quantity of CSI-RS resources (for example, NZP-CSI-RS-Resource), thereby improving flexibility of CSI measurement and reporting in the SBFD time unit and the non-SBFD time unit.

With reference to the fourth aspect, in some implementations of the fourth aspect, the CSI-RS resource further includes a first periodicity and an offset parameter, where the first periodicity and the offset parameter indicate a first time domain resource; and the method further includes: determining the third information in an SBFD time unit of the first time domain resource based on the first signal and the first CSI-RS sub-resource; and determining the fourth information in a non-SBFD time unit of the first time domain resource based on the first signal and the second CSI-RS sub-resource.

With reference to the fourth aspect, in some implementations of the fourth aspect, the method further includes: receiving the first signal in the SBFD time unit of the first time domain resource based on the first CSI-RS sub-resource; and receiving the first signal in the non-SBFD time unit of the first time domain resource based on the second CSI-RS sub-resource.

With reference to the fourth aspect, in some implementations of the fourth aspect, the second time domain resource includes only the SBFD time unit, and the third time domain resource includes only the non-SBFD time unit.

With reference to the fourth aspect, in some implementations of the fourth aspect, the method further includes: receiving the first signal in the SBFD time unit of the second time domain resource based on the first CSI-RS sub-resource; and receiving the first signal in the non-SBFD time unit of the third time domain resource based on the second CSI-RS sub-resource.

With reference to the fourth aspect, in some implementations of the fourth aspect, the first CSI-RS sub-resource includes one or more of the following: an identifier of the first CSI-RS sub-resource, a first power control offset, a second power control offset, a first resource mapping pattern, or first QCL information. The second CSI-RS sub-resource includes one or more of the following: an identifier of the second CSI-RS sub-resource, a third power control offset, a fourth power control offset, a second resource mapping pattern, or second QCL information.

With reference to the fourth aspect, in some implementations of the fourth aspect, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource; and the method further includes: determining the third information in an SBFD time unit of the second time domain resource based on the first CSI-RS sub-resource and the first signal; and determining the fourth information in a non-SBFD time unit of the third time domain resource based on the second CSI-RS sub-resource and the first signal.

With reference to the fourth aspect, in some implementations of the fourth aspect, the first CSI-RS sub-resource is an SBFD-specific CSI-RS sub-resource, and the second CSI-RS subresource is a non-SBFD-specific CSI-RS sub-resource.

With reference to the fourth aspect, in some implementations of the fourth aspect, a port quantity of the first CSI-RS sub-resource is the same as a port quantity of the second CSI-RS sub-resource, and a CDM type of the first CSI-RS sub-resource is the same as a CDM type of the second CSI-RS sub-resource.

With reference to the fourth aspect, in some implementations of the fourth aspect, the first CSI reporting sub-setting further includes fifth information, where the fifth information indicates a first port or a first CDM group; and receiving the first signal based on the CSI-RS resource includes: receiving the first signal based on the first port and the first CSI-RS sub-resource, or receiving the first signal based on the first CDM group and the first CSI-RS sub-resource.

With reference to the fourth aspect, in some implementations of the fourth aspect, the second CSI reporting sub-setting further includes sixth information, where the sixth information indicates a second port or a second CDM group; and receiving the first signal based on the CSI-RS resource includes: receiving the first signal based on the second port and the second CSI-RS sub-resource, or receiving the first signal based on the second CDM group and the second CSI-RS sub-resource.

With reference to the fourth aspect, in some implementations of the fourth aspect, a port quantity of the first CSI-RS sub-resource is different from a port quantity of the second CSI-RS sub-resource, and a CDM type of the first CSI-RS sub-resource is different from a CDM type of the second CSI-RS sub-resource.

With reference to the fourth aspect, in some implementations of the fourth aspect, the first CSI reporting sub-setting includes an identifier of the first CSI-RS sub-resource, the second CSI reporting sub-setting includes an identifier of the second CSI-RS sub-resource, the identifier of the first CSI-RS sub-resource indicates the first CSI-RS sub-resource, and the identifier of the second CSI-RS sub-resource indicates the second CSI-RS sub-resource.

With reference to the fourth aspect, in some implementations of the fourth aspect, the first CSI reporting sub-setting is an SBFD-specific CSI reporting sub-setting, and the second CSI reporting sub-setting is a non-SBFD-specific CSI reporting sub-setting.

With reference to the fourth aspect, in some implementations of the fourth aspect, the first CSI reporting sub-setting includes first indication information, and the second CSI reporting sub-setting includes second indication information, where the first indication information indicates that a first measurement result is to be reported via a resource indicated by the first CSI reporting sub-setting, the first measurement result includes a result obtained by measurement on the first CSI-RS sub-resource, the second indication information indicates that a second measurement result is to be reported via a resource indicated by the second CSI reporting sub-setting, and the second measurement result includes a result obtained by measurement on the second CSI-RS subresource.

For beneficial effects of the fourth aspect and some implementations of the fourth aspect, correspondingly refer to descriptions of the first aspect and related implementations of the first aspect. Details are not described herein again.

According to a fifth aspect, a communication method is provided. The method may be performed by a sending device, or may be performed by a chip or a circuit used in the sending device. This is not limited in this application. For ease of description, the following uses an example in which the method is performed by the sending device for description. The sending device may be a terminal device, a chip or a circuit in the terminal device, a functional module that can invoke and execute a program in the terminal device, or the like.

The method includes: receiving first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information is CSI in an SBFD time unit, and the fourth information is CSI in a non-SBFD time unit; receiving second information, where the second information indicates a CSI-RS resource, the CSI-RS resource is for receiving a first signal, and the first signal is for determining the third information and the fourth information; receiving the first signal based on the CSI-RS resource; and sending the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced. The first CSI reporting sub-setting and the second CSI reporting sub-setting are associated with a same CSI-RS resource. To be specific, the CSI-RS resource is for receiving and measuring the first signal in the SBFD time unit and the non-SBFD time unit to obtain the third information and the fourth information. The third information and the fourth information are separately sent at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig) and a quantity of CSI-RS resources (for example, NZP-CSI-RS-Resource), thereby improving flexibility of CSI measurement and reporting in the SBFD time unit and the non-SBFD time unit.

With reference to the fifth aspect, in some implementations of the fifth aspect, the CSI-RS resource includes a first periodicity and an offset parameter, where the first periodicity and the offset parameter indicate a first time domain resource; and the method further includes: determining the third information in an SBFD time unit of the first time domain resource based on the first signal; and determining the fourth information in a non-SBFD time unit of the first time domain resource based on the first signal.

With reference to the fifth aspect, in some implementations of the fifth aspect, the first CSI reporting sub-setting further includes fifth information, where the fifth information indicates a first port or a first CDM group; and receiving the first signal based on the CSI-RS resource includes: receiving the first signal based on the first port and the CSI-RS resource, or receiving the first signal based on the first CDM group and the CSI-RS resource.

With reference to the fifth aspect, in some implementations of the fifth aspect, the first CSI reporting sub-setting further includes sixth information, where the sixth information indicates the first port or the first CDM group; and determining the third information based on the first signal includes: determining the third information based on the first signal, the CSI-RS resource, and the first port, or determining the third information based on the first signal, the CSI-RS resource, and the first CDM group.

With reference to the fifth aspect, in some implementations of the fifth aspect, the second CSI reporting sub-setting further includes seventh information, where the seventh information indicates a second port or a second CDM group; and receiving the first signal based on the CSI-RS resource includes: receiving the first signal based on the second port and the CSI-RS resource, or receiving the first signal based on the second CDM group and the CSI-RS resource.

With reference to the fifth aspect, in some implementations of the fifth aspect, the second CSI reporting sub-setting further includes eighth information, where the eighth information indicates a second port or a second CDM group; and determining the fourth information based on the first signal includes: determining the fourth information based on the first signal, the CSI-RS resource, and the second port, or determining the fourth information based on the first signal, the CSI-RS resource, and the second CDM group.

For beneficial effects of the fifth aspect and some implementations of the fifth aspect, correspondingly refer to descriptions of the first aspect and related implementations of the first aspect. Details are not described herein again.

According to a sixth aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a central unit (central unit, CU) or a distributed unit (distributed unit, DU) in the network device, or a functional module that can invoke and execute a program in the network device.

The method includes: sending first information, where the first information indicates a first CSI reporting setting and a second CSI reporting setting, where the first CSI reporting setting is for reporting third information, the second CSI reporting setting is for reporting fourth information, the third information includes CSI in an SBFD time unit, and the fourth information includes CSI in a non-SBFD time unit; sending second information, where the second information indicates a CSI-RS resource, the CSI-RS resource is for sending a first signal, the CSI-RS resource includes a first CSI-RS sub-resource and a second CSI-RS sub-resource, the first signal and the first CSI-RS sub-resource are for determining the third information, and the first signal and the second CSI-RS sub-resource are for determining the fourth information; sending the first signal based on the CSI-RS resource; receiving the third information based on the first CSI reporting setting, where the third information is carried on a first PUCCH or a first PUSCH; and receiving the fourth information based on the second CSI reporting setting, where the fourth information is carried on a second PUCCH or a second PUSCH.

According to the solution provided in this application, the first CSI-RS sub-resource and the second CSI-RS sub-resource (for example, NZP-CSI-RS-SubResource) are introduced. The first CSI-RS sub-resource and the second CSI-RS sub-resource are respectively associated with the first CSI reporting setting and the second CSI reporting setting. To be specific, the first CSI-RS sub-resource is for sending the first signal (a first part) in the SBFD time unit, and the second CSI-RS sub-resource is for sending the first signal (a second part) in the non-SBFD time unit. The third information and the fourth information are respectively received by using reporting resources indicated by the first CSI reporting setting and the second CSI reporting setting. In this way, CSI-RSs can be received and sent and CSI measurement can be performed in an SBFD time unit and a non-SBFD time unit, without increasing a quantity of CSI-RS resources (for example, NZP-CSI-RS-Resource), thereby improving flexibility of CSI measurement and reporting in the SBFD time unit and the non-SBFD time unit.

With reference to the sixth aspect, in some implementations of the sixth aspect, the CSI-RS resource further includes a first periodicity and an offset parameter, and the first periodicity and the offset parameter indicate a first time domain resource. In an SBFD time unit of the first time domain resource, the first signal and the first CSI-RS sub-resource are for determining the third information; and in a non-SBFD time unit of the first time domain resource, the first signal and the second CSI-RS sub-resource are for determining the fourth information.

With reference to the sixth aspect, in some implementations of the sixth aspect, the first CSI-RS sub-resource includes at least one of the following: an identifier of the first CSI-RS subresource, a first power control offset, a second power control offset, a first resource mapping pattern, or first quasi co-location (quasi co-location, QCL) information. The second CSI-RS subresource includes at least one of the following: an identifier of the second CSI-RS sub-resource, a third power control offset, a fourth power control offset, a second resource mapping pattern, or second QCL information.

With reference to the sixth aspect, in some implementations of the sixth aspect, the method further includes: sending the first signal in the SBFD time unit of the first time domain resource based on the first CSI-RS sub-resource; and sending the first signal in the non-SBFD time unit of the first time domain resource based on the second CSI-RS sub-resource.

With reference to the sixth aspect, in some implementations of the sixth aspect, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource. In an SBFD time unit of the second time domain resource, the first CSI-RS sub-resource and the first signal are for determining the third information. In a non-SBFD time unit of the third time domain resource, the second CSI-RS subresource and the first signal are for determining the fourth information.

With reference to the sixth aspect, in some implementations of the sixth aspect, the second time domain resource includes only the SBFD time unit, and the third time domain resource includes only the non-SBFD time unit.

With reference to the sixth aspect, in some implementations of the sixth aspect, the first CSI-RS sub-resource further includes one or more of the following: an identifier of the first CSI-RS sub-resource, a first power control offset, a second power control offset, a first resource mapping pattern, or first QCL information. The second CSI-RS sub-resource further includes one or more of the following: an identifier of the second CSI-RS sub-resource, a third power control offset, a fourth power control offset, a second resource mapping pattern, or second QCL information.

With reference to the sixth aspect, in some implementations of the sixth aspect, the first signal is sent in the SBFD time unit of the second time domain resource based on the first CSI-RS sub-resource; and the first signal is sent in the SBFD time unit of the third time domain resource based on the second CSI-RS sub-resource.

With reference to the sixth aspect, in some implementations of the sixth aspect, the first CSI-RS sub-resource is an SBFD-specific CSI-RS sub-resource, and the second CSI-RS subresource is a non-SBFD-specific CSI-RS sub-resource.

With reference to the sixth aspect, in some implementations of the sixth aspect, before sending the second information, the method further includes: receiving first capability information, where the first capability information indicates that an SBFD-specific CSI-RS sub-resource configured by a network is supported.

With reference to the sixth aspect, in some implementations of the sixth aspect, the first CSI reporting setting includes first indication information, the first indication information indicates that a first measurement result is to be reported via a resource indicated by the first CSI reporting setting, and the first measurement result includes a result obtained by measurement on the first CSI-RS sub-resource; and the second CSI reporting setting includes second indication information, the second indication information indicates that a second measurement result is to be reported via a resource indicated by the second CSI reporting setting, and the second measurement result includes a result obtained by measurement on the second CSI-RS sub-resource.

With reference to the sixth aspect, in some implementations of the sixth aspect, the first indication information includes the identifier of the first CSI-RS sub-resource, and the second indication information includes the identifier of the second CSI-RS sub-resource.

With reference to the sixth aspect, in some implementations of the sixth aspect, the first CSI reporting setting includes an identifier of the first CSI reporting setting, the second CSI reporting setting includes an identifier of the second CSI reporting setting, the first CSI-RS subresource includes the identifier of the first CSI-RS sub-resource, and the second CSI-RS subresource includes the identifier of the second CSI-RS sub-resource. The method further includes: if the identifier of the first CSI reporting setting is less than the identifier of the second CSI reporting setting, and the identifier of the first CSI-RS sub-resource is less than the identifier of the second CSI-RS sub-resource, determining the third information based on the first signal and the first CSI-RS sub-resource, and determining the fourth information based on the first signal and the second CSI-RS sub-resource; or if the identifier of the first CSI reporting setting is greater than the identifier of the second CSI reporting setting, and the identifier of the first CSI-RS sub-resource is greater than the identifier of the second CSI-RS sub-resource, determining the third information based on the first signal and the first CSI-RS sub-resource, and determining the fourth information based on the first signal and the second CSI-RS sub-resource.

With reference to the sixth aspect, in some implementations of the sixth aspect, the first CSI reporting setting includes an identifier of the first CSI reporting setting, and the second CSI reporting setting includes an identifier of the second CSI reporting setting. The method further includes: if the identifier of the first CSI reporting setting is less than the identifier of the second CSI reporting setting; determining the third information based on the first signal and the first CSI-RS sub-resource, and determining the fourth information based on the first signal and the second CSI-RS sub-resource.

With reference to the sixth aspect, in some implementations of the sixth aspect, the second information further indicates N1 CSI reporting settings. Before sending the second information, the method further includes: receiving second capability information, where the second capability information indicates that a maximum value N of CSI reporting settings configured by a network is supported, where N1 is a positive integer less than or equal to N.

Optionally, N is greater than 4.

Optionally, N is equal to any one of 6, 8, 10, 12, 16, or 32.

With reference to the sixth aspect, in some implementations of the sixth aspect, the first CSI reporting setting is an SBFD-specific CSI reporting setting, and the second CSI reporting setting is a non-SBFD-specific CSI reporting setting.

In other words, the SBFD-specific CSI reporting setting is for reporting CSI obtained through measurement in the SBFD time unit.

With reference to the sixth aspect, in some implementations of the sixth aspect, before sending the second information, the method further includes: receiving third capability information, where the third capability information indicates that an SBFD-specific CSI reporting setting configured by a network is supported.

Optionally, the second information further indicates N2 SBFD-specific CSI reporting settings and N3 non-SBFD-specific CSI reporting settings, where N2 ≤ 4, N3 ≤ 4, N2 + N3 ≤ 8, and N2 and N3 are positive integers.

With reference to the sixth aspect, in some implementations of the sixth aspect, before sending the first information and sending the second information, the method further includes: receiving fourth capability information, where the fourth capability information indicates that a terminal device supports an SBFD-specific CSI-RS sub-resource and an SBFD-specific CSI reporting setting that are configured by the network device. One or more of the first capability information, the second capability information, the third capability information, and the fourth capability information are carried in first signaling, where the first signaling is RRC signaling, and the first signaling is carried on a third PUSCH.

For beneficial effects of the sixth aspect and some implementations of the sixth aspect, correspondingly refer to descriptions of the first aspect and related implementations of the first aspect. Details are not described herein again.

According to a seventh aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a CU or a DU in the network device, or a functional module that can invoke and execute a program in the network device.

The method includes: sending first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information includes CSI in a non-SBFD time unit; sending second information, where the second information indicates a first CSI-RS resource and a second CSI-RS resource, the first CSI-RS resource is for sending a first signal, the second CSI-RS resource is for sending a second signal, the first signal is for determining the third information, and the second signal is for determining the fourth information; sending the first signal based on the first CSI-RS resource; sending the second signal based on the second CSI-RS resource; and receiving the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced. The first CSI reporting sub-setting and the second CSI reporting sub-setting are respectively associated with the first CSI-RS resource and the second CSI-RS resource. To be specific, the first CSI-RS resource is for sending the first signal in the SBFD time unit, and the second CSI-RS resource is for sending the second signal in the non-SBFD time unit. The third information and the fourth information are separately received at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig), thereby improving flexibility of CSI measurement and reporting in the SBFD time unit and the non-SBFD time unit.

With reference to the seventh aspect, in some implementations of the seventh aspect, the first CSI-RS resource indicates a first time domain resource, the second CSI-RS resource indicates a second time domain resource, the first time domain resource includes an SBFD time unit, and the second time domain resource includes a non-SBFD time unit.

With reference to the seventh aspect, in some implementations of the seventh aspect, the first CSI-RS resource is an SBFD-specific CSI-RS resource, and the second CSI-RS resource is a non-SBFD-specific CSI-RS resource.

With reference to the seventh aspect, in some implementations of the seventh aspect, before sending the second information, the method further includes: receiving first capability information, where the first capability information indicates that the terminal device supports an SBFD-specific CSI-RS resource configured by a network device.

With reference to the seventh aspect, in some implementations of the seventh aspect, a port quantity of the first CSI-RS resource is the same as a port quantity of the second CSI-RS resource, and a CDM type of the first CSI-RS resource is the same as a CDM type of the second CSI-RS resource.

With reference to the seventh aspect, in some implementations of the seventh aspect, the first CSI reporting sub-setting includes fifth information, where the fifth information indicates a first port or a first CDM group; and sending the first signal based on the first CSI-RS resource includes: sending the first signal based on the first port and the first CSI-RS resource, or sending the first signal based on the first CDM group and the first CSI-RS resource.

With reference to the seventh aspect, in some implementations of the seventh aspect, the second CSI reporting sub-setting includes sixth information, where the sixth information indicates a second port or a second CDM group; and sending the second signal based on the second CSI-RS resource includes: sending the second signal based on the second port and the second CSI-RS resource, or sending the second signal based on the second CDM group and the second CSI-RS resource.

With reference to the seventh aspect, in some implementations of the seventh aspect, a port quantity of the first CSI-RS resource is different from a port quantity of the second CSI-RS resource, and a CDM type of the first CSI-RS resource is different from a CDM type of the second CSI-RS resource.

With reference to the seventh aspect, in some implementations of the seventh aspect, the first CSI reporting sub-setting includes an identifier of the first CSI-RS resource, the second CSI reporting sub-setting includes an identifier of the second CSI-RS resource, the identifier of the first CSI-RS resource indicates the first CSI-RS resource, and the identifier of the second CSI-RS resource indicates the second CSI-RS resource.

With reference to the seventh aspect, in some implementations of the seventh aspect, the first CSI reporting sub-setting includes one or more of the following: an identifier of the first CSI reporting sub-setting, a first CSI-RS port subset indicator parameter, a fifth power offset (powerOffset), or a first codebook configuration parameter, where the fifth power offset is related to power of the first CSI-RS resource. The second CSI reporting sub-setting includes one or more of the following: an identifier of the second CSI reporting sub-setting, a second CSI-RS port subset indicator parameter, a sixth power offset (powerOffset), or a second codebook configuration parameter, where the sixth power offset is related to power of the second CSI-RS resource.

With reference to the seventh aspect, in some implementations of the seventh aspect, the first CSI reporting sub-setting is an SBFD-specific CSI reporting sub-setting, and the second CSI reporting sub-setting is a non-SBFD-specific CSI reporting sub-setting.

With reference to the seventh aspect, in some implementations of the seventh aspect, the first CSI reporting sub-setting includes first indication information, and the second CSI reporting sub-setting includes second indication information, where the first indication information indicates that a first measurement result is to be reported via a resource indicated by the first CSI reporting sub-setting, the first measurement result includes a result obtained by measurement on the first CSI-RS resource, the second indication information indicates that a second measurement result is to be reported via a resource indicated by the second CSI reporting sub-setting, and the second measurement result includes a result obtained by measurement on the second CSI-RS resource.

With reference to the seventh aspect, in some implementations of the seventh aspect, before sending the first information, the method further includes: receiving second capability information, where the second capability information indicates that a terminal device supports an SBFD-specific CSI reporting sub-setting configured by the network device.

With reference to the seventh aspect, in some implementations of the seventh aspect, before sending the first information and before sending the second information, the method further includes: receiving third capability information, where the third capability information indicates that a terminal device supports an SBFD-specific CSI-RS resource and an SBFD-specific CSI reporting sub-setting that are configured by the network device.

With reference to the seventh aspect, in some implementations of the seventh aspect, one or more of the first capability information, the second capability information, the third capability information, and the fourth capability information are carried in first signaling, the first signaling is RRC signaling, and the first signaling is carried on a third PUSCH.

For beneficial effects of the seventh aspect and some implementations of the seventh aspect, correspondingly refer to descriptions of the second aspect and related implementations of the second aspect. Details are not described herein again.

According to an eighth aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a CU or a DU in the network device, or a functional module that can invoke and execute a program in the network device.

The method includes: sending first information, where the first information indicates a first CSI reporting setting and a second CSI reporting setting, where the first CSI reporting setting is for reporting third information, the second CSI reporting setting is for reporting fourth information, the third information is CSI in an SBFD time unit, and the fourth information is CSI in a non-SBFD time unit; sending second information, where the second information indicates a first CSI-RS resource and a second CSI-RS resource, the first CSI-RS resource is for sending a first signal, the second CSI-RS resource is for sending a second signal, the first signal is for determining the third information, and the second signal is for determining the fourth information; sending the first signal based on the first CSI-RS resource; sending the second signal based on the second CSI-RS resource; receiving the third information based on the first CSI reporting setting; and receiving the fourth information based on the second CSI reporting setting, where the third information is carried on a first PUCCH or a first PUSCH, and the fourth information is carried on a second PUCCH or a second PUSCH.

With reference to the eighth aspect, in some implementations of the eighth aspect, the second information further indicates N1 CSI reporting settings, where N1 ≤ N, N indicates a maximum value of CSI reporting settings configured by a network device and supported by the terminal device, and N and N1 are positive integers.

Optionally, N is greater than 4.

Optionally, N is equal to any one of 6, 8, 10, 12, 16, or 32.

With reference to the eigth aspect, in some implementations of the eigth aspect, the first CSI reporting setting is an SBFD-specific CSI reporting setting, and the second CSI reporting setting is a non-SBFD-specific CSI reporting setting.

With reference to the eigth aspect, in some implementations of the eigth aspect, the first CSI-RS resource is an SBFD-specific CSI-RS resource, and the second CSI-RS resource is a non-SBFD-specific CSI-RS resource, where the SBFD-specific CSI reporting setting is associated with the SBFD-specific CSI-RS resource, and the non-SBFD-specific CSI reporting setting is associated with the non-SBFD-specific CSI-RS resource. That is, the SBFD-specific CSI-RS resource is for receiving a CSI-RS in the SBFD time unit and measure the CSI to obtain the third information, and the non-SBFD-specific CSI-RS resource is for receiving a CSI-RS in the non-SBFD time unit and measure the CSI to obtain the fourth information. In addition, the third information is sent by using a reporting resource indicated by the SBFD-specific CSI reporting setting, and the fourth information is sent by using a reporting resource indicated by the non-SBFD-specific CSI reporting setting.

According to the solution provided in this application, a quantity of CSI reporting settings (for example, CSI-ReportConfig) is increased, or an SBFD-specific CSI reporting setting (for example, CSI-ReportConfig-SBFD) is introduced, to improve flexibility of CSI measurement and reporting in the SBFD time unit and the non-SBFD time unit.

With reference to the eighth aspect, in some implementations of the eighth aspect, before sending the first information, the method further includes: receiving first capability information, where the first capability information indicates N.

For beneficial effects of the eighth aspect and some implementations of the eighth aspect, correspondingly refer to descriptions of the third aspect and related implementations of the third aspect. Details are not described herein again.

According to a ninth aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a CU or a DU in the network device, or a functional module that can invoke and execute a program in the network device.

The method includes: sending first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information is CSI in an SBFD time unit, and the fourth information is CSI in a non-SBFD time unit; sending second information, where the second information indicates a CSI-RS resource, the CSI-RS resource is for sending a first signal, the CSI-RS resource includes a first CSI-RS subresource and a second CSI-RS sub-resource, the first signal and the first CSI-RS sub-resource are for determining the third information, and the first signal and the second CSI-RS sub-resource are for determining the fourth information; sending the first signal based on the CSI-RS resource; and receiving the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced, and the first CSI-RS sub-resource and the second CSI-RS sub-resource (for example, NZP-CSI-RS-SubResource) are introduced. The first CSI reporting sub-setting and the second CSI reporting sub-setting are respectively associated with the first CSI-RS sub-resource and the second CSI-RS sub-resource. To be specific, the first CSI-RS sub-resource is for sending the first signal (a first part) in the SBFD time unit, and the second CSI-RS sub-resource is for sending the first signal (a second part) in the non-SBFD time unit. The third information and the fourth information are separately received at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig) and a quantity of CSI-RS resources (for example, NZP-CSI-RS-Resource), thereby improving flexibility of CSI measurement and reporting in the SBFD time unit and the non-SBFD time unit.

With reference to the ninth aspect, in some implementations of the ninth aspect, the CSI-RS resource further includes a first periodicity and an offset parameter, where the first periodicity and the offset parameter indicate a first time domain resource; and the method further includes: determining the third information in an SBFD time unit of the first time domain resource based on the first signal and the first CSI-RS sub-resource; and determining the fourth information in a non-SBFD time unit of the first time domain resource based on the first signal and the second CSI-RS sub-resource.

With reference to the ninth aspect, in some implementations of the ninth aspect, the method further includes: sending the first signal in the SBFD time unit of the first time domain resource based on the first CSI-RS sub-resource; and sending the first signal in the non-SBFD time unit of the first time domain resource based on the second CSI-RS sub-resource.

With reference to the ninth aspect, in some implementations of the ninth aspect, the second time domain resource includes only the SBFD time unit, and the third time domain resource includes only the non-SBFD time unit.

With reference to the ninth aspect, in some implementations of the ninth aspect, the method further includes: sending the first signal in the SBFD time unit of the second time domain resource based on the first CSI-RS sub-resource; and sending the first signal in the non-SBFD time unit of the third time domain resource based on the second CSI-RS sub-resource.

With reference to the ninth aspect, in some implementations of the ninth aspect, the first CSI-RS sub-resource includes one or more of the following: an identifier of the first CSI-RS sub-resource, a first power control offset, a second power control offset, a first resource mapping pattern, or first QCL information. The second CSI-RS sub-resource includes one or more of the following: an identifier of the second CSI-RS sub-resource, a third power control offset, a fourth power control offset, a second resource mapping pattern, or second QCL information.

With reference to the ninth aspect, in some implementations of the ninth aspect, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource; and the method further includes: determining the third information in an SBFD time unit of the second time domain resource based on the first CSI-RS sub-resource and the first signal; and determining the fourth information in a non-SBFD time unit of the third time domain resource based on the second CSI-RS sub-resource and the first signal.

With reference to the ninth aspect, in some implementations of the ninth aspect, the first CSI-RS sub-resource is an SBFD-specific CSI-RS sub-resource, and the second CSI-RS subresource is a non-SBFD-specific CSI-RS sub-resource.

With reference to the ninth aspect, in some implementations of the ninth aspect, a port quantity of the first CSI-RS sub-resource is the same as a port quantity of the second CSI-RS subresource, and a CDM type of the first CSI-RS sub-resource is the same as a CDM type of the second CSI-RS sub-resource.

With reference to the ninth aspect, in some implementations of the ninth aspect, the first CSI reporting sub-setting further includes fifth information, where the fifth information indicates a first port or a first CDM group; and sending the first signal based on the CSI-RS resource includes: sending the first signal based on the first port and the first CSI-RS sub-resource, or sending the first signal based on the first CDM group and the first CSI-RS sub-resource.

With reference to the ninth aspect, in some implementations of the ninth aspect, the second CSI reporting sub-setting further includes sixth information, where the sixth information indicates a second port or a second CDM group, and sending the first signal based on the CSI-RS resource includes: sending the first signal based on the second port and the second CSI-RS subresource, or sending the first signal based on the second CDM group and the second CSI-RS subresource.

With reference to the ninth aspect, in some implementations of the ninth aspect, a port quantity of the first CSI-RS sub-resource is different from a port quantity of the second CSI-RS sub-resource, and a CDM type of the first CSI-RS sub-resource is different from a CDM type of the second CSI-RS sub-resource.

With reference to the ninth aspect, in some implementations of the ninth aspect, the first CSI reporting sub-setting includes an identifier of the first CSI-RS sub-resource, the second CSI reporting sub-setting includes an identifier of the second CSI-RS sub-resource, the identifier of the first CSI-RS sub-resource indicates the first CSI-RS sub-resource, and the identifier of the second CSI-RS sub-resource indicates the second CSI-RS sub-resource.

With reference to the ninth aspect, in some implementations of the ninth aspect, the first CSI reporting sub-setting is an SBFD-specific CSI reporting sub-setting, and the second CSI reporting sub-setting is a non-SBFD-specific CSI reporting sub-setting.

With reference to the ninth aspect, in some implementations of the ninth aspect, the first CSI reporting sub-setting includes first indication information, and the second CSI reporting sub-setting includes second indication information, where the first indication information indicates that a first measurement result is to be reported via a resource indicated by the first CSI reporting sub-setting, the first measurement result includes a result obtained by measurement on the first CSI-RS sub-resource, the second indication information indicates that a second measurement result is to be reported via a resource indicated by the second CSI reporting sub-setting, and the second measurement result includes a result obtained by measurement on the second CSI-RS subresource.

For beneficial effects of the ninth aspect and some implementations of the ninth aspect, correspondingly refer to descriptions of the fourth aspect and related implementations of the fourth aspect. Details are not described herein again.

According to a tenth aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a CU or a DU in the network device, or a functional module that can invoke and execute a program in the network device.

The method includes: sending first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information is CSI in an SBFD time unit, and the fourth information is CSI in a non-SBFD time unit; sending second information, where the second information indicates a CSI-RS resource, the CSI-RS resource is for sending a first signal, and the first signal is for determining the third information and the fourth information; sending the first signal based on the CSI-RS resource; and receiving the third information and the fourth information based on the CSI reporting setting, where the third information and the fourth information are carried on a first PUCCH or a first PUSCH.

According to the solution provided in this application, the first CSI reporting sub-setting and the second CSI reporting sub-setting (for example, CSI-ReportSubConfig) are introduced. The first CSI reporting sub-setting and the second CSI reporting sub-setting are associated with a same CSI-RS resource. To be specific, the CSI-RS resource is for sending the first signal in the SBFD time unit and the non-SBFD time unit. The third information and the fourth information are separately received at a same moment by using reporting resources indicated by the first CSI reporting sub-setting and the second CSI reporting setting in the same CSI reporting setting. In this way, CSI-RSs are received and sent and CSI measurement is performed in an SBFD time unit and a non-SBFD time unit, without increasing a quantity of CSI reporting settings (for example, CSI-ReportConfig) and a quantity of CSI-RS resources (for example, NZP-CSI-RS-Resource), thereby improving flexibility of CSI measurement and reporting in the SBFD time unit and the non-SBFD time unit.

With reference to the tenth aspect, in some implementations of the tenth aspect, the CSI-RS resource includes a first periodicity and an offset parameter, where the first periodicity and the offset parameter indicate a first time domain resource; and the method further includes: determining the third information in an SBFD time unit of the first time domain resource based on the first signal; and determining the fourth information in a non-SBFD time unit of the first time domain resource based on the first signal.

With reference to the tenth aspect, in some implementations of the tenth aspect, the first CSI reporting sub-setting further includes fifth information, where the fifth information indicates a first port or a first CDM group; and sending the first signal based on the CSI-RS resource includes: sending the first signal based on the first port and the CSI-RS resource, or sending the first signal based on the first CDM group and the first CSI-RS resource.

With reference to the tenth aspect, in some implementations of the tenth aspect, the first CSI reporting sub-setting further includes sixth information, where the sixth information indicates the first port or the first CDM group; and determining the third information based on the first signal includes: determining the third information based on the first signal, the first CSI-RS resource, and the first port, or determining the third information based on the first signal, the CSI-RS resource, and the first CDM group.

With reference to the tenth aspect, in some implementations of the tenth aspect, the second CSI reporting sub-setting further includes seventh information, where the seventh information indicates a second port or a second CDM group; and receiving the first signal based on the CSI-RS resource includes: receiving the second signal based on the second port and the CSI-RS resource, or receiving the first signal based on the second CDM group and the CSI-RS resource.

With reference to the tenth aspect, in some implementations of the tenth aspect, the second CSI reporting sub-setting further includes eighth information, where the eighth information indicates a second port or a second CDM group; and determining the fourth information based on the first signal includes: determining the fourth information based on the first signal, the CSI-RS resource, and the second port, or determining the fourth information based on the first signal, the CSI-RS resource, and the second CDM group.

For beneficial effects of the tenth aspect and some implementations of the tenth aspect, correspondingly refer to descriptions of the fifth aspect and related implementations of the fifth aspect. Details are not described herein again.

According to an eleventh aspect, a communication apparatus is provided. The communication apparatus includes: a transceiver unit, configured to receive first information, where the first information indicates a first CSI reporting setting and a second CSI reporting setting, the first CSI reporting setting is for reporting third information, the second CSI reporting setting is for reporting fourth information, the third information includes CSI in an SBFD time unit, and the fourth information includes CSI in a non-SBFD time unit. The transceiver unit is further configured to receive second information, where the second information indicates a CSI-RS resource, the CSI-RS resource is for receiving a first signal, the CSI-RS resource includes a first CSI-RS sub-resource and a second CSI-RS sub-resource, the first signal and the first CSI-RS subresource are for determining the third information, and the first signal and the second CSI-RS subresource are for determining the fourth information. The transceiver unit is further configured to receive the first signal based on the CSI-RS resource. The transceiver unit is further configured to send the third information based on the first CSI reporting setting, where the third information is carried on a first PUCCH or a first PUSCH. The transceiver unit is further configured to send the fourth information based on the second CSI reporting setting, where the fourth information is carried on a second PUCCH or a second PUSCH.

The transceiver unit may perform receiving and sending in the first aspect, and a processing unit may perform processing other than receiving and sending in the first aspect.

According to a twelfth aspect, a communication apparatus is provided. The communication apparatus includes: a transceiver unit, configured to receive first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information includes CSI in a non-SBFD time unit. The transceiver unit is further configured to receive second information, where the second information indicates a first CSI-RS resource and a second CSI-RS resource, the first CSI-RS resource is for receiving a first signal, the second CSI-RS resource is for receiving a second signal, the first signal is for determining the third information, and the second signal is for determining the fourth information. The transceiver unit is further configured to receive the first signal based on the first CSI-RS resource. The transceiver unit is further configured to receive the second signal based on the second CSI-RS resource. The transceiver unit is further configured to send the third information and the fourth information based on the CSI reporting setting, where the third information and the fourth information are carried on a first PUCCH or a first PUSCH.

The transceiver unit may perform receiving and sending in the second aspect, and a processing unit may perform processing other than receiving and sending in the second aspect.

According to a thirteenth aspect, a communication apparatus is provided. The communication apparatus includes: a transceiver unit, configured to receive first information, where the first information indicates a first CSI reporting setting and a second CSI reporting setting, the first CSI reporting setting is for reporting third information, the second CSI reporting setting is for reporting fourth information, the third information is CSI in an SBFD time unit, and the fourth information is CSI in a non-SBFD time unit. The transceiver unit is further configured to receive second information, where the second information indicates a first CSI-RS resource and a second CSI-RS resource, the first CSI-RS resource is for receiving a first signal, the second CSI-RS resource is for receiving a second signal, the first signal is for determining the third information, and the second signal is for determining the fourth information. The transceiver unit is further configured to receive the first signal based on the first CSI-RS resource. The transceiver unit is further configured to receive the second signal based on the second CSI-RS resource. The transceiver unit is further configured to send the third information based on the first CSI reporting setting. The transceiver unit is further configured to send the fourth information based on the second CSI reporting setting, where the third information is carried on a first PUCCH or a first PUSCH, and the fourth information is carried on a second PUCCH or a second PUSCH.

The transceiver unit may perform receiving and sending in the third aspect, and a processing unit may perform processing other than receiving and sending in the third aspect.

According to a fourteenth aspect, a communication apparatus is provided. The communication apparatus includes: a transceiver unit, configured to receive first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information is CSI in a non-SBFD time unit. The transceiver unit is further configured to receive second information, where the second information indicates a CSI-RS resource, the CSI-RS resource is for receiving a first signal, the CSI-RS resource includes a first CSI-RS sub-resource and a second CSI-RS sub-resource, the first signal and the first CSI-RS sub-resource are for determining the third information, and the first signal and the second CSI-RS sub-resource are for determining the fourth information. The transceiver unit is further configured to receive the first signal based on the CSI-RS resource. The transceiver unit is further configured to send the third information and the fourth information based on the CSI reporting setting, where the third information and the fourth information are carried on a first PUCCH or a first PUSCH.

The transceiver unit may perform receiving and sending in the fourth aspect, and a processing unit may perform processing other than receiving and sending in the fourth aspect.

According to a fifteenth aspect, a communication apparatus is provided. The communication apparatus includes: a transceiver unit, configured to receive first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information is CSI in a non-SBFD time unit. The transceiver unit is further configured to receive second information, where the second information indicates a CSI-RS resource, the CSI-RS resource is for receiving a first signal, and the first signal is for determining the third information and the fourth information. The transceiver unit is further configured to receive the first signal based on the CSI-RS resource. The transceiver unit is further configured to send the third information and the fourth information based on the CSI reporting setting, where the third information and the fourth information are carried on a first PUCCH or a first PUSCH.

The transceiver unit may perform receiving and sending in the fifth aspect, and a processing unit may perform processing other than receiving and sending in the fifth aspect.

According to a sixteenth aspect, a communication apparatus is provided. The communication apparatus includes: a transceiver unit, configured to send first information, where the first information indicates a first CSI reporting setting and a second CSI reporting setting, the first CSI reporting setting is for reporting third information, the second CSI reporting setting is for reporting fourth information, the third information includes CSI in an SBFD time unit, and the fourth information includes CSI in a non-SBFD time unit. The transceiver unit is further configured to send second information, where the second information indicates a CSI-RS resource, the CSI-RS resource is for sending a first signal, the CSI-RS resource includes a first CSI-RS subresource and a second CSI-RS sub-resource, the first signal and the first CSI-RS sub-resource are for determining the third information, and the first signal and the second CSI-RS sub-resource are for determining the fourth information. The transceiver unit is further configured to send the first signal based on the CSI-RS resource. The transceiver unit is further configured to receive the third information based on the first CSI reporting setting, where the third information is carried on a first PUCCH or a first PUSCH. The transceiver unit is further configured to receive the fourth information based on the second CSI reporting setting, where the fourth information is carried on a second PUCCH or a second PUSCH.

The transceiver unit may perform receiving and sending in the sixth aspect, and a processing unit may perform processing other than receiving and sending in the sixth aspect.

According to a seventeenth aspect, a communication apparatus is provided. The communication apparatus includes: a transceiver unit, configured to send first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information includes CSI in a non-SBFD time unit. The transceiver unit is further configured to send second information, where the second information indicates a first CSI-RS resource and a second CSI-RS resource, the first CSI-RS resource is for sending a first signal, the second CSI-RS resource is for sending a second signal, the first signal is for determining the third information, and the second signal is for determining the fourth information. The transceiver unit is further configured to send the first signal based on the first CSI-RS resource. The transceiver unit is further configured to send the second signal based on the second CSI-RS resource. The transceiver unit is further configured to receive the third information and the fourth information based on the CSI reporting setting, where the third information and the fourth information are carried on a first PUCCH or a first PUSCH.

The transceiver unit may perform receiving and sending in the seventh aspect, and a processing unit may perform processing other than receiving and sending in the seventh aspect.

According to an eighteenth aspect, a communication apparatus is provided. The communication apparatus includes: a transceiver unit, configured to send first information, where the first information indicates a first CSI reporting setting and a second CSI reporting setting, the first CSI reporting setting is for reporting third information, the second CSI reporting setting is for reporting fourth information, the third information is CSI in an SBFD time unit, and the fourth information is CSI in a non-SBFD time unit. The transceiver unit is further configured to send second information, where the second information indicates a first CSI-RS resource and a second CSI-RS resource, the first CSI-RS resource is for sending a first signal, the second CSI-RS resource is for sending a second signal, the first signal is for determining the third information, and the second signal is for determining the fourth information. The transceiver unit is further configured to send the first signal based on the first CSI-RS resource. The transceiver unit is further configured to send the second signal based on the second CSI-RS resource. The transceiver unit is further configured to receive the third information based on the first CSI reporting setting; and receive the fourth information based on the second CSI reporting setting, where the third information is carried on a first PUCCH or a first PUSCH, and the fourth information is carried on a second PUCCH or a second PUSCH.

The transceiver unit may perform receiving and sending in the eighth aspect, and a processing unit may perform processing other than receiving and sending in the eighth aspect.

According to a nineteenth aspect, a communication apparatus is provided. The communication apparatus includes: a transceiver unit, configured to send first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information is CSI in a non-SBFD time unit. The transceiver unit is further configured to send second information, where the second information indicates a CSI-RS resource, the CSI-RS resource is for sending a first signal, the CSI-RS resource includes a first CSI-RS sub-resource and a second CSI-RS sub-resource, the first signal and the first CSI-RS sub-resource are for determining the third information, and the first signal and the second CSI-RS sub-resource are for determining the fourth information. The transceiver unit is further configured to send the first signal based on the CSI-RS resource. The transceiver unit is further configured to receive the third information and the fourth information based on the CSI reporting setting, where the third information and the fourth information are carried on a first PUCCH or a first PUSCH.

The transceiver unit may perform receiving and sending in the ninth aspect, and a processing unit may perform processing other than receiving and sending in the ninth aspect.

According to a twentieth aspect, a communication apparatus is provided. The communication apparatus includes: a transceiver unit, configured to send first information, where the first information indicates a CSI reporting setting, the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information is CSI in a non-SBFD time unit. The transceiver unit is further configured to send second information, where the second information indicates a CSI-RS resource, the CSI-RS resource is for sending a first signal, and the first signal is for determining the third information and the fourth information. The transceiver unit is further configured to send the first signal based on the CSI-RS resource. The transceiver unit is further configured to receive the third information and the fourth information based on the CSI reporting setting, where the third information and the fourth information are carried on a first PUCCH or a first PUSCH.

The transceiver unit may perform receiving and sending in the tenth aspect, and a processing unit may perform processing other than receiving and sending in the tenth aspect.

According to a twenty-first aspect, a communication apparatus is provided. The communication apparatus includes: a transceiver, a processor, and a memory. The processor is configured to control the transceiver to receive or send a signal. The memory is configured to store a computer program. The processor is configured to invoke the computer program from the memory and run the computer program, to cause the communication apparatus to perform the method according to any one of the possible implementations of the first aspect to the tenth aspect.

Optionally, there are one or more processors, and there are one or more memories.

Optionally, the memory and the processor may be integrated together, or the memory and the processor may be separately disposed.

Optionally, the communication apparatus further includes a transmitter machine (transmitter) and a receiver machine (receiver).

According to a twenty-second aspect, a communication system is provided. The communication system includes a sending device and a receiving device. The sending device is configured to perform the method according to any one of the possible implementations of the first aspect to the fifth aspect, and the receiving device is configured to perform the method according to any one of the possible implementations of the sixth aspect to the tenth aspect.

For example, the sending device may be a terminal device, a chip or a circuit in the terminal device, or a functional module that can invoke and execute a program in the terminal device.

For example, the receiving device may be a network device, a chip or a circuit in the network device, a CU or a DU in the network device, or a functional module that can invoke and execute a program in the network device.

According to a twenty-third aspect, a computer program is provided. When the computer program is run, the method according to any one of the possible implementations of the first aspect to the tenth aspect is performed.

According to a twenty-fourth aspect, a computer-readable storage medium is provided. The computer-readable storage medium stores a computer program or code; and when the computer program or the code is run, the method according to any one of the possible implementations of the first aspect to the tenth aspect is performed.

According to a twenty-fifth aspect, a chip is provided. The chip includes at least one processor. The at least one processor is coupled to a memory. The memory is configured to store a computer program. The processor is configured to: invoke the computer program from the memory, and run the computer program, so that a communication apparatus on which the chip system is installed performs the method according to any one of the possible implementations of the first aspect to the tenth aspect.

The chip may include an input circuit or interface configured to send information or data and an output circuit or interface configured to receive information or data.

According to a twenty-sixth aspect, a computer program product is provided. The computer program product includes computer program code; and when the computer program code is run the method according to any one of the possible implementations of the first aspect to the tenth aspect is performed.

According to a twenty-seventh aspect, a computer program is provided. When the computer program is run, the method according to any one of the possible implementations of the first aspect to the tenth aspect is performed.

### BRIEF DESCRIPTION OF DRAWINGS

FIG. 1 is a diagram of a communication system according to an embodiment of this application;
FIG. 2 is a diagram of time-frequency division of SBFD;
FIG. 3a to FIG. 3c are diagrams of SBFD-specific uplink and downlink slot configurations;
FIG. 4 is a schematic flowchart of a communication method according to this application;
FIG. 5 is a schematic flowchart of a communication method according to this application;
FIG. 6 is a schematic flowchart of a communication method according to this application;
FIG. 7 is a schematic flowchart of a communication method according to this application;
FIG. 8 is a schematic flowchart of a communication method according to this application;
FIG. 9 is a block diagram of a communication apparatus according to an embodiment of this application; and
FIG. 10 is a block diagram of a communication apparatus according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR) and a future communication system, and vehicle-to-X (vehicle-to-X V2X), where V2X may include vehicle-to-network (vehicle-to-network, V2N), vehicle to vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

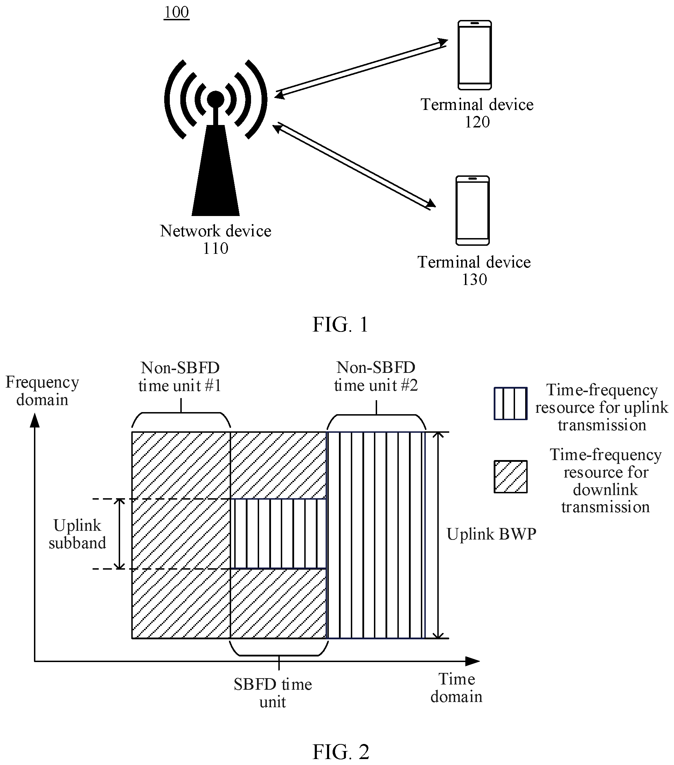

FIG. 1 is a diagram of a communication system according to an embodiment of this application. As shown in FIG. 1, the communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link to exchange information. It may be understood that the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central unit, CU), one or more distributed units (distributed unit, DU), or one or more radio units (radio unit, RU). In different systems, the CU (or the CU-CP and the CU-UP), the DU, or the RU may alternatively have different names, but a person skilled in the art may understand meanings thereof. For example, the radio access network may also be of an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, the apparatus configured to implement a function of the network device may be the network device, or may be an apparatus that can support the network device in implementing the function, for example, a chip system or a combined component or part that can implement a function of the access network device. The apparatus may be installed in the network device. In this embodiment of this application, the chip system may include a chip, or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC), internet of things, virtual reality (virtual reality, VR), augmented reality (augmented reality, AR), industrial control (industrial control), autonomous driving (autonomous driving), telemedicine (telemedicine), smart grids (smart grid), smart furniture, smart offices, smart wearables, smart transportation, smart cities (smart city), uncrewed aerial vehicles, and robots. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in an IoT system. IoT is an important part in future development of the information technology. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology. In embodiments of this application, an apparatus configured to implement a function of the terminal device may be the terminal device, or may be an apparatus that supports the terminal device in implementing the function, for example, a chip system or a combined component or part that can implement a function of the terminal device. The apparatus may be installed in the terminal device.

The network device and the terminal device may be deployed on land, including being deployed indoors or outdoors, or in a handheld manner or a vehicle-mounted manner; may be deployed on water; or may be deployed on an airplane, a balloon, and a satellite in the air. Scenarios in which the network device and the terminal device are located are not limited in embodiments of this application.

For example, the communication system 100 may further include an application function (application function, AF) network element. The AF network element is a control plane network function provided by a carrier network, and is configured to provide application layer information. The communication system 100 may further include a session management function (session management function, SMF) network element. The SMF is a control plane network function provided by the carrier network. In embodiments of this application, when the communication system 100 includes the AF network element and the SMF network element, the AF may send service-related information to the network device via the SMF.

For ease of understanding of embodiments of this application, terms or technologies in this application are briefly described first.

### 1. TDD

TDD divides time domain resources into uplink and downlink resources. For example, a possible TDD uplink/downlink configuration is DDDSU, where D represents a downlink slot, each symbol in the downlink slot is a downlink symbol, U represents an uplink slot, each symbol in the uplink slot is an uplink symbol, S is a special slot, and the special slot includes at least a flexible symbol. Limited allocation of uplink time domain resources results in a reduction in uplink coverage and an increase in a delay in TDD.

### 2. SBFD

In the SBFD solution, one carrier is divided into a plurality of overlapping or non-overlapping subbands, and transmission directions of different subbands may be different. In other words, one carrier includes a first subband and a second subband that do not overlap, and transmission directions of the first subband and the second subband are different. It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.

In this application, the SBFD includes subband overlapping full duplex (subband overlapping full duplex) and subband non-overlapping full duplex (subband non-overlapping full duplex).

### 3. Subband

The subband is a part of a frequency band in a carrier, that is, one or more contiguous physical resource blocks (physical resource block, PRB) in frequency domain. In this application, a subband used for uplink transmission is referred to as an uplink subband, and a subband used for downlink transmission is referred to as a downlink subband. The subband may also be understood as a frequency resource. Currently, a base station supports FD SBFD, to be specific, the base station can perform sending on an uplink subband and performing receiving on a downlink subband in one slot. A terminal device supports only half duplex (Half duplex, HF) SBFD, to be specific, the terminal device can only perform sending on an uplink subband or only perform receiving on a downlink subband in one slot.

### 4. SBFD time unit

Frequency resources in the SBFD time unit include an uplink frequency resource and a downlink frequency resource, where the uplink frequency resource is used for uplink transmission, and the downlink frequency resource is used for downlink transmission. It may be understood that the SBFD time unit includes subbands used for uplink transmission and downlink transmission, and the gNB may perform an SBFD operation by using the subbands in the SBFD time unit. In embodiments of this application, when the time unit is a symbol, the SBFD time unit is an SBFD symbol. When the time unit is a slot, a subframe, a half frame, a frame, a mini-subframe, a mini-slot, or a transmission occasion (transmission occasion, TO), the SBFD time unit may be a time unit including an SBFD symbol.

### 5. Non-SBFD time unit

A frequency resource corresponding to each of all symbols included in the non-SBFD time unit is used only for downlink transmission or used only for uplink transmission. In embodiments of this application, when a time unit is a symbol, the non-SBFD time unit is a non-SBFD symbol. When the time unit is a slot, a subframe, a half-frame, a frame, a mini-subframe, a mini-slot, or a TO, the non-SBFD time unit may be a time unit that does not include an SBFD symbol. For example, all the symbols in the non-SBFD time unit are downlink symbols; all the symbols in the non-SBFD time unit are uplink symbols; all the symbols in the non-SBFD time unit are flexible symbols; in the non-full duplex time unit, some symbols are downlink symbols, and some symbols are uplink symbols; in the non-full duplex time unit, some symbols are downlink symbols, some symbols are uplink symbols, and some symbols are flexible symbols; in the non-full duplex time unit, some symbols are downlink symbols, and some symbols are flexible symbols; or in the non-full duplex time unit, some symbols are uplink symbols, and some symbols are flexible symbols. For example, a rectangular block filled with right slashes in FIG. 2 represents a group of time-frequency resources used for uplink transmission, and slots in a time domain range occupied by the time-frequency resources are referred to as uplink time units. Transmission directions of all frequency resources in these time units are uplink, and these time units may be referred to as non-SBFD time units.

FIG. 2 is a diagram of time-frequency division in an SBFD solution. A horizontal axis represents time domain, and a vertical axis represents frequency domain. In FIG. 2, a rectangle filled with left slashes represents a group of time-frequency resources used for downlink transmission, and a rectangle filled with vertical bars represents a group of time-frequency resources used for communication. A frequency resource in an SBFD time unit includes an uplink subband and a downlink subband. A non-SBFD time unit #1 may be a downlink symbol or a flexible symbol. A non-SBFD time unit #2 may be an uplink symbol or a flexible symbol.

### 6. SBFD-specific uplink and downlink slot configurations

Based on different configurations of an uplink subband and a downlink subband in a slot, for example, SBFD-specific uplink and downlink slot configurations may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with at least one uplink subband and at least one downlink subband.

It should be understood that quantities of X in XXXXX, XXXXU, and DXXXU are merely examples for description, and the quantities of X may be configured by a network device based on an actual situation. In addition, XXXXX, XXXXU, and DXXXU may be configured based on cell-level uplink and downlink slot configuration signaling and the UE-level uplink and downlink slot configuration signaling.

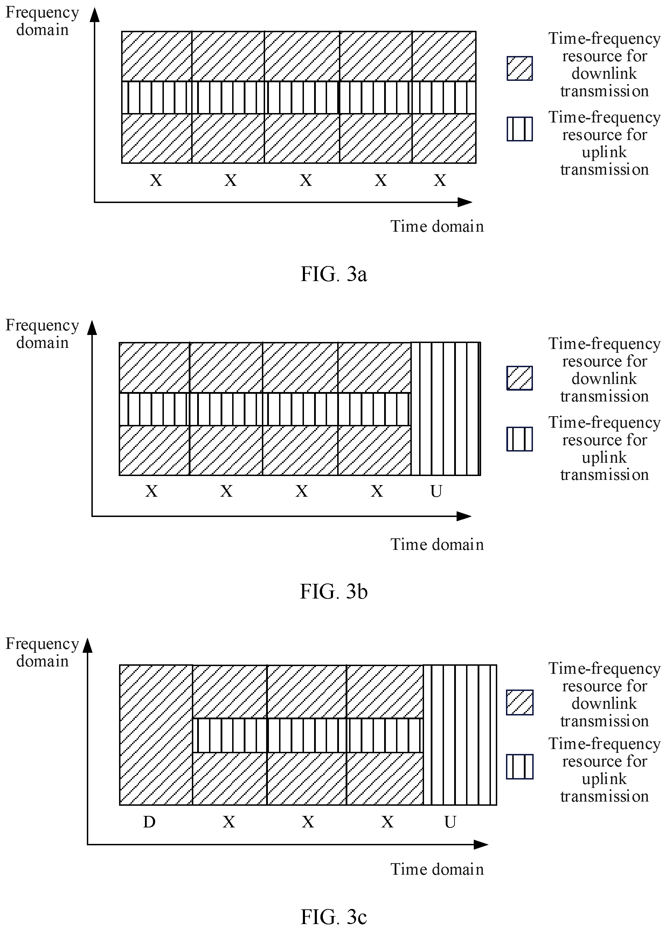

FIG. 3a to FIG. 3c are diagrams of SBFD-specific uplink and downlink slot configurations. For example, FIG. 3a is a possible example of XXXXX, FIG. 3b is a possible example of XXXXU, and FIG. 3c is a possible example of DXXXU. In this configuration method, uplink and downlink subbands configured on flexible symbols are invisible to UE. In other words, the UE does not know frequency resource locations of the uplink and downlink subbands. In this case, if the UE determines to perform downlink transmission on a flexible symbol, a gNB needs to ensure that the UE is indicated to perform downlink reception only on a downlink subband configured for the flexible symbol. If the UE determines to perform uplink transmission on a flexible symbol, the gNB needs to ensure that the UE is indicated to perform uplink transmission only on an uplink subband configured for the flexible symbol.

### 7. Channel state information CSI

In a process in which a wireless signal travels from a transmitter to a receiver through a wireless channel, fading may occur due to possible scattering, reflection, and attenuation of energy with distance. In addition, the wireless signal may also be interfered by another signal at the receiver, affecting reception of the wireless signal. Characteristics such as signal attenuation and interference may be represented by using CSI. Specifically, the CSI may include at least one of a CSI-RS resource indicator (CSI-RS resource indicator, CRI), a rank indicator RI, a precoding matrix indicator PMI, a channel quality indicator (channel quantity indicator, CQI), a synchronization signal and physical broadcast channel block (synchronization signal and physical broadcast channel block, SSB) resource indicator (SSB resource indicator, SSBRI), a layer indicator (layer indicator, LI), L1-reference signal received power (reference signal received power, RSRP), and L1-signal to interference plus noise ratio (signal to interference plus noise ratio, SINR). The CSI may be sent by a terminal to a base station through a PUCCH or a PUSCH.

### 8. Code division multiplexing CDM type and CDM group

As shown in the following Table 1, the CDM type is indicated by a field cdm-Type in an RRC information element CSI-RS-ResourceMapping. Table 2 to Table 5 show diagrams of sequences corresponding to CDM types 'noCDM', 'noCDM2', 'cdm4-FD2-TD2' and 'cdm8-FD2-TD4', where *k'* and *w*_{f}(*k'*) indicate a frequency domain orthogonal cover code (orthogonal cover code, OCC) used for one CDM group, and *l'* and *w*ₜ(*l*') indicate a time domain OCC used for one CDM group.

**Table 1 CSI-RS locations within a slot (locations within a slot)**

| Row (Row) | Ports *X* | Density (density) *ρ* | CDM type (cdm-Type) | (*k̅,l̅*) | CDM group index (CDM group index) *j* | *k'* | *l'* |
|---|---|---|---|---|---|---|---|
| 1 | 1 | 3 | noCDM | (*k*₀*, l*₀)*,* (*k*₀ *+* 4, *l*₀)*,* (*k*₀ + 8,*l*₀) | 0, 0, 0 | 0 | 0 |
| 2 | 1 | 1, 0.5 | noCDM | (*k*₀*, l*₀) | 0 | 0 | 0 |
| 3 | 2 | 1, 0.5 | fd-CDM2 | (*k*₀*, l*₀) | 0 | 0, 1 | 0 |
| 4 | 4 | 1 | fd-CDM2 | (*k*₀*, l*₀)*,* (*k*₀ + 2, *l*₀) | 0, 1 | 0, 1 | 0 |
| 5 | 4 | 1 | fd-CDM2 | (*k*₀*, l*₀)*,* (*k*₀*, l*₀ + 1) | 0, 1 | 0, 1 | 0 |
| 6 | 8 | 1 | fd-CDM2 | (*k*₀*, l*₀)*,* (*k*₁*, l*₀)*,* (*k*₂, *l*₀)*,* (*k*₃, *l*₀) | 0, 1, 2, 3 | 0, 1 | 0 |
| 7 | 8 | 1 | fd-CDM2 | (*kₒ, l*₀)*,* (*k*₁*, l*₀)*,* (*k*₀*, l*₀ + 1), (*k*₁*, l*₀ + 1) | 0, 1, 2, 3 | 0, 1 | 0 |
| 8 | 8 | 1 | cdm4-FD2-TD2 | (*k*₀*, l*₀)*,* (*k₁*, *l*₀) | 0, 1 | 0, 1 | 0, 1 |
| 9 | 12 | 1 | fd-CDM2 | (*kₒ, l*₀)*,* (*k*₁*, l*₀)*,* (*k*₂, *l*₀)*,* (*k*₃, *l*₀)*,* (*k*₄*, l*₀)*,* (*k*₅, *l*₀) | 0, 1, 2, 3, 4, 5 | 0, 1 | 0 |
| 10 | 12 | 1 | cdm4-FD2-TD2 | (*kₒ, l*₀)*,* (*k*₁*, l*₀)*,* (*k*₂, *l*₀) | 0, 1, 2 | 0, 1 | 0, 1 |
| 11 | 16 | 1, 0.5 | fd-CDM2 | (*kₒ, l*₀)*,* (*k*₁*, l*₀)*,* (*k*₂, *l*₀)*,* (*k*₃, *l*₀)*,* (*k*₀*, l*₀ *+* 1), (*k*₁*, l*₀ + 1), (*k*₂, *l*₀ *+* 1)*,* (*k*₃, *l*₀ *+* 1) | 0, 1, 2, 3, 4, 5, 6, 7 | 0, 1 | 0 |
| 12 | 16 | 1, 0.5 | cdm4-FD2-TD2 | (*kₒ, l*₀)*,* (*k*₁*, l*₀)*,* (*k*₂, *l*₀)*,* (*k*₃, *l*₀) | 0, 1, 2, 3 | 0, 1 | 0, 1 |
| 13 | 24 | 1, 0.5 | fd-CDM2 | (*k*₀*, l*₀)*,* (*k*₁*, l*₀)*,* (*k*₂, *l*₀)*,* (*k*₀*, l*₀ + 1), (*k*₁*, l*₀ + 1)*,* (*k*₂, *l*₀ *+* 1), (*k*₀*, l*₁), (*k*₁, *l*₁)*,* (*k*₂, *l*₁), (*k*₀*, l*₁ + 1), (*k*₁*, l*₁ + 1)*,* (*k*₂, *l*₁ *+* 1) | 0, 1, 2, 3, 4, 5, 6, 7, 8, 9, 10, 11 | 0, 1 | 0 |
| 14 | 24 | 1, 0.5 | cdm4-FD2-TD2 | (*k*₀*, l*₀)*,* (*k*₁*, l*₀)*,* (*k*₂, *l*₀)*,* (*k*₀*, l*₁)*,* (*k*₁*, l*₁)*,* (*k*₂, *l*₁) | 0, 1, 2, 3, 4, 5 | 0, 1 | 0, 1 |
| 15 | 24 | 1, 0.5 | cdm8-FD2-TD4 | (*kₒ, l*₀)*,* (*k*₁*, l*₀)*,* (*k*₂, *l*₀) | 0, 1, 2 | 0, 1 | 0, 1, 2, 3 |
| 16 | 32 | 1, 0.5 | fd-CDM2 | (*k*₀*, l*₀)*,* (*k*₁*, l*₀)*,* (*k*₂*, l*₀)*,* (*k*₃, *l*₀)*,* (*k*₀*, l*₀ *+* 1)*,* (*k*₁*, l*₀ + 1), (*k*₂*, l*₀ + 1)*,* (*k*₃, *l*₀ + 1)*,* (*k*₀*, l*₁), (*k*₁*, l*₁)*,* (*k*₂*, l*₁)*,* (*k*₃, *l*₁), (*k*₀*, l*₁ + 1)*,* (*k*₁*, l*₁ + 1)*,* (*k*₂, *l*₁ *+* 1), (*k*₃, *l*₁ + 1) | 0, 1, 2, 3, 4, 5, 6, 7, 8, 9, 10, 11, 12, 13, 14, 15 | 0, 1 | 0 |
| 17 | 32 | 1, 0.5 | cdm4-FD2-TD2 | (*kₒ, l*₀)*,* (*k*₁*, l*₀)*,* (*k*₂*, l*₀)*,* (*k*₃, *l*₀)*,* (*k*₀*, l*₁)*,* (*k*₁*, l*₁)*,* (*k*₂, *l*₁)*,* (*k*₃, *l*₁) | 0, 1, 2, 3, 4, 5, 6, 7 | 0, 1 | 0, 1 |
| 18 | 32 | 1, 0.5 | cdm8-FD2-TD4 | (*k*₀*, l*₀)*,* (*k*₁*, l*₀)*,* (*k*₂*, l*₀)*,* (*k*₃, *l*₀) | 0, 1, 2, 3 | 0, 1 | 0, 1, 2, 3 |

**Table 2 Sequences w_{f}(k') and wₜ(l') corresponding to a CDM type 'noCDM'**

| Index (index) | w_{f}(0) | wₜ(0) |
|---|---|---|
| 0 | 1 | 1 |

**Table 3 Sequences w_{f}(k') and wₜ(l') corresponding to a CDM type 'fd-CDM2'**

| Index (index) | [w_{f}(0) w_{f}(1)] | wₜ(0) |
|---|---|---|
| 0 | [+1 +1] | 1 |
| 1 | [+1 -1] | 1 |

**Table 4 Sequences w_{f}(k') and wₜ(l') corresponding to a CDM type 'cdm4-FD2-TD2'**

| Index (index) | [w_{f}(0) w_{f}(1)] | [wₜ(0) wₜ(1)] |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

**Table 5: Sequences w_{f}(k') and wₜ(l') corresponding to a CDM type 'cdm8-FD2-TD4'**

| Index (index) | [w_{f}(0) w_{f}(1)] | [wₜ(0) wₜ(1) wₜ(2) wₜ(3)] |
|---|---|---|
| 0 | [+1 +1] | [+1 +1 +1 +1] |
| 1 | [+1 -1] | [+1 +1 +1 +1] |
| 2 | [+1 +1] | [+1 -1 +1 -1] |
| 3 | [+1 -1] | [+1 -1 +1 -1] |
| 4 | [+1 +1] | [+1 +1 -1 -1] |
| 5 | [+1 -1] | [+1 +1 -1 -1] |
| 6 | [+1 +1] | [+1 -1 -1 +1] |
| 7 | [+1 -1] | [+1 -1 -1 +1] |

### 9. Antenna configuration on the base station side

TDD antenna configuration on the base station side: The TDD base station side shares one antenna panel for both transmission and reception. It is assumed that a total quantity of antenna elements is L, and quantities of TxRUs (transceiver unit) for transmission and reception are both K. For example, in an uplink time unit, K transmit TxRUs are connected to an antenna panel; and in a downlink time unit, K receive TxRUs are connected to the antenna panel. In conclusion, a quantity of TxRUs for transmission and reception and a quantity of antenna elements are consistent.

SBFD antenna configurations on the base station side are classified into two types.

The first-type SBFD antenna configuration on the base station side includes two antenna panel groups, each antenna panel group includes L antenna elements, and quantities of TxRUs for transmission and reception are both K. In a downlink time unit, only K transmitting TxRUs are connected to one of the antenna panel groups. In an uplink time unit, only K receiving TxRUs are connected to the other antenna panel group. In an SBFD time unit, K transmitting TxRUs are connected to one of the antenna panel groups, and K receiving TxRUs are connected to the other antenna panel group. In conclusion, in the first-type SBFD antenna configuration, an antenna panel group is added to ensure that the quantities of TxRUs for transmission and reception in the SBFD time unit are the same as those in a non-SBFD time unit.

The second-type SBFD antenna configuration on the base station side includes two antenna panel groups, each antenna panel group includes L/2 antenna elements, and quantities of TxRUs for transmission and reception are both K. In a downlink time unit, the K transmitting TxRUs are connected to the two antenna panel groups. In an uplink time unit, the K receiving TxRUs are connected to the two antenna panels. In an SBFD time unit, K/2 transmitting TxRUs are connected to one of the antenna panels, and K/2 receiving TxRUs are connected to the other antenna panel. In conclusion, in the second-type SBFD antenna configuration, the quantities of TxRUs for transmission and reception in the SBFD time unit are different from those in a non-SBFD time unit, and correspondingly, different CSI resource settings and CSI reporting settings are required.

The following describes the CSI reporting setting and the CSI resource setting by using examples.

The CSI reporting setting (CSI Reporting Setting, CSI-ReportConfig) includes one or more of the following: a CSI reporting setting ID (reportConfigId), a CSI reporting time domain behavior (reportConfigType), a CSI reporting frequency domain granularity (reportFreqConfiguration), a CSI reporting quantity (reportQuantity), a codebook configuration (codebookConfig), a CSI measurement limitation, an NZP-CSI-RS resource for channel measurement (resourcesForChannelMeasurement), an NZP-CSI-RS resource for interference measurement (nzp-CSI-RS-ResourcesForInterference), and a CSI-IM resource for interference measurement (csi-IM-ResourcesForInterference ).

The CSI resource setting (CSI Resource Setting, CSI-ResourceConfig) includes one or more of the following: a CSI resource setting ID (CSI-ResourceConfigId), a CSI-RS resource set table (CSI-RS-ResourceSetList), and a CSI measurement time domain behavior (resourceType).

CSI-ReportConfig is configured with at least one CSI-ResourceConfigId used for CSI resource measurement setting (CSI measurement), and CSI-ResourceConfigId is an index of a CSI resource configuration (CSI-ResourceConfig).

One or more NZP-CSI-RS resource sets (CSI-RS Resource Set, NZP-CSI-RS-ResourceSet) are configured in CSI-ResourceConfig. For periodic or semi-static CSI reporting, only one NZP-CSI-RS-ResourceSet is configured in CSI-ResourceConfig; for aperiodic CSI reporting, only one or more non-zero-power CSI-RS resource sets (NZP-CSI-RS-ResourceSet) are configured in CSI-ResourceConfig.

One NZP-CSI-RS-ResourceSet may include one or more CSI-RS resources (NZP-CSI-RS-resource). The plurality of NZP-CSI-RS-resources have the same frequency domain resource configuration (a start RB, an RB quantity, and density (density)), the same quantity of CSI-RS ports (nrofPorts), and the same CDM configuration.

For example, the base station may indicate, by using an RRC parameter such as CSI-ReportConfig, the UE to perform CSI reporting related configuration. Correspondingly, when reporting, the UE reports a CSI-RS measurement result included in NZP-CSI-RS-ResourceSet corresponding to CSI-ReportConfig to the base station. Reported content may include the following: an index of an NZP CSI-RS resource, the CQI of the NZP CSI-RS resource, the PMI of the NZP CSI-RS resource, the RI of the NZP CSI-RS resource, and the like. It should be noted that the UE determines, according to the configuration of the base station, which content is to be reported. If the base station configures the UE to report 'cri-CQI-PMI', the UE reports the index of the NZP CSI-RS resource, the CQI of the NZP CSI-RS resource, and the PMI of the NZP CSI-RS resource.

From the foregoing second-type SBFD antenna configuration on the base station side that, it can be seen that a quantity of antenna ports differs between SBFD time unit and the non-SBFD time unit. If CSI measurement and reporting use a conventional solution, more CSI measurement resources and CSI reporting resources are required. However, CSI measurement resources and CSI reporting resources supported by the current protocol are limited, and excessive CSI measurement resources and CSI reporting resources increase complexity and cost. Consequently, CSI measurement and reporting in the SBFD time unit and the non-SBFD time unit may not be supported.

To resolve the foregoing technical problem, this application provides a communication method and a communication apparatus, to flexibly implement CSI measurement and reporting in an SBFD time unit and a non-SBFD time unit.

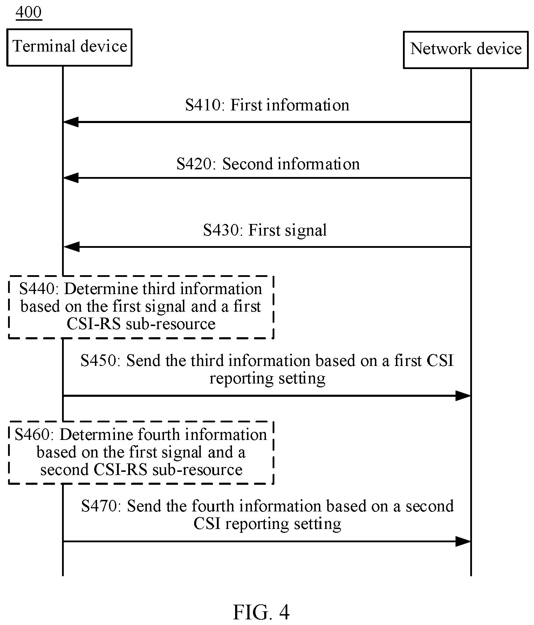

With reference to the accompanying drawings, the following describes in detail communication methods provided in embodiments of this application. Embodiments provided in this application are applicable to the communication system shown in FIG. 1. The technical solutions of this application are specifically described with reference to FIG. 4 to FIG. 8. An execution body may be a sending device or a receiving device, or may be a chip or a circuit used in the sending device or the receiving device. The sending device may be a terminal device, a chip, a chip system, or a circuit in the terminal device, or a functional module that can invoke and execute a program in the terminal device. The receiving device may be a network device, a chip, a chip system, or a circuit in the network device, a CU or a distributed unit DU in the network device, or a functional module that can invoke and execute a program in the network device. For ease of description, the following uses an example in which the method is performed by the terminal device and the network device for description.

FIG. 4 is a schematic flowchart of a communication method according to an embodiment of this application. As shown in FIG. 4, the method includes the following steps.

S410: A network device sends first information to a terminal device, and correspondingly, the terminal device receives the first information from the network device.

The first information indicates a first CSI reporting setting (protocol name: CSI Reporting Setting, higher layer signaling: CSI-ReportConfig) and a second CSI reporting setting, where the first CSI reporting setting is for reporting third information, the second CSI reporting setting is for reporting fourth information, the third information includes CSI in an SBFD time unit, and the fourth information includes CSI in a non-SBFD time unit.

For example, the third information and the fourth information may be CSI.

In other words, the first CSI reporting setting is for reporting CSI obtained through CSI measurement in the SBFD time unit, and the second CSI reporting setting is for reporting CSI obtained through CSI measurement in the non-SBFD time unit.

For detailed descriptions of the SBFD time unit and the non-SBFD time unit, refer to the foregoing descriptions. Details are not described herein again. Optionally, the non-SBFD time unit in this application includes a downlink time unit and a flexible time unit, and does not include an uplink time unit. It may be understood that, the solution in this embodiment of this application is applicable to downlink transmission, and downlink transmission cannot be performed in the uplink time unit. Therefore, the non-SBFD time unit does not include the uplink time unit.

The following describes specific implementations in which the first information indicates the first CSI reporting setting and the second CSI reporting setting by using examples.

### Solution 1:

In a first implementation, the first CSI reporting setting includes first indication information, the first indication information indicates that a first measurement result is to be reported via a resource indicated by the first CSI reporting setting, and the first measurement result includes a result obtained by measurement on a first CSI-RS sub-resource; and the second CSI reporting setting includes second indication information, the second indication information indicates that a second measurement result is to be reported via a resource indicated by the second CSI reporting setting, and the second measurement result includes a result obtained by measurement on a second CSI-RS sub-resource.

That is, the first CSI reporting setting may be associated with only the first CSI-RS sub-resource, and the second CSI reporting setting may be associated with only the second CSI-RS sub-resource.

Optionally, the first information indicates one or more pairs of CSI reporting settings (for example, the first CSI reporting setting and the second CSI reporting setting), each pair of CSI reporting settings may be associated with a same CSI resource setting, and different pairs of CSI reporting settings may be associated with different CSI resource settings. For example, the first CSI reporting setting and the second CSI reporting setting are associated with a same CSI resource setting, that is, each CSI resource indicated by the CSI resource setting includes the first CSI-RS sub-resource and the second CSI-RS sub-resource.

Optionally, the CSI resource setting in this application is used only for channel measurement (higher layer signaling: resourcesForChannelMeasurement).

For example, the first indication information and the second indication information may be 1 bit. For example, the first indication information may be a first value "0", and the second indication information may be a second value "1". Assuming that the first CSI reporting setting and the second CSI reporting setting are associated with a CSI resource setting #1, a CSI-RS resource in the CSI resource setting #1 includes a first CSI-RS sub-resource and a second CSI-RS sub-resource, the first CSI-RS sub-resource includes an SBFD time unit, and the second CSI-RS sub-resource includes a non-SBFD time unit, "0" may indicate that the first CSI reporting setting is associated with the first CSI-RS sub-resource including the SBFD time unit, and "1" may indicate that the second CSI reporting setting is associated with the second CSI-RS sub-resource including the non-SBFD time unit. For another example, the first indication information may be a first value "1", and the second indication information may be a second value "0". In this case, "1" may indicate that the first CSI reporting setting is associated with a first CSI-RS sub-resource including an SBFD time unit, and "0" may indicate that the second CSI reporting setting is associated with a second CSI-RS sub-resource including a non-SBFD time unit. In other words, the first CSI reporting setting is for reporting CSI obtained through CSI measurement in the SBFD time unit, and the second CSI reporting setting is for reporting CSI obtained through CSI measurement in the non-SBFD time unit.

For example, the first indication information includes an identifier of the first CSI-RS sub-resource, and the second indication information includes an identifier of the second CSI-RS sub-resource. Therefore, the terminal device may determine the first CSI-RS sub-resource based on the identifier of the first CSI-RS sub-resource included in the first CSI reporting setting, to determine that the first CSI reporting setting is for reporting the result obtained by measurement on the first CSI-RS sub-resource; and the terminal device may determine the second CSI-RS sub-resource based on the identifier of the second CSI-RS sub-resource included in the second CSI reporting setting, to determine that the second CSI reporting setting is for reporting the result obtained by measurement on the second CSI-RS sub-resource. In other words, the first CSI reporting setting is for reporting CSI obtained through CSI measurement on the first CSI-RS sub-resource, and the second CSI reporting setting is for reporting CSI obtained through CSI measurement on the second CSI-RS sub-resource.

In a second implementation, the first CSI reporting setting includes an identifier of the first CSI reporting setting, the second CSI reporting setting includes an identifier of the second CSI reporting setting, a first CSI-RS sub-resource includes an identifier of the first CSI-RS sub-resource, and a second CSI-RS sub-resource includes an identifier of the second CSI-RS sub-resource. For example, when the identifier of the first CSI reporting setting is less than the identifier of the second CSI reporting setting, and the identifier of the first CSI-RS sub-resource is less than the identifier of the second CSI-RS sub-resource, the terminal device determines the third information based on a first signal and the first CSI-RS sub-resource, and determines the fourth information based on the first signal and the second CSI-RS sub-resource. For another example, when the identifier of the first CSI reporting setting is greater than the identifier of the second CSI reporting setting, and the identifier of the first CSI-RS sub-resource is greater than the identifier of the second CSI-RS sub-resource, the terminal device determines the third information based on a first signal and the first CSI-RS sub-resource, and determines the fourth information based on the first signal and the second CSI-RS sub-resource.

In other words, a size of an identifier of a CSI reporting setting is associated with a size of an identifier of a CSI-RS sub-resource. For example, a CSI reporting setting with a larger ID is associated with a CSI-RS sub-resource with a larger ID, and a CSI reporting setting with a smaller ID is associated with a CSI-RS sub-resource with a smaller ID.

In a third implementation, the first CSI reporting setting includes an identifier of the first CSI reporting setting, and the second CSI reporting setting includes an identifier of the second CSI reporting setting. For example, when the identifier of the first CSI reporting setting is less than the identifier of the second CSI reporting setting, the terminal device may determine the third information based on a first signal and the first CSI-RS sub-resource, and determine the fourth information based on the first signal and the second CSI-RS sub-resource. For another example, when the identifier of the first CSI reporting setting is greater than the identifier of the second CSI reporting setting, the terminal device may determine the third information based on a first signal and the first CSI-RS sub-resource, and determine the fourth information based on the first signal and the second CSI-RS sub-resource.

That is, a size of an identifier of a CSI reporting setting is associated with a CSI-RS sub-resource allocated in an SBFD time unit or a non-SBFD time unit. For example, a first CSI reporting setting with a smaller ID is associated with a first CSI-RS sub-resource allocated in an SBFD time unit, and a second CSI reporting setting with a larger ID is associated with a second CSI-RS sub-resource allocated in a non-SBFD time unit; or a first CSI reporting setting with a larger ID is associated with a first CSI-RS sub-resource allocated in an SBFD time unit, and a second CSI reporting setting with a smaller ID is associated with a second CSI-RS sub-resource allocated in a non-SBFD time unit.

Optionally, before the first information is received, and before second information is received, the method further includes: The terminal device sends second capability information to the network device, where the second capability information indicates that the terminal device supports a maximum value N of CSI reporting setting configured by the network. Optionally, the second information further indicates N1 CSI reporting settings, where N1 is a positive integer less than or equal to N. In other words, the terminal device does not expect a quantity of CSI reporting settings configured by a network for the terminal device to exceed N.

For example, N is greater than 4. For example, N may be equal to any one of 6, 8, 10, 12, 16, and 32. CSI reporting flexibility in an SBFD scenario can be improved by increasing a quantity of CSI reporting settings.

Optionally, the second capability information is carried in first signaling, the first signaling is RRC signaling, and the first signaling is carried on a PUSCH.

### Solution 2:

In an implementation, the first CSI reporting setting is an SBFD-specific CSI reporting setting, and the second CSI reporting setting is a non-SBFD-specific CSI reporting setting. To be specific, the first information in this implementation may indicate two types of CSI reporting settings, for example, a first-type CSI reporting setting (that is, the SBFD-specific CSI reporting setting) and a second-type CSI reporting setting (that is, the non-SBFD-specific CSI reporting setting).

Optionally, the SBFD-specific CSI reporting setting is for reporting the CSI obtained through measurement in the SBFD time unit, and the non-SBFD-specific CSI reporting setting is for reporting the CSI obtained through measurement in the non-SBFD time unit.

Optionally, the first-type CSI reporting setting is only associated with a first-type CSI-RS sub-resource in the following step S420, and the second-type CSI reporting setting is only associated with a second-type CSI-RS sub-resource in the following step S420. In other words, the SBFD-specific CSI reporting setting is only associated with an SBFD-specific CSI-RS sub-resource, and the non-SBFD-specific CSI reporting setting is only associated with a non-SBFD-specific CSI-RS sub-resource. Therefore, the SBFD-specific CSI reporting setting is for reporting CSI obtained by measurement on the SBFD-specific CSI-RS sub-resource, and the non-SBFD-specific CSI reporting setting is for reporting CSI obtained by measurement on the non-SBFD-specific CSI-RS sub-resource.

It should be noted that names of the first-type CSI reporting setting (or the SBFD-specific CSI reporting setting) and the second-type CSI reporting setting (or the non-SBFD-specific CSI reporting setting) are merely examples provided for ease of understanding, and are not limited in this application. It should be understood that, distinguishing may be implemented by using different higher layer signaling names. For example, higher layer signaling CSI-ReportConfig-SBFD and CSI-ReportConfig may indicate the SBFD-specific CSI reporting setting and the non-SBFD-specific CSI reporting setting respectively, to be distinguished from a CSI reporting setting (for example, CSI-ReportConfig, csi-ReportConfigId) in a conventional technology. Optionally, an ID (for example, csi-ReportConfigId-SBFD) is re-assigned to the SBFD-specific CSI reporting setting.

Optionally, before the first information is received, and before second information is received, the method further includes: The terminal device sends third capability information to the network device, where the third capability information indicates that the terminal device supports an SBFD-specific CSI reporting setting configured by a network.

Optionally, the third capability information is carried in first signaling, the first signaling is RRC signaling, and the first signaling is carried on a PUSCH.

Optionally, the second information may further indicate N2 SBFD-specific CSI reporting settings and N3 non-SBFD-specific CSI reporting settings. Optionally, N2 ≤ 4, N3 ≤ 4, N2 + N3 ≤ 8, and N2 and N3 are positive integers. It should be understood that, a quantity of SBFD-specific CSI reporting settings and a quantity of non-SBFD-specific CSI reporting settings are both less than or equal to 4, and are kept consistent with a quantity of CSI reporting settings in a conventional solution, to minimize changes to a standard. A total quantity of CSI reporting settings is implicitly increased by increasing an SBFD-specific CSI reporting setting.

S420: The network device sends the second information to the terminal device, and correspondingly, the terminal device receives the second information from the network device.

The second information indicates a CSI-RS resource (protocol name: NZP CSI-RS resource, higher layer signaling: nzp-CSI-RS-Resource), where the CSI-RS resource is for receiving the first signal, the CSI-RS resource includes the first CSI-RS sub-resource and the second CSI-RS sub-resource, the first signal and the first CSI-RS sub-resource are for determining the third information, and the first signal and the second CSI-RS sub-resource are for determining the fourth information.

Optionally, the CSI-RS resource is included in a CSI resource setting (protocol name: CSI Resource Setting, higher layer signaling: CSI-ResourceConfig). For example, the second information indicates the CSI resource setting, and the CSI resource setting indicates the CSI-RS resource.

A specific implementation in which the second information indicates the CSI-RS resource is described below by using an example.

### Solution 1:

In an implementation, the CSI-RS resource further includes a first periodicity and an offset parameter, where the first periodicity and the offset parameter (higher layer signaling: periodicityAndOffset) indicate a first time domain resource. To be specific, the second information in this implementation may indicate all CSI-RS resources in the CSI resource setting, where each CSI-RS resource includes the first periodicity, the offset parameter, and two CSI-RS sub-resources (for example, the first CSI-RS sub-resource and the second CSI-RS sub-resource).

Optionally, the terminal device determines the third information in an SBFD time unit of the first time domain resource based on the first signal and the first CSI-RS sub-resource; and/or the terminal device determines the fourth information in a non-SBFD time unit of the first time domain resource based on the first signal and the second CSI-RS sub-resource.

Optionally, the first CSI-RS sub-resource indicates a parameter used for CSI-RS sending/receiving and CSI measurement in an SBFD time unit, and the second CSI-RS sub-resource indicates a parameter used for CSI-RS sending/receiving and CSI measurement in a non-SBFD time unit.

For example, the first CSI-RS sub-resource includes at least one of the following parameters:
(1) an identifier of the first CSI-RS sub-resource, for example, a NZP-CSI-RS sub-resource ID, used to identify the first CSI-RS sub-resource;
(2) a first power control offset (higher layer signaling: powerControlOffset), where powerControlOffset indicates a power difference/ratio between power of a PDSCH resource and power of an NZP CSI-RS resource, and the first power control offset is used to determine power of the first CSI-RS sub-resource; optionally, the terminal device determines the power of the first CSI-RS sub-resource based on the first power control offset and power of the PDSCH resource;
(3) a second power control offset (higher layer signaling: powerControlOffsetSS), where powerControlOffsetSS indicates a power difference/ratio between power of an NZP CSI-RS resource and power of an SSS resource, and the second power control offset is used to determine power of a second CSI-RS sub-resource; optionally, the terminal device determines the power of the second CSI-RS sub-resource based on the second power control offset and the power of the secondary synchronization signal (Secondary Synchronization Signal, SSS) resource;
(4) a first resource mapping pattern (higher layer signaling: resourceMapping), indicating a time-frequency resource location and/or a size of the first CSI-RS sub-resource; and
(5) first QCL information (higher layer signaling: qcl-InfoPeriodicCSI-RS).

For example, the second CSI-RS sub-resource includes at least one of the following parameters:
(1) an identifier of the second CSI-RS sub-resource, for example, a NZP-CSI-RS sub-resource ID 2, for identifying the second CSI-RS sub-resource;
(2) a third power control offset (higher layer signaling: powerControlOffset), where powerControlOffset indicates a power difference/ratio between power of a PDSCH resource and power of an NZP CSI-RS resource, and the third power control offset is for determining power of the first CSI-RS sub-resource; optionally, the terminal device determines the power of the first CSI-RS sub-resource based on the third power control offset and power of the PDSCH resource;
(3) a fourth power control offset (higher layer signaling: powerControlOffsetSS), where powerControlOffsetSS indicates a power difference/ratio between power of an NZP CSI-RS resource and power of an SSS resource, and the fourth power control offset is for determining power of a second CSI-RS sub-resource; optionally, the terminal device determines the power of the second CSI-RS sub-resource based on the fourth power control offset and the power of the SSS resource;
(4) a second resource mapping pattern (higher layer signaling: resourceMapping), indicating a time-frequency resource location and/or a size of the second CSI-RS sub-resource; and
(5) second QCL information (higher layer signaling: qcl-InfoPeriodicCSI-RS).

For example, parameters included in the first CSI-RS sub-resource or the second CSI-RS sub-resource are shown as follows:

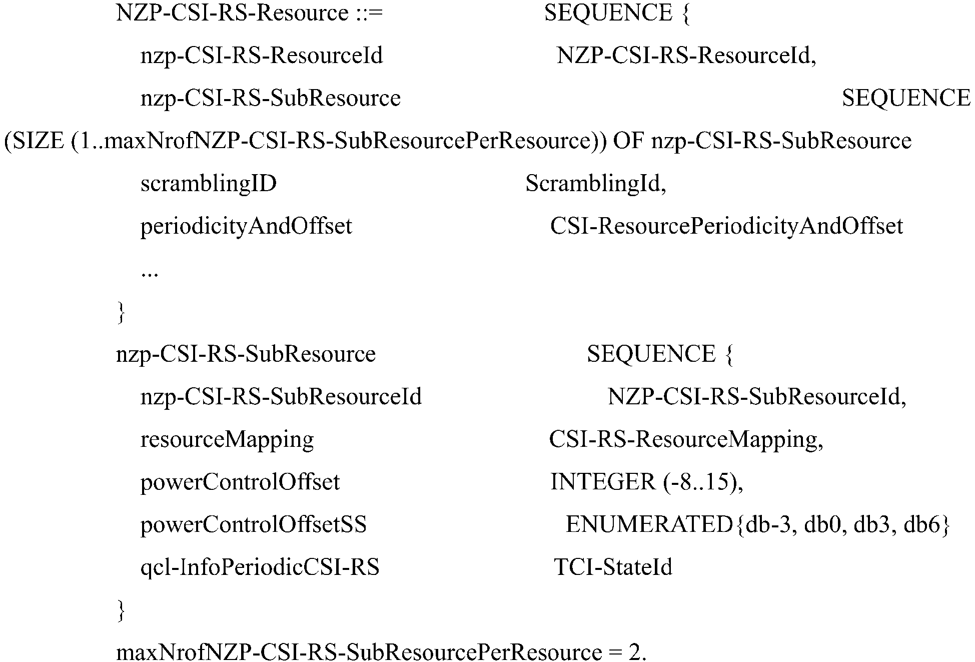

It should be understood that, in this implementation, one CSI-RS resource has only one periodicity and one offset parameter (for example, the first periodicity and the offset parameter). A CSI-RS can be allocated in both the SBFD time unit and the non-SBFD time unit by configuring an appropriate first periodicity and offset parameter.

### Solution 2:

In an implementation, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource. To be specific, the second information in this implementation may indicate all CSI-RS resources in the CSI resource setting, where each CSI-RS resource includes two CSI-RS sub-resources, for example, the first CSI-RS sub-resource and the second CSI-RS sub-resource.

Optionally, the terminal device determines the third information based on the first CSI-RS sub-resource and the first signal in an SBFD time unit of the second time domain resource; and/or the terminal device determines the fourth information based on the second CSI-RS sub-resource and the first signal in a non-SBFD time unit of the third time domain resource.

Optionally, the second time domain resource includes only the SBFD time unit, and the third time domain resource includes only the non-SBFD time unit. Alternatively, the second time domain resource does not include the non-SBFD time unit, and the third time domain resource does not include the SBFD time unit. Therefore, the first CSI-RS sub-resource may indicate a parameter used for CSI-RS sending/receiving and CSI measurement in an SBFD time unit, and the second CSI-RS sub-resource may indicate a parameter used for CSI-RS sending/receiving and CSI measurement in a non-SBFD time unit. It should be noted that this optional implementation is not affected by a standard, and may be implemented by the network device by configuring an appropriate periodicity and offset parameter.

For example, the first CSI-RS sub-resource further includes at least one of the following parameters: an identifier of the first CSI-RS sub-resource, a first power control offset, a second power control offset, a first resource mapping pattern, or first QCL information. The second CSI-RS sub-resource further includes one or more of the following: an identifier of the second CSI-RS sub-resource, a third power control offset, a fourth power control offset, a second resource mapping pattern, or second QCL information. For specific explanations, refer to related descriptions in the foregoing solution 1.

For example, parameters included in the first CSI-RS sub-resource or the second CSI-RS sub-resource are shown as follows:

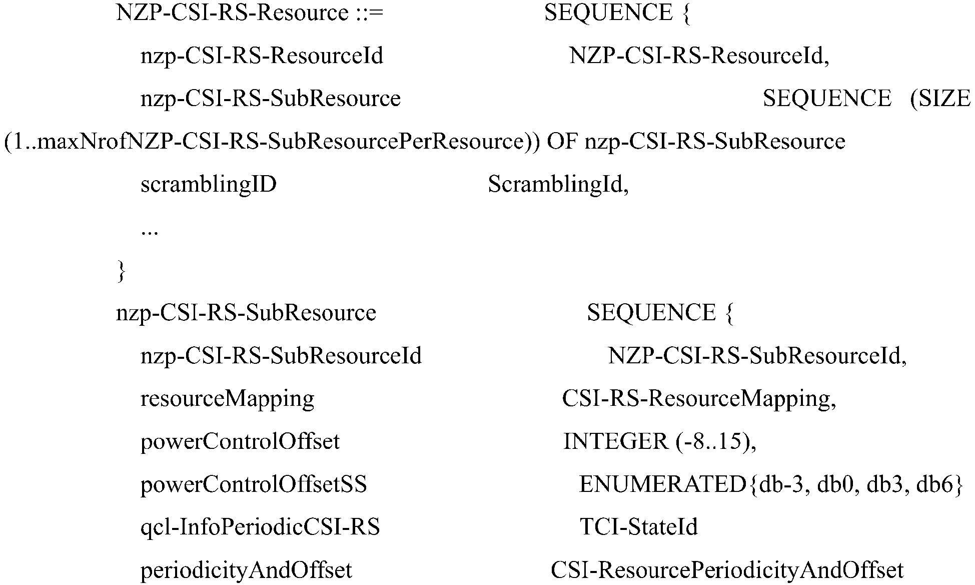

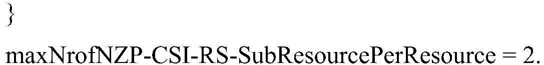

It should be understood that, one CSI-RS resource in this implementation includes two periodicities and two offset parameters (for example, the second periodicity and the offset parameter, and the third periodicity and the offset parameter), which are respectively included in the first CSI-RS sub-resource and the second CSI-RS sub-resource. An appropriate periodicity and offset parameter are configured, so that the second time domain resource indicated by the second periodicity and the offset parameter may include (or include only) an SBFD time unit, and the third time domain resource indicated by the third periodicity and the offset parameter includes (or includes only) a non-SBFD time unit.

### Solution 3:

In an implementation, the first CSI-RS sub-resource is an SBFD-specific CSI-RS sub-resource, and the second CSI-RS sub-resource is a non-SBFD-specific CSI-RS sub-resource. To be specific, the second information in this implementation may indicate all CSI-RS resources in the CSI resource setting, where each CSI-RS resource includes two types of CSI-RS sub-resources, for example, the first-type CSI-RS sub-resource (namely, the SBFD-specific CSI-RS sub-resource) and the second-type CSI-RS sub-resource (namely, the non-SBFD-specific CSI-RS sub-resource).

Optionally, the terminal device determines the third information in an SBFD time unit based on the first signal and the SBFD-specific CSI-RS sub-resource; and/or the terminal device determines the fourth information in a non-SBFD time unit based on the first signal and the non-SBFD-specific CSI-RS sub-resource.

Optionally, the SBFD-specific CSI-RS sub-resource may indicate a parameter used for CSI-RS sending/receiving and CSI measurement in an SBFD time unit, and the non-SBFD-specific CSI-RS sub-resource may indicate a parameter used for CSI-RS sending/receiving and CSI measurement in a non-SBFD time unit.

In an example, the CSI resource includes a first periodicity and an offset parameter. Optionally, the first-type CSI-RS sub-resource includes at least one of the following parameters: an identifier of the first CSI-RS sub-resource, a first power control offset, a second power control offset, a first resource mapping pattern (higher layer signaling: resourceMapping), and first QCL information. The second CSI-RS sub-resource includes at least one of the following parameters: an identifier of the second CSI-RS sub-resource, a third power control offset, a fourth power control offset, a second resource mapping pattern, second QCL information. For specific explanations, refer to related descriptions in the foregoing solution 1.

In another example, the first-type CSI-RS sub-resource includes a second periodicity and an offset parameter, and the second-type CSI-RS sub-resource includes a third periodicity and the offset parameter. Optionally, the first-type CSI-RS sub-resource further includes at least one of the following parameters: an identifier of the first CSI-RS sub-resource, a first power control offset, a second power control offset, a first resource mapping pattern, or first QCL information. The second CSI-RS sub-resource further includes one or more of the following: an identifier of the second CSI-RS sub-resource, a third power control offset, a fourth power control offset, a second resource mapping pattern, or second QCL information. For specific explanations, refer to related descriptions in the foregoing solution 2.

It should be noted that names of the first-type CSI-RS sub-resource (or the SBFD-specific CSI-RS sub-resource) and the second-type CSI-RS sub-resource (or the non-SBFD-specific CSI-RS sub-resource) are merely examples provided for ease of understanding, and are not limited in this application. It should be understood that, different higher layer signaling names may be used for differentiation. For example, higher layer signaling nzp-CSI-RS-SubResource-SBFD and nzp-CSI-RS-SubResource may indicate the SBFD-specific CSI-RS sub-resource and the non-SBFD-specific CSI-RS sub-resource respectively, to be distinguished from a CSI-RS resource (nzp-CSI-RS-Resource, nzp-CSI-RS-ResourceId) in a conventional technology. Optionally, an ID (for example, nzp-CSI-RS-SubResourceId-SBFD) is re-assigned to the SBFD-specific CSI-RS sub-resource.

For example, parameters included in the SBFD-specific CSI-RS sub-resource and the non-SBFD-specific CSI-RS sub-resource are shown as follows:

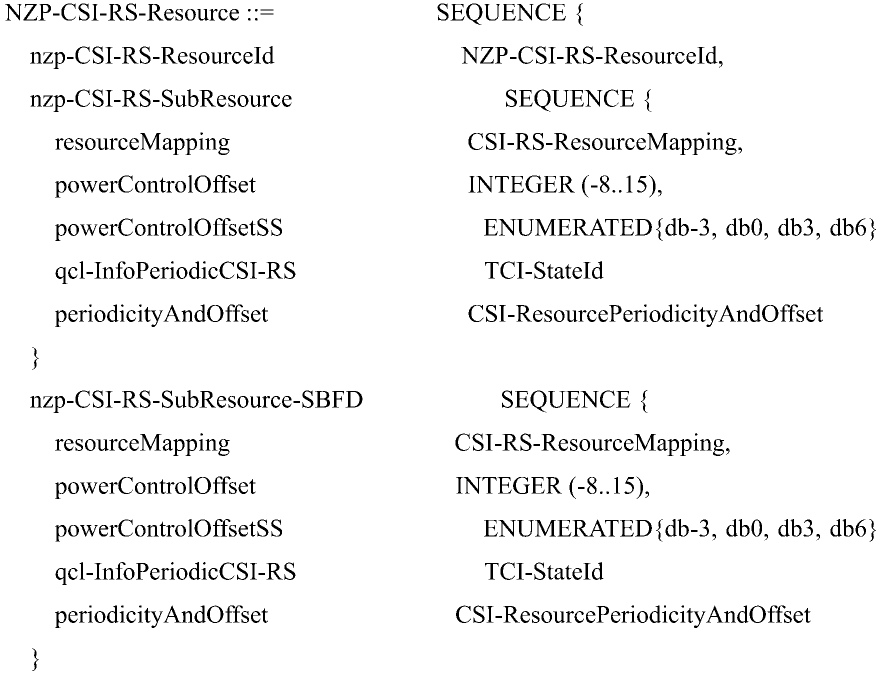

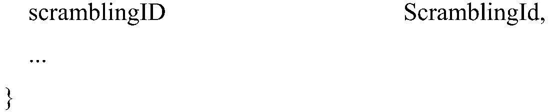

Optionally, before the foregoing steps S410 and S420 are performed, that is, before the terminal device receives the first information and before the terminal device receives the second information, the method further includes: The terminal device sends first capability information to the network device, where the first capability information indicates that the terminal device supports an SBFD-specific CSI-RS sub-resource configured by the network.

Optionally, the first capability information is carried in the first signaling, the first signaling is RRC signaling, and the first signaling is carried on a PUSCH.

Optionally, the first capability information and the third capability information may be sent by using fourth capability information. For example, before the first information is received and before the second information is received, the method further includes: The terminal device sends the fourth capability information to the network device, where the fourth capability information indicates that the terminal device supports the SBFD-specific CSI-RS sub-resource and the SBFD-specific CSI reporting setting that are configured by the network device.

Optionally, the fourth capability information is carried in the first signaling, the first signaling is RRC signaling, and the first signaling is carried on a PUSCH.

Optionally, a sequence of performing steps S410 and S420 is not limited in this application. For example, the network device may first send the first information and then send the second information to the terminal device; the network device may first send the second information and then send the first information to the terminal device; or the network device may send the first information and the second information to the terminal device at a same moment. Optionally, when the network device sends the first information and the second information to the terminal device at a same moment, the first information and the second information may be sent by using same signaling (for example, RRC signaling or DCI signaling), or may be carried in a same data packet for sending; or the first information and the second information may be sent by using two pieces of signaling, or may be carried in two data packets for sending. This is not limited in this application.

S430: The network device sends the first signal to the terminal device, and correspondingly, the terminal device receives the first signal from the network device.

For example, the first signal is a CSI-RS. In this implementation, the first signal is a CSI-RS allocated in both an SBFD time unit and a non-SBFD time unit. For example, the network device sends the first signal on the first CSI-RS sub-resource and the second CSI-RS sub-resource. Correspondingly, the terminal device receives the first signal on the first CSI-RS sub-resource and the second CSI-RS sub-resource.

It should be understood that the CSI-RS in this embodiment of this application cannot be sent in an uplink time unit.

In an implementation, based on the solution 1 in step S420, in the SBFD time unit of the first time domain resource, the network device sends the first signal to the terminal device based on the first CSI-RS sub-resource, and correspondingly, the terminal device receives the first signal from the network device based on the first CSI-RS sub-resource. In the non-SBFD time unit of the first time domain resource, the network device sends the first signal to the terminal device based on the second CSI-RS sub-resource, and correspondingly, the terminal device receives the first signal from the network device based on the second CSI-RS sub-resource.

In other words, the network device sends CSI-RS in the SBFD time unit and the non-SBFD time unit of the first time domain resource. Correspondingly, the terminal device receives the CSI-RS in the SBFD time unit and the non-SBFD time unit of the first time domain resource.

In an implementation, based on the solution 2 in step S420, the network device sends the first signal to the terminal device in the SBFD time unit of the second time domain resource based on the first CSI-RS sub-resource. Correspondingly, the terminal device receives the first signal from the network device based on the first CSI-RS sub-resource. In addition, the network device sends the first signal to the terminal device in the non-SBFD time unit of the third time domain resource based on the second CSI-RS sub-resource. Correspondingly, the terminal device receives the first signal from the network device based on the second CSI-RS sub-resource.

In other words, the network device sends the CSI in the SBFD time unit of the second time domain resource and the non-SBFD time unit of the third time domain resource. Correspondingly, the terminal device receives the CSI in the SBFD time unit of the second time domain resource and the non-SBFD time unit of the third time domain resource.

S440: The terminal device determines third information based on the first signal and the first CSI-RS sub-resource.

For example, the first signal may be a CSI-RS, and the third information may be CSI.

Optionally, the third information may be CSI in an SBFD time unit, that is, the terminal device measures the CSI-RS in the SBFD time unit to obtain the third information.

For example, the third information may be determined based on the first signal (a first part) indicated by the first (type) CSI-RS sub-resource associated with the first (type) CSI reporting setting.

For example, the terminal device receives the first signal (the first part) on the first (type) CSI-RS sub-resource, and measures the received first signal based on information included in the first (type) CSI-RS sub-resource, to obtain the third information.

S450: The terminal device sends the third information to the network device based on the first CSI reporting setting, and correspondingly, the network device receives the third information from the terminal device based on the first CSI reporting setting.

The third information may be carried on a first PUCCH or a first PUSCH. Optionally, the first PUCCH or the first PUSCH may be considered as one PUCCH or one PUSCH.

Optionally, the third information may be carried in a third signal, where the third signal is determined based on the first (type) CSI reporting setting.

S460: The terminal device determines the fourth information based on the first signal and the second CSI-RS sub-resource.

For example, the first signal may be a CSI-RS, and the fourth information may be CSI.

Optionally, the fourth information may be CSI in a non-SBFD time unit, that is, the terminal device measures the CSI-RS in the non-SBFD time unit to obtain the fourth information.

For example, the fourth information may be determined based on the first signal (a second part) indicated by the second (type) CSI-RS sub-resource associated with the second (type) CSI reporting setting.

For example, the terminal device receives the first signal (the second part) on the second (type) CSI-RS sub-resource, and measures the received first signal based on information included in the second (type) CSI-RS sub-resource, to obtain the fourth information.

S470: The terminal device sends the fourth information to the network device based on the second CSI reporting setting, and correspondingly, the network device receives the fourth information from the terminal device based on the second CSI reporting setting.

The fourth information may be carried on a second PUCCH or a second PUSCH. Optionally, the second PUCCH or the second PUSCH may be considered as one PUCCH or one PUSCH.

Optionally, the fourth information may be carried in a fourth signal, where the fourth signal is determined based on the second (type) CSI reporting setting.

It should be understood that, in the foregoing steps S440 and S460, the third information (for example, CSI) in the SBFD time unit and the fourth information (for example, CSI) in the non-SBFD time unit are separately measured because the first CSI reporting setting and the second CSI reporting setting are respectively associated with two different CSI-RS sub-resources (for example, the first CSI-RS sub-resource and the second CSI-RS sub-resource).

It should be further understood that, in the foregoing steps S450 and S470, the third information (for example, CSI) in the SBFD time unit and the fourth information (for example, CSI) in the non-SBFD time unit are separately reported because two CSI reporting settings (for example, the first CSI reporting setting and the second CSI reporting setting) are used. That is, the third information and the fourth information are carried on different PUSCHs or PUCCHs.

Optionally, a sequence of performing steps S440 and S450 and performing steps S460 and S470 is not limited in this application. In other words, a sequence of determining and sending the third information and determining and sending the fourth information is not specifically limited in this application. For example, the terminal device may first determine the third information, then determine the fourth information, and then send the third information and the fourth information respectively by using the first CSI reporting setting and the second CSI reporting setting. In other words, a sending sequence of the third information and the fourth information is not limited in this application, and the third information and the fourth information may be sent simultaneously or separately. Alternatively, the terminal device may first determine the fourth information and send the fourth information based on the second CSI reporting setting, and then determine the third information and send the third information based on the first CSI reporting setting. This is not limited in this application.

Based on the foregoing solution, a quantity of CSI reporting settings (for example, CSI-ReportConfig) is increased, or an SBFD-specific CSI reporting setting (for example, CSI-ReportConfig-SBFD) is introduced, to improve flexibility of CSI reporting in an SBFD scenario. In addition, the first CSI-RS sub-resource and the second CSI-RS sub-resource (for example, NZP-CSI-RS-SubResource) are introduced, so that CSI-RSs are sent and CSI measurement is performed in an SBFD time unit and a non-SBFD time unit, without increasing a quantity of CSI-RS resources (for example, NZP-CSI-RS-Resource), thereby improving flexibility of CSI measurement in the SBFD scenario.

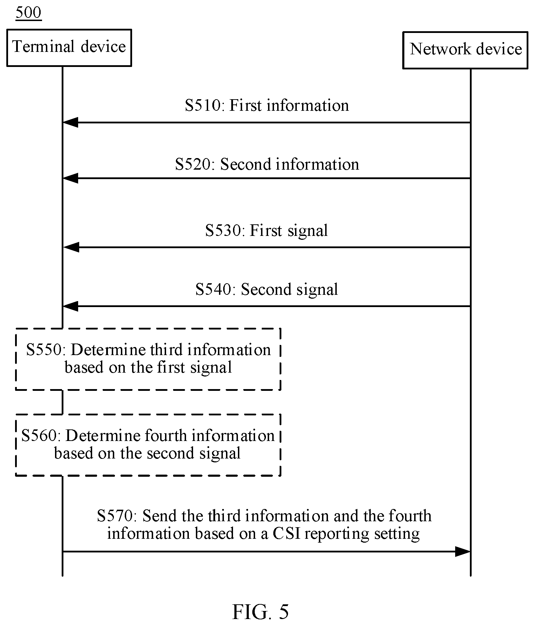

FIG. 5 is a schematic flowchart of a communication method according to an embodiment of this application. As shown in FIG. 5, the method includes the following steps.

S510: A network device sends first information to a terminal device, and correspondingly, the terminal device receives the first information from the network device.

The first information indicates a CSI reporting setting (protocol name: CSI Reporting Setting, higher layer signaling: CSI-ReportConfig), where the CSI reporting setting includes a first CSI reporting sub-setting and a second CSI reporting sub-setting, the first CSI reporting sub-setting is for reporting third information, the second CSI reporting sub-setting is for reporting fourth information, the third information includes CSI in an SBFD time unit, and the fourth information includes CSI in a non-SBFD time unit. For example, the third information and the fourth information may be CSI.

In other words, the first CSI reporting sub-setting is for reporting CSI obtained through CSI measurement in the SBFD time unit, and the second CSI reporting sub-setting is for reporting CSI obtained through CSI measurement in the non-SBFD time unit.

For detailed descriptions of the SBFD time unit and the non-SBFD time unit, refer to the foregoing descriptions. Details are not described herein again.

A specific implementation in which the first information indicates the CSI reporting setting is described below by using examples.

### Solution 1:

In an implementation, the first CSI reporting sub-setting includes first indication information, and the second CSI reporting sub-setting includes second indication information, where the first indication information indicates that a first measurement result is to be reported via a resource indicated by the first CSI reporting sub-setting, the first measurement result includes a result obtained by measurement on a first CSI-RS resource, the second indication information indicates that a second measurement result is to be reported via a resource indicated by the second CSI reporting sub-setting, and the second measurement result includes a result obtained by measurement on a second CSI-RS resource.

That is, the first CSI reporting sub-setting may be associated with only the first CSI-RS resource, and the second CSI reporting sub-setting may be associated with only the second CSI-RS resource.

Optionally, the first information indicates one or more pairs of CSI reporting sub-settings (for example, the first CSI reporting sub-setting and the second CSI reporting sub-setting), each pair of CSI reporting sub-settings may be associated with a same CSI resource setting, and different pairs of CSI reporting sub-settings may be associated with different CSI resource settings. For example, the first CSI reporting sub-setting and the second CSI reporting sub-setting are associated with a same CSI resource setting, that is, a CSI resource indicated by the CSI resource setting includes the first CSI-RS resource and the second CSI-RS resource.

For example, the first indication information and the second indication information may be 1 bit. For example, the first indication information may be a first value "0", and the second indication information may be a second value "1". Assuming that the first CSI reporting sub-setting and the second CSI reporting sub-setting are associated with a CSI resource setting #1, the CSI resource setting #1 includes the first CSI-RS resource and the second CSI-RS resource, the first CSI-RS resource includes an SBFD time unit, and the second CSI-RS resource includes a non-SBFD time unit, "0" may indicate that the first CSI reporting sub-setting is associated with the first CSI-RS resource including the SBFD time unit, and "1" may indicate that the second CSI reporting sub-setting is associated with the second CSI-RS resource including the non-SBFD time unit. For another example, the first indication information may be a first value "1", and the second indication information may be a second value "0". In this case, "1" may indicate that the first CSI reporting sub-setting is associated with the first CSI-RS resource including an SBFD time unit, and "0" may indicate that the second CSI reporting sub-setting is associated with a second CSI-RS resource including a non-SBFD time unit. In other words, the first CSI reporting sub-setting is for reporting CSI obtained through CSI measurement in the SBFD time unit, and the second CSI reporting sub-setting is for reporting CSI obtained through CSI measurement in the non-SBFD time unit.

For example, the first indication information includes an identifier of the first CSI-RS resource, and the second indication information includes an identifier of the second CSI-RS resource. Therefore, the terminal device may determine the first CSI-RS resource based on the identifier of the first CSI-RS resource included in the first CSI reporting sub-setting, to determine that the first CSI reporting sub-setting is for reporting the result obtained by measurement on the first CSI-RS resource; and the terminal device may determine the second CSI-RS resource based on the identifier of the second CSI-RS resource included in the second CSI reporting sub-setting, to determine that the second CSI reporting sub-setting is for reporting the result obtained by measurement on the second CSI-RS resource. In other words, the first CSI reporting sub-setting is for reporting CSI obtained through CSI measurement on the first CSI-RS resource, and the second CSI reporting sub-setting is for reporting CSI obtained through CSI measurement on the second CSI-RS resource.

For example, the first CSI reporting sub-setting includes one or more of the following:
(1) an identifier (higher layer signaling: csi-ReportSubConfigID) of the first CSI reporting sub-setting, for identifying the first CSI reporting sub-setting;
(2) a first CSI-RS port subset indicator parameter (higher layer signaling: port-subsetIndicator);
(3) a fifth power offset (higher layer signaling: powerOffset), where the fifth power offset is for determining power of the first CSI-RS resource; optionally, the terminal device determines the power of the first CSI-RS resource based on the fifth power offset, a first power control offset (powerControlOffset), and power of a PDSCH resource; and
(4) a first codebook configuration parameter (higher layer signaling: codebookType), where the first codebook configuration parameter is for determining the third information (for example, CSI).

For example, the second CSI reporting sub-setting includes one or more of the following:
(1) an identifier (higher layer signaling: csi-ReportSubConfigID) of the second CSI reporting sub-setting, for identifying the second CSI reporting sub-setting;
(2) a second CSI-RS port subset indicator parameter (higher layer signaling: port-subsetIndicator);
(3) a sixth power offset (higher layer signaling: powerOffset), where the sixth power offset is for determining power of the second CSI-RS resource; optionally, the terminal device determines the power of the second CSI-RS resource based on the sixth power offset, a third power control offset (powerControlOffset), and power of an SSS resource; and
(4) a second codebook configuration parameter (higher layer signaling: codebookType), where the second codebook configuration parameter is for determining the fourth information (for example, CSI).

### Solution 2:

In an implementation, the first CSI reporting sub-setting is an SBFD-specific CSI reporting sub-setting, and the second CSI reporting sub-setting is a non-SBFD-specific CSI reporting sub-setting. To be specific, the first information in this implementation may indicate two types of CSI reporting sub-settings, for example, a first-type CSI reporting sub-setting (that is, the SBFD-specific CSI reporting sub-setting) and a second-type CSI reporting sub-setting (that is, the non-SBFD-specific CSI reporting sub-setting).

Optionally, the SBFD-specific CSI reporting sub-setting is for reporting the CSI obtained through measurement in the SBFD time unit, and the non-SBFD-specific CSI reporting sub-setting is for reporting the CSI obtained through measurement in the non-SBFD time unit.

Optionally, the first-type CSI reporting sub-setting is only associated with a first-type CSI-RS resource in the following step S520, and the second-type CSI reporting sub-setting is only associated with a second-type CSI-RS resource in the following step S520. In other words, the SBFD-specific CSI reporting sub-setting is only associated with an SBFD-specific CSI-RS resource, and the non-SBFD-specific CSI reporting sub-setting is only associated with a non-SBFD-specific CSI-RS resource. Therefore, the SBFD-specific CSI reporting sub-setting is for reporting CSI obtained by measurement on the SBFD-specific CSI-RS resource, and the non-SBFD-specific CSI reporting sub-setting is for reporting CSI obtained by measurement on the non-SBFD-specific CSI-RS resource.

It should be noted that names of the first-type CSI reporting sub-setting (or the SBFD-specific CSI reporting sub-setting) and the second-type CSI reporting sub-setting (or the non-SBFD-specific CSI reporting sub-setting) are merely examples provided for ease of understanding, and are not limited in this application. It should be understood that, distinguishing may be implemented by using different higher layer signaling names. For example, higher layer signaling CSI-ReportSubConfig-SBFD and CSI-ReportSubConfig may indicate the SBFD-specific CSI reporting sub-setting and the non-SBFD-specific CSI reporting sub-setting respectively, to be distinguished from a name of a CSI reporting setting (for example, CSI-ReportConfig, csi-ReportConfigId) in a conventional technology. Optionally, an ID (for example, csi-ReportSubConfigId-SBFD) is re-assigned to the SBFD-specific CSI reporting sub-setting.

For example, the first-type CSI reporting sub-setting includes one or more of the following: an identifier of the first CSI reporting sub-setting, a first CSI-RS port subset indicator parameter, a fifth power offset, or a first codebook configuration parameter. The second-type CSI reporting sub-setting includes one or more of the following: an identifier of the second CSI reporting sub-setting, a second CSI-RS port subset indication parameter, a sixth power offset, or a second codebook configuration parameter. For specific explanations, refer to related descriptions in the foregoing solution 1.

Optionally, before the first information is received, and before second information is received, the method further includes: The terminal device sends third capability information to the network device, where the third capability information indicates that the terminal device supports an SBFD-specific CSI reporting sub-setting configured by a network.

Optionally, the third capability information is carried in first signaling, the first signaling is RRC signaling, and the first signaling is carried on a PUSCH.

Optionally, the second information may further indicate N2 SBFD-specific CSI reporting sub-settings and N3 non-SBFD-specific CSI reporting sub-settings. Optionally, N2 ≤ 4, N3 ≤ 4, N2 + N3 ≤ 8, and N2 and N3 are positive integers. It should be understood that, a quantity of SBFD-specific CSI reporting sub-settings and a quantity of non-SBFD-specific CSI reporting sub-settings are both less than or equal to 4, and are kept consistent with a quantity of CSI reporting settings in a conventional solution, to minimize changes to a standard. A total quantity of CSI reporting settings is implicitly increased by increasing an SBFD-specific CSI reporting sub-setting.

S520: The network device sends the second information to the terminal device, and correspondingly, the terminal device receives the second information from the network device.

The second information indicates the first CSI-RS resource and the second CSI-RS resource, the first CSI-RS resource is for receiving a first signal, the second CSI-RS resource is for receiving a second signal, the first signal is for determining the third information, and the second signal is for determining the fourth information.

Optionally, the first CSI-RS resource and the second CSI-RS resource are included in a CSI resource setting (protocol name: CSI Resource Setting, higher layer signaling: CSI-ResourceConfig). For example, the second information indicates the CSI resource setting, and the CSI resource setting includes a first CSI-RS resource and a second CSI-RS resource.

Optionally, a quantity of first CSI-RS resources and a quantity of second CSI-RS resources included in the CSI resource setting are not specifically limited in this application. For example, there may be one or more first CSI-RS resources or one or more second CSI-RS resources.

A specific implementation in which the second information indicates the first CSI-RS resource and the second CSI-RS resource is described below by using an example.

### Solution 1:

In an implementation, the first CSI-RS resource indicates a first time domain resource, the second CSI-RS resource indicates a second time domain resource, the first time domain resource includes an SBFD time unit, and the second time domain resource includes a non-SBFD time unit.

Optionally, the first CSI-RS resource is a CSI-RS resource allocated only in the SBFD time unit, and the second CSI-RS resource is a CSI-RS resource allocated only in the non-SBFD time unit. In other words, the terminal device does not expect that first CSI-RS resources or second CSI-RS resources included in a CSI resource setting are allocated in both the SBFD time unit and the non-SBFD time unit.

Optionally, the first time domain resource includes only an SBFD time unit, and the second time domain resource includes only a non-SBFD time unit. In other words, the first time domain resource does not include the non-SBFD time unit, and the second time domain resource does not include the SBFD time unit. Therefore, the first CSI-RS resource is used only for CSI measurement in the SBFD time unit, and the second CSI-RS resource is used only for CSI measurement in the non-SBFD time unit. That is, the first CSI-RS resource may indicate a parameter used for CSI-RS sending/receiving and CSI measurement in an SBFD time unit, and the second CSI-RS resource may indicate a parameter used for CSI-RS sending/receiving and CSI measurement in a non-SBFD time unit. It should be noted that this optional manner is not affected by a standard, and related limitations on the first CSI-RS resource and the second CSI-RS resource may be configured and implemented by the network device.

Optionally, the terminal device determines the third information based on the first CSI-RS resource and the first signal in the SBFD time unit of the first time domain resource; and/or the terminal device determines the fourth information based on the second CSI-RS resource and the second signal in the non-SBFD time unit of the second time domain resource.

Optionally, whether a port quantity of the first CSI-RS resource and a port quantity of the second CSI-RS resource are the same or whether a CDM type of the first CSI-RS resource and a CDM type of the second CSI-RS resource are the same is not limited in this application.

In a first example, the port quantity of the first CSI-RS resource is the same as the port quantity of the second CSI-RS resource, and the CDM type of the first CSI-RS resource is the same as the CDM type of the second CSI-RS resource.

For example, the first CSI reporting sub-setting includes fifth information, where the fifth information indicates a first port or a first CDM group. For example, that the terminal device receives the first signal based on the first CSI-RS resource includes: The terminal device receives the first signal based on the first port and the first CSI-RS resource; or the terminal device receives the first signal based on the first CDM group and the first CSI-RS resource.

For example, the second CSI reporting sub-setting includes sixth information, where the sixth information indicates a second port or a second CDM group. For example, that the terminal device receives the second signal based on the second CSI-RS resource includes: The terminal device receives the second signal based on the second port and the second CSI-RS resource; or the terminal device receives the second signal based on the second CDM group and the second CSI-RS resource.

In a second example, the port quantity of the first CSI-RS resource is different from the port quantity of the second CSI-RS resource, and the CDM type of the first CSI-RS resource is different from the CDM type of the second CSI-RS resource.

For example, the first CSI reporting sub-setting includes an identifier of the first CSI-RS resource, the second CSI reporting sub-setting includes an identifier of the second CSI-RS resource, the identifier of the first CSI-RS resource indicates the first CSI-RS resource, and the identifier of the second CSI-RS resource indicates the second CSI-RS resource.

### Solution 2:

In an implementation, the first CSI-RS resource is an SBFD-specific CSI-RS resource, and the second CSI-RS resource is a non-SBFD-specific CSI-RS resource. To be specific, the second information in this implementation may indicate all CSI-RS resources in the CSI resource setting, where each CSI-RS resource includes two types of CSI-RS resources, for example, the first-type CSI-RS resource (namely, the SBFD-specific CSI-RS resource) and the second-type CSI-RS resource (namely, the non-SBFD-specific CSI-RS resource).

Optionally, the SBFD-specific CSI-RS resource is a CSI-RS resource allocated only in the SBFD time unit, and the non-SBFD-specific CSI-RS resource is a CSI-RS resource allocated only in the non-SBFD time unit. In other words, the terminal device does not expect any first-type CSI-RS resource to be allocated in the non-SBFD time unit, and the terminal device does not expect any second-type CSI-RS resource to be allocated in the SBFD time unit.

Optionally, the SBFD-specific CSI-RS resource may indicate a parameter used for CSI-RS sending/receiving and CSI measurement in an SBFD time unit, and the non-SBFD-specific CSI-RS resource may indicate a parameter used for CSI-RS sending/receiving and CSI measurement in a non-SBFD time unit.

Optionally, the terminal device determines the third information in an SBFD time unit based on the first signal and the SBFD-specific CSI-RS resource; and/or the terminal device determines the fourth information in a non-SBFD time unit based on the second signal and the non-SBFD-specific CSI-RS resource.

In a first example, the port quantity of the first-type CSI-RS resource is the same as the port quantity of the second-type CSI-RS resource, and the CDM type of the first-type CSI-RS resource is the same as the CDM type of the second-type CSI-RS resource.

For example, the first CSI reporting sub-setting includes fifth information, where the fifth information indicates a first port or a first CDM group. For example, the terminal device receives the first signal based on the first port and the first-type CSI-RS resource; or the terminal device receives the first signal based on the first CDM group and the first-type CSI-RS resource.

For example, the second CSI reporting sub-setting includes sixth information, where the sixth information indicates a second port or a second CDM group. For example, the terminal device receives the second signal based on the second port and the second-type CSI-RS resource; or the terminal device receives the second signal based on the second CDM group and the second-type CSI-RS resource.

In a second example, the port quantity of the first-type CSI-RS resource is different from the port quantity of the second-type CSI-RS resource, and the CDM type of the first-type CSI-RS resource is different from the CDM type of the second-type CSI-RS resource.

For example, the first CSI reporting sub-setting includes an identifier of the first-type CSI-RS resource, the second CSI reporting sub-setting includes an identifier of the second-type CSI-RS resource, the identifier of the first-type CSI-RS resource indicates the first-type CSI-RS resource, and the identifier of the second-type CSI-RS resource indicates the second-type CSI-RS resource.

It should be noted that names of the first-type CSI-RS resource (or the SBFD-specific CSI-RS resource) and the second-type CSI-RS resource (or the non-SBFD-specific CSI-RS resource) are merely examples provided for ease of understanding, and are not limited in this application. It should be understood that, different higher layer signaling names may be used for differentiation. For example, higher layer signaling nzp-CSI-RS-Resource-SBFD and nzp-CSI-RS-Resource may indicate the SBFD-specific CSI-RS resource and the non-SBFD-specific CSI-RS resource respectively, and an ID (for example, nzp-CSI-RS-ResourceId-SBFD) is re-assigned to the SBFD-specific CSI-RS resource, to be distinguished from a CSI-RS resource (nzp-CSI-RS-Resource, nzp-CSI-RS-ResourceId) in a conventional technology.

Optionally, before the foregoing steps S510 and S520 are performed, that is, before the terminal device receives the first information and before the terminal device receives the second information, the method further includes: The terminal device sends first capability information to the network device, where the first capability information indicates that the terminal device supports an SBFD-specific CSI-RS resource configured by the network.

Optionally, the first capability information is carried in the first signaling, the first signaling is RRC signaling, and the first signaling is carried on a PUSCH.

Optionally, the first capability information and the third capability information may be sent by using fourth capability information. For example, before the first information is received and before the second information is received, the method further includes: The terminal device sends the fourth capability information to the network device, where the fourth capability information indicates that the terminal device supports the SBFD-specific CSI-RS resource and the SBFD-specific CSI reporting sub-setting that are configured by the network device.

Optionally, the fourth capability information is carried in the first signaling, the first signaling is RRC signaling, and the first signaling is carried on a PUSCH.

Optionally, a sequence of performing steps S510 and S520 is not limited in this application. For example, the network device may first send the first information and then send the second information to the terminal device; the network device may first send the second information and then send the first information to the terminal device; or the network device may send the first information and the second information to the terminal device at a same moment. Optionally, when the network device sends the first information and the second information to the terminal device at a same moment, the first information and the second information may be sent by using same signaling (for example, RRC signaling or DCI signaling), or may be carried in a same data packet for sending; or the first information and the second information may be sent by using two pieces of signaling, or may be carried in two data packets for sending. This is not limited in this application.

S530: The network device sends the first signal to the terminal device, and correspondingly, the terminal device receives the first signal from the network device.

S540: The network device sends the second signal to the terminal device, and correspondingly, the terminal device receives the second signal from the network device.

For example, both the first signal and the second signal are CSI-RSs. In this implementation, the first signal is a CSI-RS allocated in an SBFD time unit, and the second signal is a CSI-RS allocated in a non-SBFD time unit. For example, the network device sends the first signal on the first CSI-RS resource, and correspondingly, the terminal device receives the first signal on the first CSI-RS resource; and the network device sends the second signal on the second CSI-RS resource, and correspondingly, the terminal device receives the second signal on the second CSI-RS resource.

It should be understood that the CSI-RS in this embodiment of this application cannot be sent in an uplink time unit.

In an implementation, in the SBFD time unit of the first time domain resource, the network device sends the first signal to the terminal device based on the first CSI-RS resource, and correspondingly, the terminal device receives the first signal from the network device based on the first CSI-RS resource. In the non-SBFD time unit of the second time domain resource, the network device sends the second signal to the terminal device based on the second CSI-RS resource, and correspondingly, the terminal device receives the second signal from the network device based on the second CSI-RS resource.

In other words, the network device sends the CSI in the SBFD time unit of the first time domain resource and the non-SBFD time unit of the second time domain resource. Correspondingly, the terminal device receives the CSI in the SBFD time unit of the first time domain resource and the non-SBFD time unit of the second time domain resource.

S550: The terminal device determines the third information based on the first signal.

For example, the first signal may be a CSI-RS, and the third information may be CSI.

Optionally, the third information may be CSI in an SBFD time unit, that is, the terminal device measures the CSI-RS in the SBFD time unit to obtain the third information.

For example, the third information may be determined based on the first signal (a first part) indicated by the first (type) CSI-RS resource associated with the first (type) CSI reporting sub-setting.

For example, the terminal device receives the first signal (the first part) on the first (type) CSI-RS resource, and measures the received first signal based on information included in the first (type) CSI-RS resource, to obtain the third information.

S560: The terminal device determines the fourth information based on the second signal.

For example, the second signal may be a CSI-RS, and the fourth information may be CSI.

Optionally, the fourth information may be CSI in a non-SBFD time unit, that is, the terminal device measures the CSI-RS in the non-SBFD time unit to obtain the fourth information.

For example, the fourth information may be determined based on the first signal (a second part) indicated by the second (type) CSI-RS resource associated with the second (type) CSI reporting sub-setting.

For example, the terminal device receives the first signal (the second part) on the second (type) CSI-RS resource, and measures the received second signal based on information included in the second (type) CSI-RS resource, to obtain the fourth information.

It should be understood that, in the foregoing steps S550 and S560, the third information (for example, CSI) in the SBFD time unit and the fourth information (for example, CSI) in the non-SBFD time unit are separately measured because two different CSI-RS resources (for example, the first CSI-RS resource and the second CSI-RS resource) are used.

Optionally, a sequence of performing step S550 and step S560 is not limited in this application. In other words, a sequence of determining the third information and the fourth information is not specifically limited in this application. For example, the terminal device may first determine the third information and then determine the fourth information; or the terminal device may first determine the fourth information and then determine the third information, provided that the third information and the fourth information are sent by using one CSI reporting setting. This is not limited in this application.

S570: The terminal device sends the third information and the fourth information to the network device based on the CSI reporting setting, and correspondingly, the network device receives the third information and the fourth information from the terminal device based on the CSI reporting setting.

The third information and the fourth information may be carried on a first PUCCH or a first PUSCH. Optionally, the first PUCCH or the first PUSCH may be considered as one PUCCH or one PUSCH.

Optionally, the fourth information may be carried in a fourth signal, where the fourth signal is determined based on the second (type) CSI reporting setting.

It should be understood that CSI in an SBFD time unit and CSI in a non-SBFD time unit are simultaneously reported, that is, are carried on a same PUSCH or PUCCH. This is because one CSI reporting setting is used.

Based on the foregoing solution, a quantity of CSI reporting settings (for example, CSI-ReportSubConfig) is increased, or an SBFD-specific CSI reporting sub-setting (for example, CSI-ReportSubConfig-SBFD) is introduced, so that the first CSI reporting sub-setting and the second CSI reporting sub-setting are associated with the first CSI-RS resource and the second CSI-RS resource respectively, thereby reducing unnecessary signaling overheads. In addition, CSI measurement in scenarios with different quantities of antenna ports is implemented and CSI obtained through measurement in an SBFD time unit and a non-SBFD time unit is simultaneously sent, without additionally increasing a quantity of CSI reporting settings (for example, CSI-ReportConfig), thereby improving CSI reporting flexibility in an SBFD scenario.

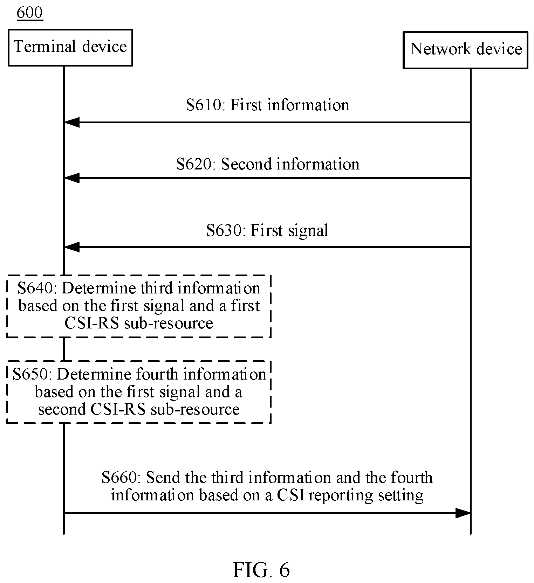

FIG. 6 is a schematic flowchart of a communication method according to an embodiment of this application. As shown in FIG. 6, the method includes the following steps.

S610: A network device sends first information to a terminal device, and correspondingly, the terminal device receives the first information from the network device.

The first information indicates a CSI reporting setting (protocol name: CSI Reporting Setting, higher layer signaling: CSI-ReportConfig). For specific explanations, refer to related descriptions of step S510 in the foregoing method 500.

A specific implementation in which the first information indicates the CSI reporting setting is described below by using examples.

### Solution 1:

In an implementation, a first CSI reporting sub-setting includes first indication information, and a second CSI reporting sub-setting includes second indication information, where the first indication information indicates that a first measurement result is to be reported via a resource indicated by the first CSI reporting sub-setting, the first measurement result includes a result obtained by measurement on a first CSI-RS sub-resource, the second indication information indicates that a second measurement result is to be reported via a resource indicated by the second CSI reporting sub-setting, and the second measurement result includes a result obtained by measurement on a second CSI-RS sub-resource. For a specific implementation, refer to related descriptions of step S510 in the foregoing method 500. Details are not described herein again.

For parameters included in the first CSI reporting sub-setting and the second CSI reporting sub-setting and meanings of the parameters, refer to related descriptions of step S510 in the foregoing method 500.

### Solution 2:

In an implementation, a first CSI reporting sub-setting is an SBFD-specific CSI reporting sub-setting, and a second CSI reporting sub-setting is a non-SBFD-specific CSI reporting sub-setting. To be specific, the first information in this implementation may indicate two types of CSI reporting sub-settings, for example, a first-type CSI reporting sub-setting (that is, the SBFD-specific CSI reporting sub-setting) and a second-type CSI reporting sub-setting (that is, the non-SBFD-specific CSI reporting sub-setting). For a specific implementation, refer to related descriptions of step S510 in the foregoing method 500. Details are not described herein again.

For parameters included in the first-type CSI reporting sub-setting and the second-type CSI reporting sub-setting and meanings of the parameters, refer to related descriptions of step S510 in the foregoing method 500.

Optionally, before the first information is received, and before second information is received, the method further includes: The terminal device sends third capability information to the network device, where the third capability information indicates that the terminal device supports an SBFD-specific CSI reporting sub-setting configured by a network.

Optionally, the third capability information is carried in first signaling, the first signaling is RRC signaling, and the first signaling is carried on a PUSCH.

Optionally, the second information may further indicate N2 SBFD-specific CSI reporting sub-settings and N3 non-SBFD-specific CSI reporting sub-settings. Optionally, N2 ≤ 4, N3 ≤ 4, N2 + N3 ≤ 8, and N2 and N3 are positive integers.

S620: The network device sends the second information to the terminal device, and correspondingly, the terminal device receives the second information from the network device.

The second information indicates a CSI-RS resource. For a specific meaning, refer to related descriptions of step S420 in the foregoing method 400.

A specific implementation in which the second information indicates the CSI-RS resource is described below by using an example.

### Solution 1:

In an implementation, the CSI-RS resource further includes a first periodicity and an offset parameter, where the first periodicity and the offset parameter indicate a first time domain resource. To be specific, the second information in this implementation may indicate all CSI-RS resources in the CSI resource setting, where each CSI-RS resource includes the first periodicity, the offset parameter, and two CSI-RS sub-resources (for example, the first CSI-RS sub-resource and the second CSI-RS sub-resource). For a specific implementation, refer to related descriptions of step S420 in the foregoing method 400. Details are not described herein again.

For parameters included in the first CSI-RS sub-resource and the second CSI-RS sub-resource and meanings of the parameters, refer to related descriptions of step S420 in the foregoing method 400.

### Solution 2:

In an implementation, the first CSI-RS sub-resource includes a second periodicity and an offset parameter, the second periodicity and the offset parameter indicate a second time domain resource, the second CSI-RS sub-resource includes a third periodicity and the offset parameter, and the third periodicity and the offset parameter indicate a third time domain resource. To be specific, the second information in this implementation may indicate all CSI-RS resources in the CSI resource setting, where each CSI-RS resource includes two CSI-RS sub-resources, for example, the first CSI-RS sub-resource and the second CSI-RS sub-resource. For a specific implementation, refer to related descriptions of step S420 in the foregoing method 400. Details are not described herein again.

For parameters further included in the first CSI-RS sub-resource and the second CSI-RS sub-resource and meanings of the parameters, refer to related descriptions of step S420 in the foregoing method 400.

### Solution 3:

The first CSI-RS sub-resource is an SBFD-specific CSI-RS sub-resource, and the second CSI-RS sub-resource is a non-SBFD-specific CSI-RS sub-resource. To be specific, the second information in this implementation may indicate all CSI-RS resources in the CSI resource setting, where each CSI-RS resource includes two types of CSI-RS sub-resources, for example, a first-type CSI-RS sub-resource (namely, the SBFD-specific CSI-RS sub-resource) and a second-type CSI-RS sub-resource (namely, the non-SBFD-specific CSI-RS sub-resource). For a specific implementation, refer to related descriptions of step S420 in the foregoing method 400, and details are not described herein again.

For parameters further included in the first-type CSI-RS sub-resource and the second-type CSI-RS sub-resource and meanings of the parameters, refer to related descriptions of step S420 in the foregoing method 400.

Optionally, whether a port quantity of the first CSI-RS sub-resource and a port quantity of the second CSI-RS sub-resource are the same or whether a CDM type of the first CSI-RS sub-resource and a CDM type of the second CSI-RS sub-resource are the same is not limited in this application.

In a first implementation, the port quantity of the first CSI-RS sub-resource is the same as the port quantity of the second CSI-RS sub-resource, and the CDM type of the first CSI-RS sub-resource is the same as the CDM type of the second CSI-RS sub-resource.

In a second implementation, the port quantity of the first CSI-RS sub-resource is different from the port quantity of the second CSI-RS sub-resource, and the CDM type of the first CSI-RS sub-resource is different from the CDM type of the second CSI-RS sub-resource.

For example, the first CSI reporting sub-setting includes an identifier of the first CSI-RS sub-resource, the second CSI reporting sub-setting includes an identifier of the second CSI-RS sub-resource, the identifier of the first CSI-RS sub-resource indicates the first CSI-RS sub-resource, and the identifier of the second CSI-RS sub-resource indicates the second CSI-RS sub-resource.

Optionally, before the foregoing steps S610 and S620 are performed, that is, before the terminal device receives the first information and before the terminal device receives the second information, the method further includes: The terminal device sends first capability information to the network device, where the first capability information indicates that the terminal device supports an SBFD-specific CSI-RS sub-resource configured by the network.

Optionally, the first capability information is carried in the first signaling, the first signaling is RRC signaling, and the first signaling is carried on a PUSCH.

Optionally, the first capability information and the third capability information may be sent by using fourth capability information. For example, before the first information is received and before the second information is received, the method further includes: The terminal device sends the fourth capability information to the network device, where the fourth capability information indicates that the terminal device supports the SBFD-specific CSI-RS sub-resource and the SBFD-specific CSI reporting sub-setting that are configured by the network device.

Optionally, the fourth capability information is carried in the first signaling, the first signaling is RRC signaling, and the first signaling is carried on a PUSCH.

Optionally, a sequence of performing steps S610 and S620 is not limited in this application. For a specific implementation, refer to the foregoing related descriptions.

S630: The network device sends a first signal to the terminal device, and correspondingly, the terminal device receives the first signal from the network device.

For example, the network device sends the first signal on the first CSI-RS sub-resource, and correspondingly, the terminal device receives the first signal on the first CSI-RS sub-resource; or the network device sends the first signal on the second CSI-RS sub-resource, and correspondingly, the terminal device receives the first signal on the second CSI-RS sub-resource.

Optionally, the first CSI reporting sub-setting further includes fifth information, where the fifth information indicates a first port or a first CDM group. For example, the network device receives the first signal based on the first port and the first CSI-RS sub-resource; or the network device receives the first signal based on the first CDM group and the first CSI-RS sub-resource.

Optionally, the second CSI reporting sub-setting further includes sixth information, where the sixth information indicates a second port or a second CDM group. For example, the network device receives the first signal based on the second port and the second CSI-RS sub-resource; or the network device receives the first signal based on the second CDM group and the second CSI-RS sub-resource.

S640: The terminal device determines third information based on the first signal and the first CSI-RS sub-resource.

In an example, the first CSI reporting sub-setting further includes seventh information, where the seventh information indicates a first port or a first CDM group. For example, that the network device determines the third information based on the first signal and the first CSI-RS sub-resource includes: The network device determines the third information based on the first signal, the first CSI-RS sub-resource, and the first port; or the network device determines the third information based on the first signal, the first CSI-RS sub-resource, and the first CDM group.

S650: The terminal device determines fourth information based on the first signal and the second CSI-RS sub-resource.

In an example, the second CSI reporting sub-setting further includes eighth information, where the eighth information indicates a second port or a second CDM group. For example, that the network device determines the fourth information based on the first signal and the second CSI-RS sub-resource includes: The network device determines the fourth information based on the first signal, the second CSI-RS sub-resource, and the second port; or the network device determines the fourth information based on the first signal, the second CSI-RS sub-resource, and the second CDM group.

For a specific implementation of steps S630 to S650, refer to related descriptions of steps S430, S440, and S460 in the method 400. Details are not described herein again.

S660: The terminal device sends the third information and the fourth information to the network device based on the CSI reporting setting, and correspondingly, the network device receives the third information and the fourth information from the terminal device based on the CSI reporting setting.

For a specific implementation, refer to related descriptions of step S570 in the foregoing method 500. Details are not described herein again.

Based on the foregoing solution, the first CSI-RS sub-resource and the second CSI-RS sub-resource (for example, NZP-CSI-RS-SubResource) are introduced, so that CSI-RSs are sent and CSI measurement is performed in an SBFD time unit and a non-SBFD time unit, without increasing a quantity of CSI-RS resources (for example, NZP-CSI-RS-Resource), thereby improving flexibility of CSI measurement in the SBFD scenario. In addition, a quantity of CSI reporting settings (for example, CSI-ReportSubConfig) is increased, or an SBFD-specific CSI reporting sub-setting (for example, CSI-ReportSubConfig-SBFD) is introduced, so that the first CSI reporting sub-setting and the second CSI reporting sub-setting are associated with the first CSI-RS sub-resource and the second CSI-RS sub-resource respectively, thereby reducing unnecessary signaling overheads. In addition, CSI measurement in scenarios with different quantities of antenna ports is implemented and CSI obtained through measurement in an SBFD time unit and a non-SBFD time unit is reported, without additionally increasing a quantity of CSI reporting settings (for example, CSI-ReportConfig), thereby improving CSI reporting flexibility in an SBFD scenario.

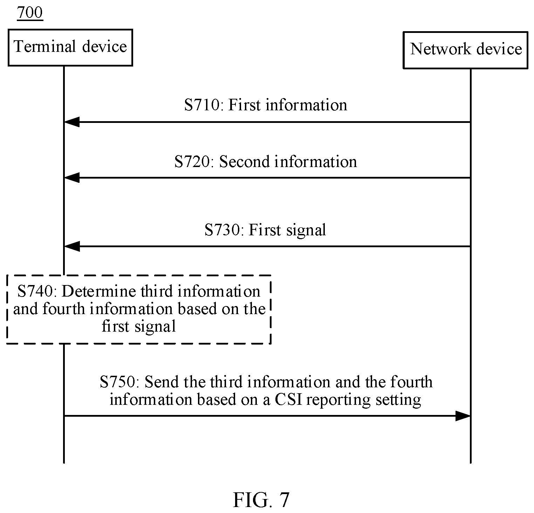

FIG. 7 is a schematic flowchart of a communication method according to an embodiment of this application. As shown in FIG. 7, the method includes the following steps.

S710: A network device sends first information to a terminal device, and correspondingly, the terminal device receives the first information from the network device.

The first information indicates a CSI reporting setting (protocol name: CSI Reporting Setting, higher layer signaling: CSI-ReportConfig). For specific explanations, refer to related descriptions of step S610 in the foregoing method 600.

Optionally, before the first information is received, and before second information is received, the method further includes: The terminal device sends third capability information to the network device, where the third capability information indicates that the terminal device supports an SBFD-specific CSI reporting sub-setting configured by a network.

Optionally, the third capability information is carried in first signaling, the first signaling is RRC signaling, and the first signaling is carried on a PUSCH.

Optionally, the second information may further indicate N2 SBFD-specific CSI reporting sub-settings and N3 non-SBFD-specific CSI reporting sub-settings. Optionally, N2 ≤ 4, N3 ≤ 4, N2 + N3 ≤ 8, and N2 and N3 are positive integers.

S720: The network device sends the second information to the terminal device, and correspondingly, the terminal device receives the second information from the network device.

The second information indicates a CSI-RS resource, the CSI-RS resource is for receiving a first signal, and the first signal is for determining third information and fourth information.

Optionally, the CSI-RS resource is included in a CSI resource setting (protocol name: CSI Resource Setting, higher layer signaling: CSI-ResourceConfig). Optionally, the second information indicates the CSI resource setting, and the CSI resource setting indicates the CSI-RS resource.

A specific implementation in which the second information indicates the CSI-RS resource is described below by using an example.

### Solution 1:

In an implementation, the CSI resource includes a first periodicity and an offset parameter, where the first periodicity and the offset parameter indicate a first time domain resource. To be specific, the second information in this implementation may indicate all CSI-RS resources in the CSI resource setting, where each CSI-RS resource includes the first periodicity and the offset parameter. For a specific implementation, refer to related descriptions of step S420 in the foregoing method 400. Details are not described herein again.

Optionally, before the foregoing steps S710 and S720 are performed, that is, before the terminal device receives the first information and before the terminal device receives the second information, the method further includes: The terminal device sends first capability information to the network device, where the first capability information indicates that the terminal device supports a CSI-RS resource configured by the network.

Optionally, the first capability information is carried in the first signaling, the first signaling is RRC signaling, and the first signaling is carried on a PUSCH.

Optionally, the first capability information and the third capability information may be sent by using fourth capability information. For example, before the first information is received and before the second information is received, the method further includes: The terminal device sends the fourth capability information to the network device, where the fourth capability information indicates that the terminal device supports the SBFD-specific CSI-RS sub-resource and the SBFD-specific CSI reporting sub-setting that are configured by the network device.

Optionally, the fourth capability information is carried in the first signaling, the first signaling is RRC signaling, and the first signaling is carried on a PUSCH.

Optionally, a sequence of performing steps S710 and S720 is not limited in this application. For a specific implementation, refer to the foregoing related descriptions.

S730: The network device sends the first signal to the terminal device, and correspondingly, the terminal device receives the first signal from the network device.

For example, the network device sends the first signal on the CSI-RS resource, and correspondingly, the terminal device receives the first signal on the CSI-RS resource.

In an example, a first CSI reporting sub-setting further includes fifth information, where the fifth information indicates a first port or a first CDM group. For example, the network device sends the first signal to the terminal device based on the first port and the CSI-RS resource, and correspondingly, the terminal device receives the first signal from the network device based on the first port and the CSI-RS resource; or the network device sends the first signal to the terminal device based on the first CDM group and the CSI-RS resource, and correspondingly, the terminal device receives the first signal from the network device based on the first CDM group and the CSI-RS resource.

In an example, the second CSI reporting sub-setting further includes seventh information, where the seventh information indicates a second port or a second CDM group. For example, the network device sends the first signal to the terminal device based on the second port and the CSI-RS resource, and correspondingly, the terminal device receives the first signal from the network device based on the second port and the CSI-RS resource; or the network device sends the first signal to the terminal device based on the second CDM group and the CSI-RS resource, and correspondingly, the terminal device receives the first signal from the network device based on the second CDM group and the CSI-RS resource.

S740: The terminal device determines the third information and the fourth information based on the first signal.

Optionally, the terminal device determines the third information in an SBFD time unit of the first time domain resource based on the first signal and the CSI-RS resource; and/or the terminal device determines the fourth information in a non-SBFD time unit of the first time domain resource based on the first signal and the CSI-RS resource.

In an example, the first CSI reporting sub-setting further includes sixth information, where the sixth information indicates the first port or the first CDM group. For example, that the network device determines the third information based on the first signal includes: The network device determines the third information based on the first signal, the CSI-RS resource, and the first port; or the network device determines the third information based on the first signal, the CSI-RS resource, and the first CDM group.

In an example, the second CSI reporting sub-setting further includes eighth information, where the eighth information indicates a second port or a second CDM group. For example, that the network device determines the fourth information based on the first signal includes: The network device determines the fourth information based on the first signal, the CSI-RS resource, and the second port; or the network device determines the fourth information based on the first signal, the CSI-RS resource, and the second CDM group.

S750: The terminal device sends the third information and the fourth information to the network device based on the CSI reporting setting, and correspondingly, the network device receives the third information and the fourth information from the terminal device based on the CSI reporting setting.

For a specific implementation, refer to related descriptions of step S660 in the foregoing method 600. Details are not described herein again.

Based on the foregoing solution, a quantity of CSI reporting settings (for example, CSI-ReportSubConfig) is increased, or an SBFD-specific CSI reporting sub-setting (for example, CSI-ReportSubConfig-SBFD) is introduced, so that CSI measurement in scenarios with different quantities of antenna ports is implemented and CSI obtained through measurement in an SBFD time unit and a non-SBFD time unit is reported, without additionally increasing a quantity of CSI reporting settings (for example, CSI-ReportConfig), thereby improving CSI reporting flexibility in an SBFD scenario.

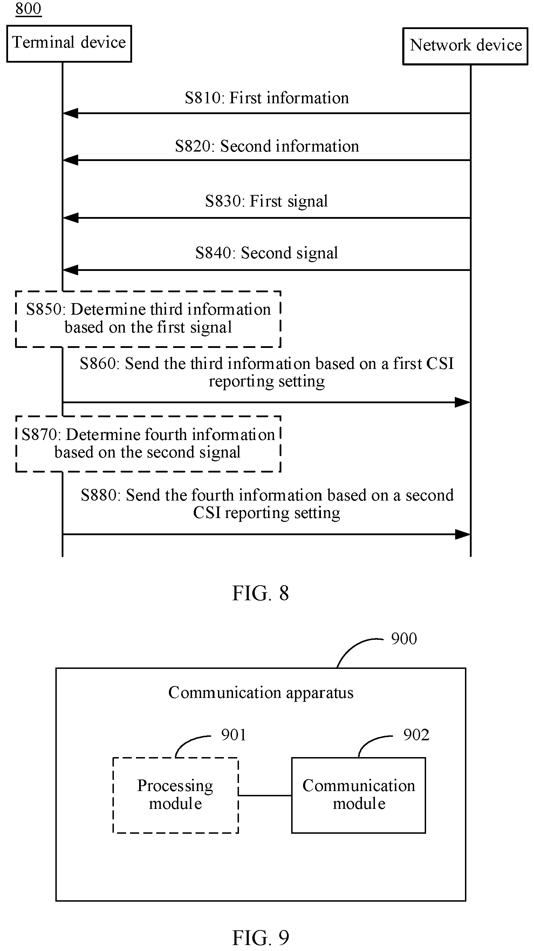

FIG. 8 is a schematic flowchart of a communication method according to an embodiment of this application. As shown in FIG. 8, the method includes the following steps.

S810: A network device sends first information to a terminal device, and correspondingly, the terminal device receives the first information from the network device.

The first information indicates a first CSI reporting setting (protocol name: CSI Reporting Setting, higher layer signaling: CSI-ReportConfig) and a second CSI reporting setting, where the first CSI reporting setting is for reporting third information, the second CSI reporting setting is for reporting fourth information, the third information includes CSI in an SBFD time unit, and the fourth information includes CSI in a non-SBFD time unit.

For example, the third information and the fourth information may be CSI.

In other words, the first CSI reporting setting is a CSI reporting setting used in an SBFD time unit, and the second CSI reporting setting is a CSI reporting setting used in a non-SBFD time unit. Alternatively, the first CSI reporting setting is for reporting CSI obtained through CSI measurement in the SBFD time unit, and the second CSI reporting setting is for reporting CSI obtained through CSI measurement in the non-SBFD time unit.

The following describes specific implementations in which the first information indicates the first CSI reporting setting and the second CSI reporting setting by using examples.

### Solution 1:

In a first implementation, the first CSI reporting setting includes first indication information, where the first indication information indicates that a first measurement result is to be reported via a resource indicated by the first CSI reporting setting, and the first measurement result includes a result obtained by measurement on a first CSI-RS sub-resource; the second CSI reporting setting includes second indication information, where the second indication information indicates that a second measurement result is to be reported via a resource indicated by the second CSI reporting setting, and the second measurement result includes a result obtained by measurement on a second CSI-RS sub-resource. For a specific implementation, refer to related descriptions of step S410 in the foregoing method 400. Details are not described herein again.

Optionally, before the first information is received, and before second information is received, the method further includes: The terminal device sends second capability information to the network device, where the second capability information indicates that the terminal device supports a maximum value N of CSI reporting setting configured by the network. Optionally, the second information further indicates N1 CSI reporting settings, where N1 is a positive integer less than or equal to N. In other words, the terminal device does not expect a quantity of CSI reporting settings configured by a network for the terminal device to exceed N.

For example, N is greater than 4. For example, N may be equal to any one of 6, 8, 10, 12, 16, and 32. CSI reporting flexibility in an SBFD scenario can be improved by increasing a quantity of CSI reporting settings.

Optionally, the second capability information is carried in first signaling, the first signaling is RRC signaling, and the first signaling is carried on a PUSCH.

### Solution 2:

In an implementation, the first CSI reporting setting is an SBFD-specific CSI reporting setting, and the second CSI reporting setting is a non-SBFD-specific CSI reporting setting. To be specific, the first information in this implementation may indicate two types of CSI reporting settings, for example, a first-type CSI reporting setting (that is, the SBFD-specific CSI reporting setting) and a second-type CSI reporting setting (that is, the non-SBFD-specific CSI reporting setting). For a specific implementation, refer to related descriptions of step S410 in the foregoing method 400. Details are not described herein again.

Optionally, before the first information is received, and before second information is received, the method further includes: The terminal device sends third capability information to the network device, where the third capability information indicates that the terminal device supports an SBFD-specific CSI reporting setting configured by a network.

Optionally, the third capability information is carried in first signaling, the first signaling is RRC signaling, and the first signaling is carried on a PUSCH.

Optionally, the second information may further indicate N2 SBFD-specific CSI reporting settings and N3 non-SBFD-specific CSI reporting settings. Optionally, N2 ≤ 4, N3 ≤ 4, N2 + N3 ≤ 8, and N2 and N3 are positive integers. It should be understood that, a quantity of SBFD-specific CSI reporting settings and a quantity of non-SBFD-specific CSI reporting settings are both less than or equal to 4. A total quantity of CSI reporting settings is implicitly increased by increasing an SBFD-specific CSI reporting setting.

S820: The network device sends the second information to the terminal device, and correspondingly, the terminal device receives the second information from the network device.

The second information indicates the first CSI-RS resource and the second CSI-RS resource, the first CSI-RS resource is for receiving a first signal, the second CSI-RS resource is for receiving a second signal, the first signal is for determining the third information, and the second signal is for determining the fourth information.

Optionally, the first CSI-RS resource and the second CSI-RS resource are included in a CSI resource setting (protocol name: CSI Resource Setting, higher layer signaling: CSI-ResourceConfig). For example, the second information indicates the CSI resource setting, and the CSI resource setting includes a first CSI-RS resource and a second CSI-RS resource.

Optionally, a quantity of first CSI-RS resources and a quantity of second CSI-RS resources included in the CSI resource setting are not specifically limited in this application. For example, there may be one or more first CSI-RS resources or one or more second CSI-RS resources.

A specific implementation in which the second information indicates the first CSI-RS resource and the second CSI-RS resource is described below by using an example.

### Solution 1:

In an implementation, the first CSI-RS resource indicates a first time domain resource, the second CSI-RS resource indicates a second time domain resource, the first time domain resource includes an SBFD time unit, and the second time domain resource includes a non-SBFD time unit. For a specific implementation, refer to related descriptions of step S520 in the method 500. Details are not described herein again.

Optionally, whether a port quantity of the first CSI-RS resource and a port quantity of the second CSI-RS resource are the same or whether a CDM type of the first CSI-RS resource and a CDM type of the second CSI-RS resource are the same is not limited in this application. For a specific implementation, refer to related descriptions of step S520 in the method 500. Details are not described herein again.

### Solution 2:

In an implementation, the first CSI-RS resource is an SBFD-specific CSI-RS resource, and the second CSI-RS resource is a non-SBFD-specific CSI-RS resource. To be specific, the second information in this implementation may indicate all CSI-RS resources in the CSI resource setting, where each CSI-RS resource includes two types of CSI-RS resources, for example, a first-type CSI-RS resource (namely, the SBFD-specific CSI-RS resource) and a second-type CSI-RS resource (namely, the non-SBFD-specific CSI-RS resource). For a specific implementation, refer to related descriptions of step S520 in the foregoing method 500, and details are not described herein again.

It should be noted that names of the first-type CSI-RS resource (or the SBFD-specific CSI-RS resource) and the second-type CSI-RS resource (or the non-SBFD-specific CSI-RS resource) are merely examples provided for ease of understanding, and are not limited in this application.

Optionally, before the foregoing steps S810 and S820 are performed, that is, before the terminal device receives the first information and before the terminal device receives the second information, the method further includes: The terminal device sends first capability information to the network device, where the first capability information indicates that the terminal device supports an SBFD-specific CSI-RS resource configured by the network.

Optionally, the first capability information is carried in the first signaling, the first signaling is RRC signaling, and the first signaling is carried on a PUSCH.

Optionally, the first capability information and the third capability information may be sent by using fourth capability information. For example, before the first information is received and before the second information is received, the method further includes: The terminal device sends the fourth capability information to the network device, where the fourth capability information indicates that the terminal device supports the SBFD-specific CSI-RS resource and the SBFD-specific CSI reporting sub-setting that are configured by the network device.

Optionally, the fourth capability information is carried in the first signaling, the first signaling is RRC signaling, and the first signaling is carried on a PUSCH.

Optionally, a sequence of performing steps S810 and S820 is not limited in this application. For details, refer to the foregoing related descriptions.

S830: The network device sends the first signal to the terminal device, and correspondingly, the terminal device receives the first signal from the network device.

S840: The network device sends the second signal to the terminal device, and correspondingly, the terminal device receives the second signal from the network device.

For a specific implementation of steps S830 and S840, refer to related descriptions of steps S530 and S540 in the method 500.

S850: The terminal device determines the third information based on the first signal.

S860: The terminal device sends the third information to the network device based on the first CSI reporting setting, and correspondingly, the network device receives the third information from the terminal device based on the first CSI reporting setting.

S870: The terminal device determines the fourth information based on the second signal.

S880: The terminal device sends the fourth information to the network device based on the second CSI reporting setting, and correspondingly, the network device receives the fourth information from the terminal device based on the second CSI reporting setting.

For specific implementations of steps S850 and S870, refer to related descriptions of steps S550 and S560 in the method 500. For specific implementations of steps S860 and S880, refer to related descriptions of steps S450 and S470 in the method 400.

According to the solution provided in this application, a quantity of CSI reporting settings (for example, CSI-ReportConfig) is increased, or an SBFD-specific CSI reporting setting (for example, CSI-ReportConfig-SBFD) is introduced, to improve flexibility of CSI reporting in an SBFD scenario. In this way, flexibility of CSI measurement and reporting can be achieved when a quantity of antenna ports on the base station side in an SBFD time unit is different from that in a non-SBFD time unit.

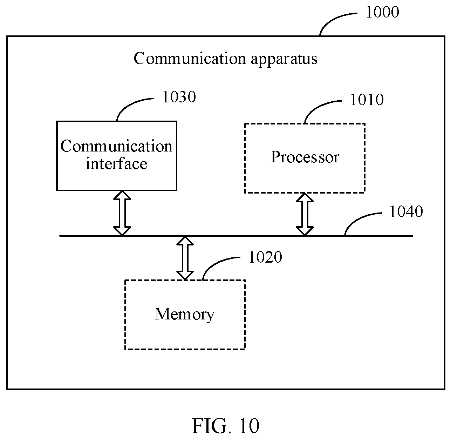

The foregoing describes in detail embodiments on a communication method side in this application with reference to FIG. 1 to FIG. 8. The following describes in detail embodiments on the communication apparatus side in this application with reference to FIG. 9 and FIG. 10. It should be understood that descriptions of the apparatus embodiments correspond to the descriptions of the method embodiments, and therefore for a part that is not described in detail, refer to the foregoing method embodiments.

FIG. 9 is a diagram of a communication apparatus according to an embodiment of this application. As shown in FIG. 9, the communication apparatus 900 includes a processing module 901 and a communication module 902. The communication apparatus 900 may be a terminal device, or may be a communication apparatus, for example, a chip, a chip system, or a circuit, that is used in the terminal device or used by matching with the terminal device and that can implement a method performed by the terminal device. Alternatively, the communication apparatus 900 may be a network device, or may be a communication apparatus, for example, a chip, a chip system, or a circuit, that is used in the network device or used by matching with the network device and that can implement a method performed by the network device.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device, the network device in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 900 is used in the terminal device, the processing module 901 may be configured to implement a processing function of the terminal device in the foregoing embodiments, and the communication module 902 may be configured to implement receiving and sending functions of the terminal device in the foregoing embodiments.

When the communication apparatus 900 is used in the network device, the processing module 901 may be configured to implement a processing function of the network device in the foregoing embodiments, and the communication module 902 may be configured to implement receiving and sending functions of the network device in the foregoing embodiments.

In addition, it should be noted that the communication module and/or the processing module may be implemented using a virtual module. For example, the processing module may be implemented using a software functional unit or a virtual apparatus, and the communication module may be implemented using a software functional or virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, is merely logical function division, and may be other division in actual implementation. In addition, functional modules in the examples of this application may be integrated into one processor, each of the modules may exist alone physically, or two or more modules may be integrated into one module. The integrated module may be implemented in a form of hardware, or may be implemented in a form of a software functional module.

FIG. 10 is a diagram of another communication apparatus according to an embodiment of this application. As shown in FIG. 10, optionally, the communication apparatus 1000 may be a chip or a chip system. Optionally, the chip system in this application may include a chip, or may include a chip and another discrete component.

The communication apparatus 1000 may be configured to implement a function of any device (for example, the terminal device or the network device) in the communication system described in the foregoing examples. The communication apparatus 1000 may include at least one processor 1010. Optionally, the processor 1010 is coupled to a memory. The memory may be located in the apparatus. Alternatively, the memory may be integrated with the processor. Alternatively, the memory may be located outside the apparatus. For example, the communication apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (or referred to as receiving information) and output information (or referred to as sending information). The processor 1010 is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1010 may operate in collaboration with the memory 1020 and the communication interface 1030. A specific medium connecting the processor 1010, the memory 1020, and the communication interface 1030 is not limited in this application.

Optionally, as shown in FIG. 10, the processor 1010, the memory 1020, and the communication interface 1030 are connected to each other by using a bus 1040. Optionally, the bus may include a type of bus such as an address bus, a data bus, or a control bus. In addition, for ease of representation, FIG. 10 shows one bus 1040, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions used to implement the methods performed by the terminal device and the network device in the foregoing method embodiments.

An embodiment of this application further provides a computer program product, including instructions. When the instructions are executed by a computer, the methods performed by the terminal device and the network device in the foregoing method embodiments are implemented.

An embodiment of this application further provides a communication system. The communication system includes the terminal device and the network device in the foregoing embodiments.

For explanations and beneficial effects of related content of any one of the apparatuses provided above, refer to the corresponding method embodiments provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" usually indicates an "or" relationship between associated objects. "At least one item (piece) of the following" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indicate" or "for indicating" may include "directly indicate" and "indirectly indicate". When a piece of indication information indicates A, the indication information may directly indicate A or indirectly indicate A, but it does not indicate that the indication information definitely carries A.
   Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in embodiments of this application.
   The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.
(6) In this application, a "protocol" may be a standard protocol in the communication field, for example, may include a 5G protocol, an NR protocol, and a related protocol used in a future communication system. This is not limited in this application. "Predefined" may include being defined in advance, for example, being protocol-defined. "Pre-configuration" may be implemented by pre-storing corresponding code or a corresponding table in a device, or may be implemented in another manner that may indicate related information. A specific implementation thereof is not limited in this application.
(7) In this application, "communication" may also be described as "data transmission", "information transmission", "data processing", or the like. "Transmission" includes "sending" and "receiving".
(8) In this application, "sending information to XX (a device)" may be understood as that a destination of the information is the device, and may include directly or indirectly sending the information to the device. "Receiving information from XX (a device) or receiving information that is from XX (a device)" may be understood as that a source of the information is the device, and may include directly or indirectly receiving the information from the device. The information may undergo necessary processing, for example, a format change, between the source end and the destination end of information sending. However, the destination end may understand valid information from the source end.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It should be understood that, in some of the foregoing embodiments, a device in an existing network architecture is mainly used as an example for description. A specific form of the device is not limited in embodiments of this application. For example, all devices that can implement a same function in the future are applicable to embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that, for convenience and conciseness of description, for the specific working processes of the systems, apparatuses and units described above, refer to the corresponding processes in the method embodiments. Details are not described herein again.

In the several embodiments provided in this application, it should be understood that the disclosed system, apparatus, and method may be implemented in other manners. For example, the apparatus embodiments described above are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information indicates a first channel state information CSI reporting setting and a second CSI reporting setting, wherein the first CSI reporting setting is for reporting third information, the second CSI reporting setting is for reporting fourth information, the third information comprises CSI in a subband full duplex SBFD time unit, and the fourth information comprises CSI in a non-SBFD time unit;
receiving second information, wherein the second information indicates a channel state information reference signal CSI-RS resource, the CSI-RS resource is for receiving a first signal, the CSI-RS resource comprises a first CSI-RS sub-resource and a second CSI-RS sub-resource, the first signal and the first CSI-RS sub-resource are for determining the third information, and the first signal and the second CSI-RS sub-resource are for determining the fourth information;
receiving the first signal based on the CSI-RS resource;
sending the third information based on the first CSI reporting setting, wherein the third information is carried on a first physical uplink control channel PUCCH or a first physical uplink shared channel PUSCH; and
sending the fourth information based on the second CSI reporting setting, wherein the fourth information is carried on a second PUCCH or a second PUSCH.

2. The method according to claim 1, wherein the CSI-RS resource further comprises a first periodicity and an offset parameter, wherein the first periodicity and the offset parameter indicate a first time domain resource; and the method further comprises:
determining the third information in an SBFD time unit of the first time domain resource based on the first signal and the first CSI-RS sub-resource; and
determining the fourth information in a non-SBFD time unit of the first time domain resource based on the first signal and the second CSI-RS sub-resource.

3. The method according to claim 1 or 2, wherein
the first CSI-RS sub-resource comprises at least one of the following:
an identifier of the first CSI-RS sub-resource, a first power control offset, a second power control offset, a first resource mapping pattern, or first quasi co-location QCL information, wherein the first power control offset is for determining power of the first CSI-RS sub-resource, and the second power control offset is for determining the power of the second CSI-RS sub-resource; and
the second CSI-RS sub-resource comprises at least one of the following:
an identifier of the second CSI-RS sub-resource, a third power control offset, a fourth power control offset, a second resource mapping pattern, or second QCL information, wherein the third power control offset is for determining power of the first CSI-RS sub-resource, and the fourth power control offset is for determining the power of the second CSI-RS sub-resource.

4. The method according to claim 2 or 3, wherein the method further comprises:
receiving the first signal in the SBFD time unit of the first time domain resource based on the first CSI-RS sub-resource; and
receiving the first signal in the non-SBFD time unit of the first time domain resource based on the second CSI-RS sub-resource.

5. The method according to claim 1, wherein the first CSI-RS sub-resource comprises a second periodicity and an offset parameter, the second periodicity and the offset parameter indicate a second time domain resource, the second CSI-RS sub-resource comprises a third periodicity and the offset parameter, and the third periodicity and the offset parameter indicate a third time domain resource; and the method further comprises:
determining the third information in an SBFD time unit of the second time domain resource based on the first CSI-RS sub-resource and the first signal; and
determining the fourth information in a non-SBFD time unit of the third time domain resource based on the second CSI-RS sub-resource and the first signal.

6. The method according to claim 5, wherein the second time domain resource comprises only the SBFD time unit, and the third time domain resource comprises only the non-SBFD time unit.

7. The method according to any one of claims 1 to 6, wherein the first CSI reporting setting comprises first indication information, the first indication information indicates that a first measurement result is to be reported via a resource indicated by the first CSI reporting setting, and the first measurement result comprises a result obtained by measurement on the first CSI-RS sub-resource; and the second CSI reporting setting comprises second indication information, the second indication information indicates that a second measurement result is to be reported via a resource indicated by the second CSI reporting setting, and the second measurement result comprises a result obtained by measurement on the second CSI-RS sub-resource.

8. The method according to any one of claims 1 to 6, wherein
the first indication information comprises the identifier of the first CSI-RS sub-resource, and the second indication information comprises the identifier of the second CSI-RS sub-resource.

9. A communication method, comprising:
sending first information, wherein the first information indicates a first channel state information CSI reporting setting and a second CSI reporting setting, wherein the first CSI reporting setting is for reporting third information, the second CSI reporting setting is for reporting fourth information, the third information comprises CSI in a subband full duplex SBFD time unit, and the fourth information comprises CSI in a non-SBFD time unit;
sending second information, wherein the second information indicates a channel state information reference signal CSI-RS resource, the CSI-RS resource is for receiving a first signal, the CSI-RS resource comprises a first CSI-RS sub-resource and a second CSI-RS sub-resource, the first signal and the first CSI-RS sub-resource are for determining the third information, and the first signal and the second CSI-RS sub-resource are for determining the fourth information;
sending the first signal based on the CSI-RS resource;
receiving the third information based on the first CSI reporting setting, wherein the third information is carried on a first physical uplink control channel PUCCH or a first physical uplink shared channel PUSCH; and
receiving the fourth information based on the second CSI reporting setting, wherein the fourth information is carried on a second PUCCH or a second PUSCH.

10. The method according to claim 9, wherein the CSI-RS resource further comprises a first periodicity and an offset parameter, wherein the first periodicity and the offset parameter indicate a first time domain resource;
in an SBFD time unit of the first time domain resource, the first signal and the first CSI-RS sub-resource are for determining the third information; and
in a non-SBFD time unit of the first time domain resource, the first signal and the second CSI-RS sub-resource are for determining the fourth information.

11. The method according to claim 9, wherein the first CSI-RS sub-resource comprises a second periodicity and an offset parameter, the second periodicity and the offset parameter indicate a second time domain resource, the second CSI-RS sub-resource comprises a third periodicity and the offset parameter, and the third periodicity and the offset parameter indicate a third time domain resource;
in an SBFD time unit of the second time domain resource, the first CSI-RS sub-resource and the first signal are for determining the third information; and
in a non-SBFD time unit of the third time domain resource, the second CSI-RS sub-resource and the first signal are for determining the fourth information.

12. The method according to claim 11, wherein the second time domain resource comprises only the SBFD time unit, and the third time domain resource comprises only the non-SBFD time unit.

13. The method according to any one of claims 9 to 12, wherein the first CSI reporting setting comprises first indication information, the first indication information indicates that a first measurement result is to be reported via a resource indicated by the first CSI reporting setting, and the first measurement result comprises a result obtained by measurement on the first CSI-RS sub-resource; and the second CSI reporting setting comprises second indication information, the second indication information indicates that a second measurement result is to be reported via a resource indicated by the second CSI reporting setting, and the second measurement result comprises a result obtained by measurement on the second CSI-RS sub-resource.

14. The method according to any one of claims 9 to 13, wherein
the first indication information comprises an identifier of the first CSI-RS sub-resource, and the second indication information comprises an identifier of the second CSI-RS sub-resource.

15. A communication method, comprising:
receiving first information, wherein the first information indicates a channel state information CSI reporting setting, the CSI reporting setting comprises a first CSI reporting sub-setting and a second CSI reporting sub-setting, the first CSI reporting sub-setting is for reporting third information, the second CSI reporting sub-setting is for reporting fourth information, the third information comprises CSI in a subband full duplex SBFD time unit, and the fourth information comprises CSI in a non-SBFD time unit;
receiving second information, wherein the second information indicates a first channel state information reference signal CSI-RS resource and a second CSI-RS resource, the first CSI-RS resource is for receiving a first signal, the second CSI-RS resource is for receiving a second signal, the first signal is for determining the third information, and the second signal is for determining the fourth information;
receiving the first signal based on the first CSI-RS resource;
receiving the second signal based on the second CSI-RS resource; and
sending the third information and the fourth information based on the CSI reporting setting, wherein the third information and the fourth information are carried on a first physical uplink control channel PUCCH or a first physical uplink shared channel PUSCH.

16. The method according to claim 15, wherein the first CSI-RS resource indicates a first time domain resource, the second CSI-RS resource indicates a second time domain resource, the first time domain resource comprises an SBFD time unit, and the second time domain resource comprises a non-SBFD time unit.

17. The method according to claim 15 or 16, wherein a port quantity of the first CSI-RS resource is the same as a port quantity of the second CSI-RS resource, and a code division multiplexing CDM type of the first CSI-RS resource is the same as a CDM type of the second CSI-RS resource.

18. The method according to claim 17, wherein
the first CSI reporting sub-setting comprises fifth information, wherein the fifth information indicates a first port or a first CDM group; and receiving the first signal based on the first CSI-RS resource comprises:
receiving the first signal based on the first port and the first CSI-RS resource, or receiving the first signal based on the first CDM group and the first CSI-RS resource; and/or
the second CSI reporting sub-setting comprises sixth information, wherein the sixth information indicates a second port or a second CDM group; and receiving the second signal based on the second CSI-RS resource comprises:
receiving the second signal based on the second port and the second CSI-RS resource, or receiving the second signal based on the second CDM group and the second CSI-RS resource.

19. The method according to any one of claims 15 to 18, wherein
the first CSI reporting sub-setting comprises first indication information, and the second CSI reporting sub-setting comprises second indication information, wherein the first indication information indicates that a first measurement result is to be reported via a resource indicated by the first CSI reporting sub-setting, the first measurement result comprises a result obtained by measurement on the first CSI-RS resource, the second indication information indicates that a second measurement result is to be reported via a resource indicated by the second CSI reporting sub-setting, and the second measurement result comprises a result obtained by measurement on the second CSI-RS resource.

20. A communication method, comprising:
sending first information, wherein the first information indicates a channel state information CSI reporting setting, the CSI reporting setting comprises a first CSI reporting sub-setting and a second CSI reporting sub-setting, the first CSI reporting sub-setting is for reporting third information, the second CSI reporting sub-setting is for reporting fourth information, the third information comprises CSI in a subband full duplex SBFD time unit, and the fourth information comprises CSI in a non-SBFD time unit;
sending second information, wherein the second information indicates a first channel state information reference signal CSI-RS resource and a second CSI-RS resource, the first CSI-RS resource is for receiving a first signal, the second CSI-RS resource is for receiving a second signal, the first signal is for determining the third information, and the second signal is for determining the fourth information;
sending the first signal based on the first CSI-RS resource;
sending the second signal based on the second CSI-RS resource; and
receiving the third information and the fourth information based on the CSI reporting setting, wherein the third information and the fourth information are carried on a first physical uplink control channel PUCCH or a first physical uplink shared channel PUSCH.

21. The method according to claim 20, wherein the first CSI-RS resource indicates a first time domain resource, the second CSI-RS resource indicates a second time domain resource, the first time domain resource comprises an SBFD time unit, and the second time domain resource comprises a non-SBFD time unit.

22. The method according to claim 20 or 21, wherein a port quantity of the first CSI-RS resource is the same as a port quantity of the second CSI-RS resource, and a code division multiplexing CDM type of the first CSI-RS resource is the same as a CDM type of the second CSI-RS resource.

23. The method according to claim 22, wherein
the first CSI reporting sub-setting comprises fifth information, wherein the fifth information indicates a first port or a first CDM group; and receiving the first signal based on the first CSI-RS resource comprises:
receiving the first signal based on the first port and the first CSI-RS resource, or receiving the first signal based on the first CDM group and the first CSI-RS resource; and/or
the second CSI reporting sub-setting comprises sixth information, wherein the sixth information indicates a second port or a second CDM group; and receiving the second signal based on the second CSI-RS resource comprises:
receiving the second signal based on the second port and the second CSI-RS resource, or receiving the second signal based on the second CDM group and the second CSI-RS resource.

24. The method according to any one of claims 20 to 23, wherein
the first CSI reporting sub-setting comprises first indication information, and the second CSI reporting sub-setting comprises second indication information, wherein the first indication information indicates that a first measurement result is to be reported via a resource indicated by the first CSI reporting sub-setting, the first measurement result comprises a result obtained by measurement on the first CSI-RS resource, the second indication information indicates that a second measurement result is to be reported via a resource indicated by the second CSI reporting sub-setting, and the second measurement result comprises a result obtained by measurement on the second CSI-RS resource.

25. A communication apparatus, configured to implement the method according to any one of claims 1 to 8, or configured to implement the method according to any one of claims 15 to 19.

26. The apparatus according to claim 25, wherein the communication apparatus comprises any one of the following: a terminal device or a chip.

27. A communication apparatus, configured to implement the method according to any one of claims 9 to 14, or configured to implement the method according to any one of claims 20 to 24.

28. The apparatus according to claim 27, wherein the communication apparatus comprises any one of the following: a network device, a chip, a central unit CU, or a distributed unit DU.

29. A computer-readable storage medium, wherein the computer-readable storage medium stores a computer program or instructions; and when the computer program or the instructions are run, the method according to any one of claims 1 to 8, the method according to any one of claims 9 to 14, the method according to any one of claims 15 to 19, or the method according to any one of claims 20 to 24 is performed.

30. A computer program, wherein when the computer program is run, the method according to any one of claims 1 to 8, the method according to any one of claims 9 to 14, the method according to any one of claims 15 to 19, or the method according to any one of claims 20 to 24 is performed.

31. A computer program product, wherein when the computer program product is run, the method according to any one of claims 1 to 8, the method according to any one of claims 9 to 14, or the method according to any one of claims 15 to 19 is implemented.
